(19) Europäisches Patentamt
European Patent Office
Office européen des brevets

(11) **EP 1 463 296 A2**

(12) **EUROPEAN PATENT APPLICATION**

(43) Date of publication:
**29.09.2004 Bulletin 2004/40**

(51) Int Cl.⁷: $H04N\ 1/401$, $B41J\ 29/393$

(21) Application number: **04006903.1**

(22) Date of filing: **23.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **28.03.2003 JP 2003092442**
　　　　　　　 **28.03.2003 JP 2003092452**
　　　　　　　 **28.03.2003 JP 2003092481**

(71) Applicant: **KONICA MINOLTA HOLDINGS, INC.**
**Tokyo 100-0005 (JP)**

(72) Inventors:
• **Nakahanada,Manabu**
　**Konica Minolta Photo Imaging Inc**
　**Tokyo 192-8505 (JP)**
• **Haraguchi,Tsuyoshi**
　**Konica Minolta Medical& Graphic**
　**Tokyo 163-0512 (JP)**

(74) Representative:
**Gille Hrabal Struck Neidlein Prop Roos**
**Patentanwälte,**
**Brucknerstrasse 20**
**40593 Düsseldorf (DE)**

(54) **Image forming method and image forming apparatus**

(57) There is described a method for forming an image by employing a print head in which a plurality of recording elements are arranged in an array line. The method includes the steps of: recording a correction image onto a photosensitive material by means of the print head; acquiring readout information read from the correction image by means of an image-reading device; finding correction amounts of recording characteristics, each of which corresponds to each of the plurality of recording elements, from the readout information acquired in the acquiring step; and forming the image by employing the print head in which the recording characteristics of the plurality of recording elements are compensated for, according to the correction amounts found in the finding step. The correction image includes such an image area in which at least two different color dyes are mixed with each other.

## FIG. 4 (a)

2a MARKER STEP

DIRECTION WHERE RECORDING ELEMENTS ARE ARRANGED

E

RGB (CMY) DENSITY MEASURING POSITION

RGB (CMY) DENSITY MEASURING POSITION

EP 1 463 296 A2

**EP 1 463 296 A2**

**Description**

**BACKGROUND OF THE INVENTION**

The present invention relates to an image forming method and image forming apparatus for correcting variations of the recording characteristics of each recording element of an array-shaped print head comprising a plurality of recording elements placed in an array, and for recording images.

The current spread of digital cameras has created a strong demand for further improvements in the printing capacity, image quality and other performances of a digital Minilab as a digital output apparatus. In particular, there is an active demand for large-format printing, and efforts are being made to develop an exposure engine using a print head comprising a plurality of recording elements placed in an array.

Generally, the light emitting recording element constituting the array-shaped print head has a variation of about 20 to 40% in individual light emitting characteristics.

If the correction of this variation is insufficient, the variation will be recorded as unevenness of density in the phase of printing. When the photograph and others are reproduced in a continuous gradation, the variation must be reduced to 2% or less, preferably to 1% or less.

One of the proposed methods for the aforementioned correction is the technique wherein the data on amount of light is obtained for each recording element while a plurality of recording elements are driven, and the correction value for the amount of exposure for each recording element is worked out based on the data on the amount of light. (See Patent Document 1, for example). Further, in order to identify the position of each recording element, another method uses a technique of measuring the density of the image recorded with an interval of at least one recording element provided in the direction where recording elements are arranged, thereby getting the amount of correction of the recording characteristics. (See Patent Document 2, for example).

To get a high-quality output image, each balance of RGB colors as fundamental colors must be adjusted. This adjustment further requires adjustment of the amount of light emitted from the print head where recording elements are placed in an array. The art for this adjustment is disclosed in Patent Document 3.

To get a high-quality output image, the following preliminary adjustment steps are essentially typically in the morning, prior to full-scale operation of a digital Minilab: These are the step of adjusting the light amount correction coefficient of each recording element, thereby reducing the variation (correction of unevenness of density) and the step of controlling the amount of exposure, thereby adjusting the color balance (setup).

[Patent Document 1]
    Tokkaihei 08-230235 (Japanese Application Patent Laid-open Publication)
[Patent Document 2]
    Tokkaihei 10-811 (Japanese Application Patent Laid-open Publication)
[Patent Document 3]
    Tokkaihei 10-75377 (Japanese Application Patent Laid-open Publication)

In the aforementioned correction methods, however, correction is made separately for each print head, based on the image outputted in a single color of RGB (Red/Green/Blue). According to these methods, unevenness in independent density of each color can be reduced. However, in an image formed by superimposition of three RGB colors, for example, in a filled-in chart of gray color, unevenness of density are not completely removed. In particular, unevenness of density in low-frequency component are conspicuous.

The term "fill-in" image in the above description refers to the image where recording is provided by all the recording elements of the portion constituting the image.
The fill-in image of a varying degree of density can be achieved by adjusting the amount of exposure of the recording element. Further, the low-frequency component of an image refers to a component exhibiting a gradual change in signal intensity such a cheek. The high-required component is a component representing the fine structure of a hair and eyelash, for example. The unevenness of density of the low-frequency component refer to the unevenness of density that exhibits gradual change over a wider range.

The image outputted actually contains a smaller portion of monochromatic configuration. It is typically composed of three GRB colors such as gray. Thus, the aforementioned correction art has been insufficient.

Normally, when the image to be corrected is scanned, an image reading device such as a flat bed scanner is used for scanning. If a combination among the form of the light source of an image reading device, image set position and direction is insufficient, the state of light applied on the edge of paper becomes different from that in other portions, and stray light, flare or shade is formed, with the result that stable scanning of the image on the edge portion cannot be ensured in some cases. When correction is made separately for each single color of RGB as in the prior art correction method, disturbance will occur to the image on the edge portion in some cases. This has created a problem in the prior art.

In the prior art correction technique, furthermore, correction is made separately for each single color of RGB; therefore, a greater paper loss and longer correction time are required due to a greater size of the image to be corrected and a great number of image sheets.

According to the aforementioned prior art correction method, to achieve high-precision correction, the image must be accurately set with respect to the position of the light receiving device of the image reading device when measuring the density of the image to be corrected. Thus, it has been very difficult to correct the variation of recording elements to a high precision. Furthermore, a long array-shaped print head suitable for a large-format print contains a great number of recording elements, and requires a long time in the calculation for correction.

Correction of the recording elements of the array-shaped print head is often carried out prior to the start of printing, and output of the image for correction is given in the initial phase of the daily work, as the first printing of the day in many cases. Since the machine out of use overnight is operated, the image for correction is susceptible to the dust and soil deposited in the transfer portion of the photosensitive material. The oxides (tar and silver sulfide) of processing solution remaining since the end of work on the previous day are deposited onto the guide apparatus located between the processing tanks of a development section, with the result that the image is contaminated in some cases. Thus, the prior art correction method has a problem in that accuracy of correction will be reduced by the aforementioned dust, soil and dirt of the photosensitive material.

When the image to be corrected is scanned, an image reading device such as a flat bed scanner is used for scanning. If a combination among the form of the light source of an image reading device, image set position and direction is insufficient, and the state of light applied on the edge of paper becomes different from that in other portions. Thus, stray light, flare or shade is formed, with the result that stable scanning of the image on the edge portion cannot be ensured in some cases. Due to evaluation error on the edge portion, misalignment occurs to the position of the pixel on the correction image and the position of the recording element of the print head. Thus, the prior art correction method has a problem in that the result of correction of a different pixel is reflected and the result of proper correction is not fed back. In this case, unevenness of density cannot be reduced on the output image, despite repeated corrective operations.

Use of the aforementioned prior art method can improve the unevenness of density and allows the setup operation to be performed. However, if the aforementioned prior art method alone is used, two steps of correction of unevenness of density and setup operation must be performed separately.

Further, since correction of unevenness of density is often accomplished by adjusting the amount of light emitted from the light emitting device, a subtle change in color balance will occur subsequent to correction of the unevenness of density. To solve this problem, setup operation must be made without fail, subsequent to correction of unevenness of density.

However, the aforementioned two steps are carried out normally by repeated feedback of the information on density obtained from the output image. This requires the steps of (1) image outputting for correction of unevenness of density, (2) calculation for correction of unevenness of density, (3) feedback of the correction calculation, (4) image outputting for setup operation, (5) setup calculation and (6) feedback of setup calculation. These steps requires a lot of time in the preparation work to be done prior to starting the full-scale operation of the image forming apparatus such as a digital Mini-lab.

If unevenness of density have occurred in the image forming apparatus such as a digital Minilab during the operation for some reason, the setup operation as well as the correction of unevenness of density must be performed again. Thus, the images of the digital Minilab cannot be outputted for a long period of time. In many of the current Minilab shop, short-time finishing is one of the major sale tactics. Under such conditions, production efficiency will be reduced and the commitment with the customer in respect of delivery time cannot be fulfilled, with the result that Minilab confidence may be deteriorated.

In the meantime, the density for setup operation is the density that is frequently used in the actual image output. In the frequently used density area, correction of unevenness of density is preferred, and it is more preferred that correction of unevenness of density be carried out subsequent to setup operation. Thus, repetition of the aforementioned two steps will continue and the time of terminating the preliminary work will become indefinite. In recent years, there has been a tendency of operations being done by less experienced persons such as part-timers in a Minilab. To ensure high-quality output images, these people are required to evaluate if the preliminary work has been completed or not. This is very difficult, however.

Solutions to these problems cannot be provided by the aforementioned prior art method alone. When consideration is given to situations in a Minilab shop in recent years, the prior art alone fails to provide a digital Minilab that can be put into commercial use.

## SUMMARY OF THE INVENTION

To overcome the abovementioned drawbacks in conventional image-recording apparatus, it is a first object of the present invention to provide an image forming method and image forming apparatus capable of effectively reducing unevenness of density.

Further, it is a second object of the present invention to provide an image forming method and image forming apparatus capable of accurate and quick correction of the variation of the recording element in an array-shaped print head and effective reduction of unevenness of density.

Still further, it is a third object of the present invention to provide an image forming method and image forming apparatus capable of completing the preparatory work prior to the full-scale operation, and permitting satisfactory correction of unevenness of density.

Accordingly, to overcome the cited shortcomings, the abovementioned object of the present invention can be attained by image forming methods and apparatus described as follow.

(1) A method for forming an image by employing a print head in which a plurality of recording elements are arranged in an array line, comprising the steps of: recording a correction image onto a photosensitive material by means of the print head; acquiring readout information read from the correction image by means of an image-reading device; finding correction amounts of recording characteristics, each of which corresponds to each of the plurality of recording elements, from the readout information acquired in the acquiring step; and forming the image by employing the print head in which the recording characteristics of the plurality of recording elements are compensated for, according to the correction amounts found in the finding step; wherein the correction image includes such an image area in which at least two different color dyes are mixed with each other.

(2) The method of item 1, wherein the print head is capable of emitting plural lights or includes plural element heads for emitting plural lights; and wherein the correction image includes such an image that is recorded on the photosensitive material by irradiating the plural lights onto a same place of the photosensitive material in an overlapped state.

(3) The method of item 1, wherein the correction image includes the image area in which at least two of a yellow color dye, a magenta color dye and a cyan color dye are mixed with each other.

(4) The method of item 1, wherein the correction image includes the image area in which Red-density Rd, Green-density Gd and Blue-density Bd fulfill the following relationship.

$$0.3 \leq Rd \leq 1.5, \ 0.2 \leq Gd \leq 1.5 \text{ and } 1.15 \leq Bd \leq 1.5$$

(5) The method of item 1, wherein the correction amounts are found by applying a color conversion processing to the readout information acquired by reading the correction image in the acquiring step.

(6) The method of item 5, wherein, when the readout information, acquired in the acquiring step, represent integrated densities, analyzed densities are derived from the integrated densities in the color conversion processing.

(7) The method of item 5, wherein a linear-converting equation is employed for the color conversion processing.

(8) The method of item 1, wherein the correction image is recorded onto the photosensitive material after a setup operation for color balance is completed.

(9) The method of item 1, wherein the print head is capable of emitting plural lights or includes plural element heads for emitting plural lights; and wherein an image area, which is included in the correction image and from which the readout information are acquired, is constituted by plural images recorded by irradiating the plural lights onto the photosensitive material in a state that the plural images overlap with each other.

(10) The method of item 1, wherein the photosensitive material, on which the correction image is recorded, is fixed onto the image-reading device by means of a pushing member.

(11) The method of item 1, wherein a nominal number of recorded lines to be recorded onto the correction image is in a range of 50-1000.

(12) The method of item 11, wherein an actual number of recorded lines utilized for acquiring the readout information is more than 10% of the nominal number of recorded lines.

(13) The method of item 1, wherein the photosensitive material is a silver-halide photosensitive material.

(14) The method of item 1, wherein the photosensitive material has a reflective substrate layer.

(15) The method of item 1, wherein density of the correction image is set at a point on a liner region of characteristic curve of the photosensitive material.

(16) The method of item 1, wherein the correction image includes position-determining markers, each corresponding to each position of the plurality of recording elements, so as to recognize each of the plurality of recording elements.

(17) An apparatus for forming an image, comprising: a print head in which a plurality of recording elements are arranged in an array line, the print head being utilized for recording a correction image onto a photosensitive material; an image-reading device to acquire readout information by reading the correction image; a correction amount finding section to find correction amounts of recording characteristics, each of which corresponds to each of the plurality of recording elements, from the readout information acquired by the image-reading device; an image forming section to form the image by employing the print head in which the recording characteristics of the plurality of recording elements are compensated for, according to the correction amounts found by the correction amount finding section; and a controlling section to control the print head so as to records the correction image onto the photosensitive material; wherein the correction image includes such an image area in which at least two different color dyes are mixed with each other.

(18) The apparatus of item 17, wherein the print head is capable of emitting plural lights or includes plural element heads for emitting plural lights; and wherein the correction image includes such an image that is recorded on the photosensitive material by irradiating the plural lights onto a same place of the photosensitive material in an overlapped state.

(19) The apparatus of item 17, wherein the correction image includes the image area in which at least two of a yellow color dye, a magenta color dye and a cyan color dye are mixed with each other.

(20) The apparatus of item 17, wherein the correction image includes the image area in which Red-density Rd, Green-density Gd and Blue-density Bd fulfill the following relationship.

$$0.3 \leq Rd \leq 1.5, 0.2 \leq Gd \leq 1.5 \text{ and } 0.15 \leq Bd \leq 1.5$$

(21) A method for forming an image by employing a print head in which a plurality of recording elements are arranged in a first array line, comprising the steps of: recording a correction image onto a photosensitive material by means of the print head; acquiring readout information read from the correction image by an image-receiving head in which a plurality of photo-receiving elements are arranged in a second array line and which is equipped in an image-reading device; finding correction amounts of recording characteristics, each of which corresponds to each of the plurality of recording elements, from the readout information acquired in the acquiring step; and forming the image by employing the print head in which the recording characteristics of the plurality of recording elements are compensated for, according to the correction amounts found in the finding step; wherein a direction of the first array line coincides with that of the second array line.

(22) The method of item 21, wherein a calibrating operation is applied to each of the plurality of photo-receiving elements.

(23) The method of item 22, wherein a part of the correction image is employed for the calibrating operation.

(24) The method of item 23, wherein density of a calibration image employed for the calibrating operation is set at a point on a non-liner region of characteristic curve of the photosensitive material.

(25) The method of item 23, wherein a non-exposed part of the correction image is employed for the calibrating operation.

(26) A method for forming an image by employing a print head in which a plurality of recording elements are arranged in an array line, comprising the steps of: recording a correction image onto a photosensitive material by means of the print head; acquiring readout information read from the correction image by an image-receiving head in which a plurality of photo-receiving elements are arranged in an array line and which is equipped in an image-reading device; finding correction amounts of recording characteristics, each of which corresponds to each of the plurality of recording elements, from the readout information acquired in the acquiring step; and forming the image by employing the print head in which the recording characteristics of the plurality of recording elements are compensated for, according to the correction amounts found in the finding step; wherein the readout information are specified corresponding to each of the plurality of recording elements by applying a rotation processing to the readout information.

(27) The method of item 26, wherein the correction image includes an inclination-determining marker; and wherein the inclination-determining marker is employed for determining an inclination of the correction image so as to apply the rotation processing to the readout information.

(28) A method for forming an image by employing a print head in which a plurality of recording elements are arranged in an array line, comprising the steps of: recording a correction image with a plurality of recoded lines recoded by the print head onto a photosensitive material moving relative to the plurality of recording elements; acquiring a plurality of readout information sets, each corresponding to each of the plurality of recording elements, read from the correction image by means of an image-reading device; finding correction amounts of recording characteristics, each of which corresponds to each of the plurality of recording elements, from the plurality of readout information sets; and forming the image by employing the print head in which the recording characteristics of the plurality of recording elements are compensated for, according to the correction amounts found in the finding step; wherein a selection processing is applied to the plurality of readout information sets, so that the correction amounts of the recording characteristics are found, based on selected readout information sets.

(29) The method of item 28, wherein the selection processing is conducted, based on a scale of the plurality of readout information sets.

(30) The method of item 29, wherein the selection processing employs less than 95% of the plurality of readout information sets.

(31) The method of item 28, wherein the selection processing repeats to extract a maximum value and/or a minimum value of the plurality of readout information sets until 3a reaches to a value equal to or smaller than $0.1\mu$, where "$\sigma$" and "$\mu$" are defined as a standard deviation and an average value of the selected readout information sets, respectively.

(32) The method of item 28, wherein the photosensitive material, on which the correction image is recorded, is fixed onto the image-reading device by means of a pushing member.

(33) The method of item 28, wherein a nominal number of the recorded lines to be recorded onto the correction image is in a range of 50-1000.

(34) The method of item 33, wherein an actual number of the recorded lines utilized for acquiring the readout information is more than 10% of the nominal number of the recorded lines.

(35) The method of item 28, wherein the photosensitive material is a silver-halide photosensitive material.

(36) The method of item 28, wherein the photosensitive material has a reflective substrate layer.

(37) An apparatus for forming an image, comprising: a print head in which a plurality of recording elements are arranged in a first array line, the print head being utilized for recording a correction image onto a photosensitive material; an image-reading device provided with an image-receiving head in which a plurality of photo-receiving elements are arranged in a second array line, the image-receiving head being utilized for reading the correction image printed by the print head, so as to acquire readout information; a correction amount finding section to find correction amounts of recording characteristics, each of which corresponds to each of the plurality of recording elements, from the readout information acquired by the image-reading device; and wherein a direction of the first array line coincides with that of the second array line.

(38) An apparatus for forming an image, comprising: a print head in which a plurality of recording elements are arranged in an array line, the print head being utilized for recording a correction image onto a photosensitive material; an image-reading device provided with an image-receiving head in which a plurality of photo-receiving elements are arranged in an array line, the image-receiving head being utilized for reading the correction image printed by the print head, so as to acquire readout information; a correction amount finding section to find correction amounts of recording characteristics, each of which corresponds to each of the plurality of recording elements, from the readout information acquired by the image-reading device; and wherein the correction amount finding section applies a rotation processing to the readout information so as to specify the readout information corresponding to each of the plurality of recording elements.

(39) An apparatus for forming an image, comprising: a print head in which a plurality of recording elements are arranged in an array line, the print head being utilized for recording a correction image constituted with a plurality of recoded lines onto a photosensitive material; an image-reading device to acquire a plurality of readout information sets, each corresponding to each of the plurality of recording elements, by reading the correction image; and a correction amount finding section to find correction amounts of recording characteristics, each corresponding to each of the plurality of recording elements, from the plurality of readout information sets; wherein the correction amount finding section applies a selection processing to the plurality of readout information sets, so that the correction amounts of the recording characteristics are found, based on selected readout information sets.

(40) An apparatus for forming an image, comprising: a print head in which a plurality of recording elements are arranged in an array line, each of the plurality of recording elements being individually operated in response to each of a plurality of light-amount correction coefficients, and the print head being utilized for recording a correction image onto a photosensitive material; an image-reading device to acquire readout information by reading the correction image recorded on the photosensitive material by the print head; and a correction-processing section to find correction amounts of recording characteristics, each corresponding to each of the plurality of recording elements, from the readout information by controlling the print head and the image-reading device, in order to revise each of the plurality of light-amount correction coefficients according to each of the correction amounts of the recording characteristics; wherein the image is formed by operating the plurality of recording elements included in the print head, based on the plurality of light-amount correction coefficients revised by the correction-processing section; and wherein exposure-amount information are acquired, based on the readout information acquired from the correction image.

(41) The apparatus of item 40, wherein a statistic in regard to the readout information is calculated, so as to acquire the exposure-amount information by employing the statistic.

(42) The apparatus of item 40, wherein the light-amount correction coefficients or the exposure-amount information is employed for recording the image onto the photosensitive material, independently relative to each other.

(43) The apparatus of item 40, wherein a value, indicated by the readout information acquired from the correction image, is set at a point on a liner region of characteristic curve of the photosensitive material.

(44) The apparatus of item 40, wherein a plurality of correction images are recorded onto a plurality of recording regions whose locations are different relative to each other, and then, a plurality of readout information sets are acquired from the plurality of correction images, so that the exposure-amount information are acquired, based on each of the plurality of readout information sets.

(45) The apparatus of item 44, wherein densities of the plurality of correction images are different relative to each other.

(46) The apparatus of item 40, wherein the image-reading device is provided with a pushing member for fixing the photosensitive material, on which the correction image is recorded, onto the image-reading device.

(47) The apparatus of item 40, wherein the photosensitive material is a silver-halide photosensitive material.

(48) The apparatus of item 40, wherein the photosensitive material has a reflective substrate layer.

(49) The apparatus of item 40, wherein a nominal number of recorded lines to be recorded onto the correction image is in a range of 50-1000.

(50) The apparatus of item 49, wherein an actual number of recorded lines utilized for acquiring the readout information is more than 10% of the nominal number of recorded lines.

(51) The apparatus of item 49, wherein the light-amount correction coefficients is adjusted according to the correction amounts of the recording characteristics, while an output-value conversion LUT is adjusted according to the exposure-amount information, where "LUT" stands for "Look Up Table".

(52) A method for forming an image by employing a print head in which a plurality of recording elements are arranged in an array line, each of the plurality of recording elements being individually operated in response to each of a plurality of light-amount correction coefficients, the method comprising the steps of: recording a correction image onto a photosensitive material by means of the print head; acquiring readout information read from the correction image by means of an image-reading device; finding correction amounts of recording characteristics, each of which corresponds to each of the plurality of recording elements, from the readout information acquired in the acquiring step; revising each of the plurality of light-amount correction coefficients according to each of the correction amounts found in the finding step; and forming the image by operating the plurality of recording elements included in the print head, based on the plurality of light-amount correction coefficients revised in the revising step; wherein exposure-amount information are acquired, based on the readout information acquired from the correction image.

Further, to overcome the abovementioned problems, other image-forming methods and apparatus, embodied in the present invention, will be described as follow:

(53) An image-forming method, characterized in that,

in the image-forming method, in which a correction image is recorded onto a photosensitive material by employing a plurality of print heads in each of which a plurality of recording elements are arranged in an array line, and correction amounts of recording characteristics of the plurality of recording elements are found by acquiring readout information read from the correction image by means of an image-reading device, and an image is recorded by employing the correction amounts,

the correction image is such an image that is recorded at a same place by the plurality of print heads.

"A plurality of print heads" in the sense in which it is used here refers to a plurality of print heads of different colors, as well as a plurality of print heads of the same color. It also refers to a plurality of print heads of fundamental colors of RGB. Further, a print head for recording on a recording material using a common print head by switching between the beams of light of multiple wavelengths such as multiple fundamental colors, for example, a PLZT shutter array printer head, is regarded as a plurality of print heads.

The term of "readout information" in the present invention refers to the information representing the optical density read by a given density measuring device or image reading device, or numerical information calculated based on the optical density. It can be information on optical density itself, reflection factor, transmittance or light absorption coefficient. Alternatively, it can be a function value corresponding to these in a one-to-one relation, for example, a logarithmic value or a statistical amount such as an average value thereof. Further, when an image is scanned by an image reading device such as a flat bed scanner, it can be a signal value measured by the image reading device, a function value corresponding to this signal value in a one-to-one relation, for example, a logarithmic value, or a relative value thereof.

The term of "correction amounts" refers to the coefficient for adjusting the amount of exposure of each recording element in such a way that each recording element of an array-shaped print head can record on a photosensitive material at a uniform amount of exposure.

According to the invention recited in item 53, since the influence of unevenness of density of other color are contained in the readout information of each fundamental color read out of the correction image, unevenness of density, especially unevenness of density of low-frequency component, can be reduced with high efficiency.

Further, edges are formed by fundamental colors at the same time, so evaluation of stable edges is ensured. When correction of fundamental colors is made using separate colors, there may be concern about the evaluation of the edge position differing according to the color. Simultaneous correction of three colors reduces the possibility of an evaluation error.

A correction image can be reduced in size as compared to the case of creating a correction image for each fundamental color. At the time of correction, the scanning range can be reduced, with the result that the time of calculation for correction is shortened. Moreover, a reduced paper loss and improved productivity are ensured.

When the readout information of correction image is obtained by using an image reading device, it is preferred that the correction image be read at a resolution higher than that in recording onto the photosensitive material using an array-shaped print head. It is also preferred that the image reading device should have a line-like CCD, and an image should be read by the scanning of the line-like CCD. Preferred examples of such a device include a flat bed scanner, drum scanner and other various scanners.

(54) An image-forming method, characterized in that,

in the image-forming method, in which a correction image is recorded onto a photosensitive material by employing a plurality of print heads in each of which a plurality of recording elements are arranged in an array line, and correction amounts of recording characteristics of the plurality of recording elements are found by acquiring readout information read from the correction image by means of an image-reading device, and an image is recorded by employing the correction amounts,

the correction image is such an image in which at least two of a yellow color dye, a magenta color dye and a cyan color dye are mixed with each other.

According to the invention recited in item 54, since the influence of unevenness of density of other color are contained in the readout information of each fundamental color read out of the correction image, unevenness of density, especially unevenness of density at low-frequency component, can be reduced with high efficiency.

Edges are formed by fundamental colors at the same time, the possibility of evaluation error is reduced, and evaluation of stable edges is ensured.

A correction image can be reduced in size as compared to the case of creating a correction image for each fundamental color. At the time of correction, the scanning range can be reduced, with the result that the time of calculation for correction is shortened. Moreover, a reduced paper loss and improved productivity are ensured.

(55) An image-forming method, characterized in that,

in the image-forming method, in which a correction image is recorded onto a photosensitive material by employing a plurality of print heads in each of which a plurality of recording elements are arranged in an array line, and correction amounts of recording characteristics of the plurality of recording elements are found by acquiring readout information read from the correction image by means of an image-reading device, and an image is recorded by employing the correction amounts,

the correction image is such an image in which a R-density is in a range of 0.3-1.5, a G-density is in a range of 0.2-1.5 and a B-density is in a range of 0.15-1.5.

R-density, G-density and B-density (hereinafter, also referred to as density R, density G and density B) in the sense in which it is used here refer to the density of red component, that of green and that of blue, respectively.

According to the invention recited in item 55, it is possible to reduce the influence of the sub-absorption formed by the color developing dye of the photosensitive material so as to avoid extremely high density with respect to other colors. It is also possible to remove the influence of color turbidity, with the result that the readout information acquired becomes more accurate and high-precision correction can be performed.

In terms of red density, the range of density of the correction image should preferably be 0.3 or more, but not more than 1.5, more preferably 0.4 or more, but not more than 1.0, and most preferably 0.5 or more, but not more than 0.7. While, in terms of green density, it should preferably be 0.2 or more, but not more than 1.5, more preferably 0.3 or more, but not more than 0.8, and most preferably 0.4 or more, but not more than 0.6. Further, in terms of blue density, it should preferably be 0.15 or more, but not more than 1.5, more preferably 0.3 or more, but not more than 1.0, and most preferably 0.4 or more, but not more than 0.6.

(56) The image-forming method, described in anyone of items 1-3, characterized in that

the correction amount of recording characteristic of each recording element is found by conducting a color conversion processing after acquiring the readout information of the correction image.

(57) The image-forming method, described in item 56, characterized in that,

when the readout information are integrated densities, analyzed densities are calculated, based on the integrated densities, in the color conversion processing.

The photosensitive material normally uses a dye to form an image. A considerable amount of other components is included due to the absorption curves of dyes overlapping with each other or absence of a sub-absorption band. Even if the unevenness of density of the main component color are satisfactory, correction to be fed back to the print head of other colors is made to the print head of the main component in some cases, when the unevenness of density of other colors are very poor. Thus, unevenness of density may occur as correction is applied, and there may be an increase in the number of corrections until there is no unevenness of density.

According to the invention recited in items 56, 57, the influence of unevenness of density of other colors can be removed by conducting the color conversion, even if unevenness of density of other colors are very poor. This allows accurate high-precision correction to be realized. Further, unevenness of density can be avoided by fewer corrections, even if unevenness of density have occurred.

Color conversion in the sense in which it is used here refers to the act of extracting each of the RGB components based on the readout information obtained when the three RGB colors are mixed. Color conversion can be made by any method. It is preferred, however, that color conversion be carried out according to the following equation, where Rorg, Gorg and Borg denote density readings prior to color conversion, i.e. integral densities, and R', G' and B' denote densities subsequent to color conversion, i.e. analyzed densities:

$$R' = ar \cdot (Rorg)^{br} + cr \cdot (Gorg)^{dr} + er \cdot (Borg)^{fr} + gr$$

$$G' = ag \cdot (Rorg)^{bg} + cg \cdot (Gorg)^{dg} + eg \cdot (Borg)^{fg} + gg$$

$$B' = ab \cdot (Rorg)^{bb} + cb \cdot (Gorg)^{db} + eb \cdot (Borg)^{fb} + gb \tag{1}$$

Where, ab, br, ... gb denote constants. These constants can be changed in conformity to the recording conditions and development conditions of the photosensitive material and various conditions of the image reading device.

(58) The image-forming method, described in item 56 or 57 characterized in that,

a linear-converting equation is employed for the color conversion processing.

According to the invention recited in items 58, the influence of unevenness of density of other colors can be removed by a relatively simple method, and quick and high-precision correction can be achieved.

A linear conversion equation is the aforementioned conversion equation (1) where constants br, dr, fr, bg, dg, fg, bb, db and fb are "1". It is preferred that constant terms gr, gg and gb be "0", as in the following equation (2).

$$R' = ar \cdot Rorg + cr \cdot Gorg + er \cdot Borg$$

$$G' = ag \cdot Rorg + cg \cdot Gorg + eg \cdot Borg$$

$$B' = ab \cdot Rorg + cb \cdot Gorg + eb \cdot Borg \tag{2}$$

Both calculation times can be reduced and high-precision correction can be achieved by adjusting the constants are, cr, ... eb when the conversion equation is changed into a simpler one.

(59) The image-forming method, described in anyone of items 53-58 characterized in that

the correction image is recorded after a setup operation for color balance is completed.

The color balance setup in the sense in which it is used here refers to the act of regulating the color balance between print heads by adjusting the average value of the amount of recording of the print head or the amount of exposure, to ensure that a desired density can be reached for the image data of each fundamental color. It is preferred that adjustment be done for each fundamental color.

According to the invention recited in items 59, correction accuracy is further improved because the color balances of fundamental colors are matched, without influence of other colors.

(60) The image-forming method, described in anyone of items 53-58 characterized in that

a part of the correction image, from which the readout information are acquired, is constituted in a state that the plural images, recorded onto the photosensitive material by the plurality of print heads, overlap with each other.

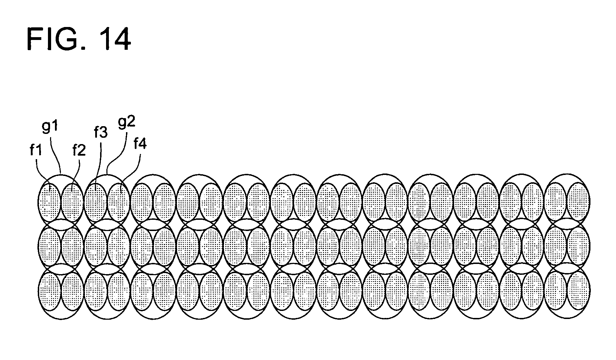

The images in overlapping relation with each other refers to the cases where color developing areas for each dot formed of different print heads are in overlapping relation with each other. Fig. 14 shows an example where images recorded on a photosensitive material by a plurality of print heads overlap each other. It illustrates the overlapping relation between color developing areas f1, f2, f3, f4, ... by the print head F (not illustrated) and color developing areas g1, g2, ... formed at 300 dpi by the print head G (not illustrated).

According to the invention recited in items 60, correction precision is improved because it is possible to reduce the variation of the readout information caused by the difference in the structure of images recorded on the photosensitive material by each print head.

(61) The image-forming method, described in anyone of items 53-60 characterized in that

the photosensitive material is fixed onto the image-reading device by means of a pushing member.

The pushing member in the sense in which it is used here refers to a member for pressing the correction image into position. It is preferred that this pushing member has an approximately uniform density like black, for example. It is also preferred that the pushing member be made of a soft material that can be bent easily, like rubber or sponge. Further, it is preferred to be of low static build-up, without easily allowing dust to deposit thereon.

According to the invention recited in items 61, correction precision is improved by accurate evaluation of the image edge. Further, the unevenness of density of low-frequency components can be reduced by preventing the correction image from becoming loose.

(62) The image-forming method, described in anyone of items 53-61 characterized in that

a number of recorded lines to be recorded onto the correction image is in a range of 50-1000.

According to the invention recited in item 62, the number of data items can be ensured and the average of the readout information data items can be stabilized by increasing the number of lines to 50 or more, whereby unevenness of density at high-frequency component can be reduced. If the number of data items is increased too much, the average of the readout information data will converge. Thus, the number of lines is kept below 1,000, thereby reducing the unused portion and calculation time.

(63) The image-forming method, described in item 62, characterized in that

more than 10% of the number of lines, recorded in the correction image, are utilized for acquiring the readout information.

According to the invention recited in item 63, ten percent or more of the recorded number of lines are used for getting readout information, whereby the size of the correction image can be reduced and hence miniaturization of the image reading device can be achieved.

(64) The image-forming method, described in anyone of items 53-63, characterized in that

the photosensitive material is a silver-halide photosensitive material.

According to the invention recited in item 64, unevenness of density are effectively reduced by use of a silver halide photosensitive material as a photosensitive material.

(65) The image-forming method, described in anyone of items 53-64, characterized in that

the photosensitive material has a reflective substrate layer.

According to the invention recited in item 65, unevenness of density is effectively reduced because the photosensitive material has a reflective substrate layer, serving as a reflection support.

(66) The image-forming method, described in anyone of items 53-65, characterized in that

density of the correction image is set at a point on a liner region of characteristic curve of the photosensitive material.

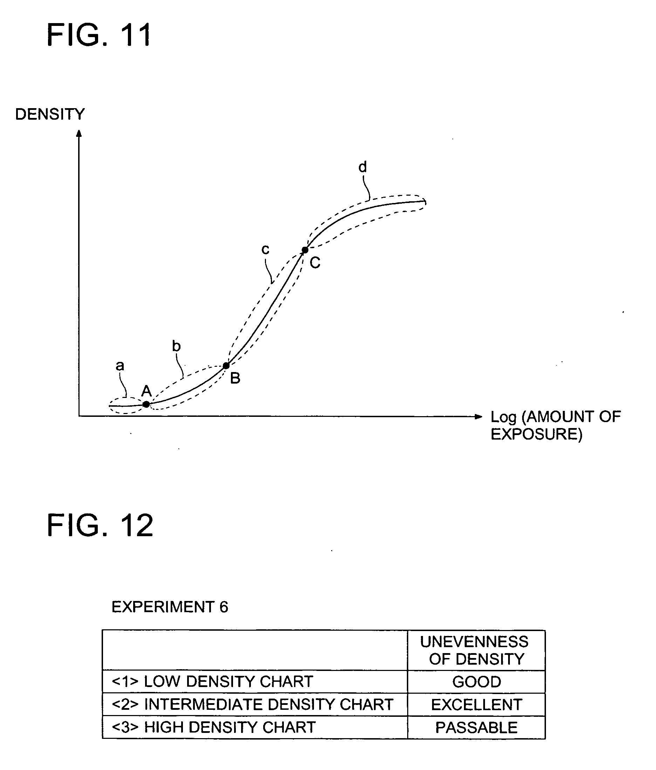

Fig. 11 shows the characteristic curve of a photosensitive material. The logarithm for the amount of exposure is plotted on the horizontal axis, while the image density with respect to the amount of exposure is plotted on the vertical axis. The linear portion of the characteristic curve refers to the portion where the change of density (inclination of the graph) with respect to changes of the logarithm for the exposure as shown by (c) of Fig. 11 is constant.

According to the invention recited in item 66, as compared with the case of correction made using the high- or low-density portion, correction precision can be improved because of the use of the portion with the gradation characteristics exhibiting a shift to hard gradation, i.e. the portion characterized by greater changes in image density than that in the amount of light.

(67) The image-forming method, described in anyone of items 53-66, characterized in that

the correction image has position-determining markers for determining a corresponding recording element, and

the corresponding recording element is determined by means of the position-determining markers.

To identify the position of each recording element of the print head in the correction image, recorded portions (marker steps) are provided in some cases at intervals of several pixels in the direction where recording elements are arranged, for example. However, even if the interval between recording elements can be identified, it is difficult to determine the recording element that corresponds to the marker recorded on an image, i.e. the absolute position of the marker.

According to the invention recited in item 67, however, the position-determining markers (hereinafter, also referred to as positioning markers) are used to determine the corresponding recording element. This enables an accurate feedback to each recording element by the amount of correction obtained from the readout information obtained.

(68) An image-forming apparatus, characterized in that,

in the image-forming apparatus, which is provided with: a plurality of print heads in each of which a plurality of recording elements are arranged in an array line and which are capable of recording a correction image onto a photosensitive material; an image-reading device for acquiring readout information of the correction image; and a correction-processing section for finding correction amounts of recording characteristics of the plurality of recording elements, based on the readout information acquired,

there is provided a controlling section for controlling the plurality of print heads so as to record the correction image at a same place.

According to the invention recited in item 68, since the influence of unevenness of density of other color are contained in the readout information of each fundamental color read out of the correction image, unevenness of density, especially unevenness of density of low-frequency component, can be reduced with high efficiency.

Further, since edges are formed by fundamental colors at the same time, a possibility of erroneous judgment reduces and evaluation of stable edges is ensured.

Still further, a correction image can be reduced in size as compared to the case of creating a correction image for each fundamental color. At the time of correction, the scanning range can be reduced, with the result that the time of calculation for correction is shortened. Moreover, a reduced paper loss and improved productivity are ensured.

(69) An image-forming apparatus, characterized in that,

in the image-forming apparatus, which is provided with: a plurality of print heads in each of which a plurality of recording elements are arranged in an array line and which are capable of recording a correction image onto a photosensitive material; an image-reading device for acquiring readout information of the correction image; and a correction-processing section for finding correction amounts of recording characteristics of the plurality of recording elements, based on the readout information acquired,

there is provided a controlling section for controlling the plurality of print heads so as to record the correction image in which at least two of a yellow color dye, a magenta color dye and a cyan color dye are mixed with each other.

According to the invention recited in item 69, since the influence of unevenness of density of other color are contained in the readout information of each fundamental color read out of the correction image, unevenness of density, especially unevenness of density at low-frequency component, can be reduced with high efficiency.

Edges are formed by fundamental colors at the same time, the possibility of evaluation error is reduced, and evaluation of stable edges is ensured.

A correction image can be reduced in size as compared to the case of creating a correction image for each fundamental color. At the time of correction, the scanning range can be reduced, with the result that the time of calculation for correction is shortened. Moreover, a reduced paper loss and improved productivity are ensured.

(70) An image-forming apparatus, characterized in that,

in the image-forming apparatus, which is provided with: a plurality of print heads in each of which a plurality of recording elements are arranged in an array line and which are capable of recording a correction image onto a photosensitive material; an image-reading device for acquiring readout information of the correction image; and a correction-processing section for finding correction amounts of recording characteristics of the plurality of recording elements, based on the readout information acquired,

there is provided a controlling section for controlling the plurality of print heads so as to record the correction image in which a R-density is in a range of 0.3-1.5, a G-density is in a range of 0.2-1.5 and a B-density is in a range of 0.15-1.5.

According to the invention recited in item 70, it is possible to reduce the influence of the sub-absorption formed by the color developing dye of the photosensitive material so as to avoid extremely high density with respect to other colors. It is also possible to remove the influence of color turbidity, with the result that the readout information acquired becomes more accurate and high-precision correction can be performed.

(71) The image-forming apparatus, described in anyone of items 68-70, characterized in that

the correction amount of recording characteristic of each recording element is found by conducting a color conversion processing after acquiring the readout information of the correction image.

(72) The image-forming apparatus, described in item 56, characterized in that,

when the readout information are integrated densities, analyzed densities are calculated, based on the integrated densities, in the color conversion processing.

According to the invention recited in items 71, 72, the influence of unevenness of density of other colors can be removed by conducting the color conversion, even if unevenness of density of other colors are very poor. This allows accurate high-precision correction to be realized. Further, unevenness of density can be avoided by fewer corrections, even if unevenness of density have occurred.

(73) The image-forming apparatus, described in item 71 or 72 characterized in that,

a linear-converting equation is employed for the color conversion processing.

According to the invention recited in items 73, the influence of unevenness of density of other colors can be removed by a relatively simple method, and quick and high-precision correction can be achieved.

(74) The image-forming apparatus, described in anyone of items 68-73 characterized in that

the correction image is recorded after a setup operation for color balance is completed.

According to the invention recited in items 74, correction accuracy is further improved because the color balances of fundamental colors are matched, without influence of other colors.

(75) The image-forming apparatus, described in anyone of items 68-74 characterized in that

a part of the correction image, from which the readout information are acquired, is constituted in a state that the plural images, recorded onto the photosensitive material by the plurality of print heads, overlap with each other.

According to the invention recited in items 75, correction precision is improved because it is possible to reduce the variation of the readout information caused by the difference in the structure of images recorded on the photosensitive material by each print head.

(76) The image-forming apparatus, described in anyone of items 68-75 characterized in that

the photosensitive material is fixed onto the image-reading device by means of a pushing member.

According to the invention recited in items 76, correction precision is improved by accurate evaluation of the image edge. Further, the unevenness of density of low-frequency components can be reduced by preventing the correction image from becoming loose.

(77) The image-forming apparatus, described in anyone of items 68-76 characterized in that

a number of recorded lines to be recorded onto the correction image is in a range of 50-1000.

According to the invention recited in items 77, The number of data items can be ensured and the average of the readout information data items can be stabilized by increasing the number of lines to 50 or more, whereby unevenness of density at high-frequency component can be reduced. If the number of data items is increased too much, the average of the readout information data will converge. Thus, the number of lines is kept below 1,000, thereby reducing the unused portion and calculation time.

(78) The image-forming apparatus, described in item 77, characterized in that

more than 10% of the number of lines, recorded in the correction image, are utilized for acquiring the readout information.

According to the invention recited in item 78, ten percent or more of the recorded number of lines are used for getting readout information, whereby the size of the correction image can be reduced and hence miniaturization of the image reading device can be achieved.

(79) The image-forming apparatus, described in anyone of items 68-78, characterized in that

the photosensitive material is a silver-halide photosensitive material.

According to the invention recited in item 79, unevenness of density are effectively reduced by use of a silver halide photosensitive material as a photosensitive material.

(80) The image-forming apparatus, described in anyone of items 68-79, characterized in that

the photosensitive material has a reflective substrate layer.

According to the invention recited in item 80, unevenness of density is effectively reduced because the photosensitive material has a reflective substrate layer, serving as a reflection support.

(81) The image-forming apparatus, described in anyone of items 68-80, characterized in that

density of the correction image is set at a point on a liner region of characteristic curve of the photosensitive material.

According to the invention recited in item 81, as compared with the case of correction made using the high- or low-density portion, correction precision can be improved because of the use of the portion with the gradation characteristics exhibiting a shift to hard gradation, i.e. the portion characterized by greater changes in image density than that in the amount of light.

(82) The image-forming apparatus, described in anyone of items 68-81, characterized in that

the correction image has position-determining markers for determining a corresponding recording element, and

the corresponding recording element is determined by means of the position-determining markers.

According to the invention recited in item 82, the position-determining markers are used to determine the corresponding recording element. This enables an accurate feedback to each recording element by the amount of correction obtained from the readout information obtained.

(83) An image-forming method, characterized in that,

in the image-forming method, in which a correction image is recorded onto a photosensitive material by employing a print head in which a plurality of recording elements are arranged in an array line, and readout information are acquired from the correction image by means of an image-reading device having an image-receiving head in which a plurality of photo-receiving elements are arranged in an array line, in order to find correction amounts of recording characteristics of the plurality of recording elements, and then, an image is recorded by employing the correction amounts,

an array direction of the plurality of recording elements of the print head and an array direction of the plurality of photo-receiving elements of the image-receiving head, in respect to the correction image, are in a same direction.

The term of "readout information" in the present invention refers to the information representing the optical density read by a given density measuring device or image reading device, or numerical information calculated based on the optical density. It can be information on optical density itself, reflection factor, transmittance coefficient or light absorption coefficient. Alternatively, it can be a function value corresponding to these in a one-to-one relation, for example, a logarithmic value or a statistical amount such as an average value thereof. Further, when an image is read or measured by an image reading device such as a flat bed scanner, it can be a signal value measured by the image reading device, a function value corresponding to this signal value in a one-to-one relation, for example, a logarithmic value, or a relative value thereof.

The term of "correction amounts" refers to the coefficient for adjusting the amount of exposure of each recording element in such a way that each recording element of an array-shaped print head can record on a photosensitive material at a uniform amount of exposure.

The term of "same direction" refers to the direction in cases where the angle formed by the direction of arranged light recording elements of the print head and that of arranged receiving devices of the image receiving head is within ± 10 degrees. It is more preferred that this angle lie within ± 5 degrees, in the sense of improving the tolerance for the inclination of the corresponding image, and is most preferred that it be within ± 1 degree.

According to the invention recited in item 83, the recording elements of the print head with respect to the correction image and the light receiving devices of the image receiving head are arranged in the same direction. Thus, the scanning range of the image reading device can be reduced by using a longer correction image in the direction where recording elements are arranged. Further, this improves the tolerance for the inclination of the correction image, and reduces the correction time, thereby ensuring high-precision correction of the variation of the recording element in a short time and effective reduction of unevenness of density.

When the readout information of correction image is obtained by using an image reading device, it is preferred that the correction image be read at a resolution higher than that for recording onto the photosensitive material using an array-shaped print head. A preferred image reading device having a light receiving head with light receiving devices placed in an array includes a flat bed scanner, drum scanner and other various scanners.

(84) An image-forming method, characterized in that,

in the image-forming method, in which a correction image is recorded onto a photosensitive material by employing a print head in which a plurality of recording elements are arranged in an array line, and readout information are acquired from the correction image by means of an image-reading device having an image-receiving head in which a plurality of photo-receiving elements are arranged in an array line, in order to find correction amounts of recording characteristics of the plurality of recording elements, and then, an image is recorded by employing the correction amounts,

the readout information corresponding to each of the plurality of recording elements are specified by applying a rotation processing to the readout information.

According to the invention recited in item 84, rotation processing applied to the readout information, permits accurate identification of the readout information corresponding to each recording element and ensures improved high-precision correction of unevenness of density.

(85) The image-forming method, described in item 84, characterized in that

the correction image has an inclination-determining marker for determining an inclination of the correction image; and

the inclination of the correction image is determined by means of the inclination-determining marker to apply the rotation processing to the readout information.

According to the invention recited in item 85, the inclination of the correction image is evaluated using the inclination determining marker recorded on the correction image, thereby ensuring easy determination of the angle for rotation processing and improved high-precision correction of unevenness of density.

(86) The image-forming method, described in anyone of items 83-85, characterized in that,

a calibrating operation of each of the plurality of photo-receiving elements is conducted.

Calibration of the light receiving device in the sense in which it is used here refers to the act of reducing the variation of light receiving sensitivity.

Just as there is a variation in the amount of light emitted from each recording element of the array-shaped print head, so there is a slight variation in the light receiving sensitivity of the light receiving devices of the array-shaped print head of the image reading device. If the readout information of the correction image contains both the variation of the recording elements of the print head and that of the light receiving devices of the array-shaped print head, accuracy of feedback to the recording elements of the print head will be deteriorated.

According to the invention recited in item 86, however, accuracy of feedback to the recording elements of the print head is improved by reducing the variation of the light receiving sensitivity of each light receiving device; hence unevenness of density of high-frequency components are reduced.

In the image, the high-required component is a component representing the fine structure of a hair and eyelash, for example; whereas the low-frequency component of an image refers to a component exhibiting a gradual change in signal intensity such a cheek. Unevenness of density of high-frequency component refers to the unevenness of density changing in a comparatively limited range; whereas unevenness of density of high-frequency component refers to the unevenness of density gradually changing in a comparatively wide range.

(87) The image-forming method, described in item 86, characterized in that,

the calibrating operation is conducted by employing a part of the correction image.

According to the invention recited in item 87, the light receiving device can be calibrated in the same manner as when scanning the portion used for the calculation of correction. This allows correction of the variation of the recording elements of the print head, based on the identification of variations of the light receiving device, whereby high-precision correction is ensured. Further, the light receiving device can be calibrated by a shared use of the image reading device, without having to use another light measuring unit. This arrangement provides easy calibration.

(88) The image-forming method, described in item 87, characterized in that,

density of an image for conducting a calibration of each of the receiving elements is set at a point on a non-liner region of characteristic curve of the photosensitive material.

Fig. 11 shows the characteristic curve of a photosensitive material. The logarithm for the amount of exposure is plotted on the horizontal axis, while the image density with respect to the amount of exposure is plotted on the vertical axis. The linear portion of the characteristic curve refers to the portion where the change of density (inclination of the graph) with respect to changes of the logarithm for the exposure as shown by (c) of Fig. 11 is constant. The non-linear portion refers to the portion where the change of image density with respect to the amount of exposure is smaller than that in the case of the linear line portion of the characteristic curve, as shown by (a), (b), or (d) of Fig. 11.

According to the invention recited in item 88, the fluctuation of the density resulting from the variation in the amount of exposure of the recording element can be reduced because calibration of each light receiving device is carried out using the non-linear portion of the characteristic curve of the photosensitive material, i.e. the portion exhibiting a shift to soft gradation. This improves the high-precision calibration of variations of the light receiving devices.

(89) The image-forming method, described in item 87 or 88, characterized in that,

the calibration of each of the receiving elements is conducted by employing a non-exposed part of the correction image.

The non-exposed part in the sense in which it is used here refers to the portion where the inclination of the characteristic curve of the photosensitive material is approximately 0 (zero) or the portion where the effect of light, even if it is applied, does not occur, i.e. the portion where exposure is not applied to the photosensitive material by the print head, as shown by (a) of Fig. 11.

According to the invention recited in item 88, simple and high-precision correction is ensured because calibration is carried out using the non-exposed part of correction image.

(90) An image-forming method, characterized in that,

in the image-forming method, in which, by employing a print head in which a plurality of recording elements are arranged in an array line, a correction image is recorded onto a photosensitive material moving relative to the plurality of recording elements with a plurality of line numbers, and readout information are acquired from the correction image by means of an image-reading device, and, based on a plurality of readout information sets acquired for every recording element, correction amounts of recording characteristics of the plurality of recording elements are found, and then, an image is recorded by employing the correction amounts,

a selection processing is conducted with respect to the plurality of readout information sets acquired for every recording element, and the correction amounts of the recording characteristics of the plurality of recording elements are found, based on readout information sets after selection.

According to the invention recited in item 90, the amount of correction for the recording characteristics of each recording element is obtained based on the data selected from a plurality of readout information items obtained from the correction image, whereby faulty data resulting from the dust, soil and contamination of the photosensitive material can be eliminated. This arrangement improves the tolerance to the faulty data that may cause deterioration of correction precision and brings about excellent results of high-precision correction and reduced unevenness of density.

Incidentally, the readout information can be selected within the range of the data corresponding to each recording element or within the range of the entire data of all recording elements.

(91) The image-forming method, described in item 90, characterized in that,

the selection processing is conducted, based on a scale of the plurality of readout information sets.

According to the invention recited in item 91, since the reference for selecting the readout information is made clear, excellent results of high-precision correction can be obtained easily, and unevenness of density can be reduced.

(92) The image-forming method, described in item 91, characterized in that,

the selection processing utilizes less than 95% of the plurality of readout information sets.

According to the invention recited in item 91, since 95% or less of a plurality of readout information sets (hereinafter, also referred to as readout information items) are used, there is an increase in the percentage of excluded data. This ensures improved tolerance to the faulty data resulting in deteriorated correction precision. Thus, excellent results of high-precision correction can be obtained, and unevenness of density can be reduced.

It is preferred that the percentage of the data to be used should be 95% or less of all data; more preferably 90% or less, and still more preferably 80% or less. It is also preferred that the percentage of the data to be used should be 10% or more; more preferably 20% or more, and still more preferably 30% or more.

(93) The image-forming method, described in item 90, characterized in that,

the selection processing repeats to extract a maximum value and/or a minimum value of the plurality of readout information sets until $3\sigma$ reaches to a value equal to or smaller than $0.1\mu$, where "$\sigma$" and "$\mu$" are defined as a standard deviation and an average value of the selected readout information sets, respectively.

According to the invention recited in item 91, high-precision correction is ensured by correction calculation using the readout information with fewer variations. The value $3\sigma$ is preferably $0.1\,\mu$ or less, more preferably $0.05$ $\mu$ or less, and still more preferably $0.01\,\mu$ or less.

(94) The image-forming method, described in anyone of items 83-93, characterized in that,

the photosensitive material is fixed onto the image-reading device by means of a pushing member.

The pushing member in the sense in which it is used here refers to a member for pressing the correction image into position. It is preferred that this pushing member has an approximately uniform density like black, for example. It is also preferred that the pushing member be made of a soft material that can be bent easily, like rubber or sponge. Further, it is preferred to be of low static build-up, without easily allowing dust to deposit thereon.

According to the invention recited in item 94, correction precision is improved by accurate evaluation of the image edge. Further, the unevenness of density of low-frequency components can be reduced by preventing the correction image from becoming loose.

(95) The image-forming method, described in anyone of items 83-95, characterized in that

a number of recorded lines to be recorded onto the correction image is in a range of 50-1000.

According to the invention recited in item 95, the number of data items can be ensured and the average of the data items from the readout information can be stabilized by increasing the number of lines to 50 or more, whereby unevenness of density of high-frequency component can be reduced. If the number of data items is increased too much, the average of the readout information data will converge. Thus, the number of lines is kept below 1,000, thereby reducing the unused portion and calculation time.

(96) The image-forming method, described in item 95, characterized in that

more than 10% of the number of lines, recorded in the correction image, are utilized for acquiring the readout information.

According to the invention recited in item 96, ten percent or more of the recorded number of lines are used for getting readout information, whereby the size of the correction image can be reduced and hence miniaturization of the image reading device can be achieved.

(97) The image-forming method, described in anyone of items 83-96, characterized in that

the photosensitive material is a silver-halide photosensitive material.

According to the invention recited in item 97, unevenness of density are effectively reduced by use of a silver halide photosensitive material as a photosensitive material.

(98) The image-forming method, described in anyone of items 83-97, characterized in that

the photosensitive material has a reflective substrate layer.

According to the invention recited in item 98, unevenness of density are effectively reduced because the photosensitive material has a reflection support, serving as a reflection support.

(99) An image-forming apparatus, characterized in that,

in the image-forming apparatus, which is provided with: a print head in which a plurality of recording elements are arranged in an array line and which are capable of recording a correction image onto a photosensitive material;

an image-reading device, having an image-receiving head in which a plurality of photo-receiving elements are arranged in an array line, for acquiring readout information from the correction image; and a correction-processing section for finding correction amounts of recording characteristics of the plurality of recording elements, based on the readout information acquired,

an array direction of the plurality of recording elements of the print head and an array direction of the plurality of photo-receiving elements of the image-receiving head, in respect to the correction image, are in a same direction.

According to the invention recited in item 99, the recording elements of the print head with respect to the correction image and the light receiving devices of the image receiving head are arranged in the same direction. Thus, the scanning range of the image reading device can be reduced by using a longer correction image in the direction where recording elements are arranged. Further, this improves the tolerance for the inclination of the correction image, and reduces the correction time, thereby ensuring high-precision correction of the variation of the recording element in a short time and effective reduction of unevenness of density.

(100) An image-forming apparatus, characterized in that,

in the image-forming apparatus, which is provided with: a print head in which a plurality of recording elements are arranged in an array line and which are capable of recording a correction image onto a photosensitive material; an image-reading device, having an image-receiving head in which a plurality of photo-receiving elements are arranged in an array line, for acquiring readout information from the correction image; and a correction-processing section for finding correction amounts of recording characteristics of the plurality of recording elements, based on the readout information acquired,

the correction-processing section specifies

the readout information corresponding to each of the plurality of recording elements by applying a rotation processing to the readout information.

According to the invention recited in item 100, rotation processing applied to the readout information, permits accurate identification of the readout information corresponding to each recording element and ensures improved high-precision correction of unevenness of density.

(101) The image-forming apparatus, described in item 100, characterized in that

the correction image has an inclination-determining marker for determining an inclination of the correction image; and

the correction-processing section determines the inclination of the correction image by means of the inclination-determining marker, to apply the rotation processing to the readout information.

According to the invention recited in item 101, the inclination of the correction image is evaluated using the inclination-determining marker recorded on the correction image, thereby ensuring easy determination of the angle for rotation processing and improved high-precision correction of unevenness of density.

(102) The image-forming apparatus, described in anyone of items 99-101, characterized in that,

the correction-processing section conducts a calibrating operation of each of the plurality of photo-receiving elements.

According to the invention recited in item 102, accuracy of feedback to the recording elements of the print head is improved by reducing the variation of the light receiving sensitivity of each light receiving device; hence unevenness of density of high-frequency components are reduced.

(103) The image-forming apparatus, described in item 102, characterized in that,

the correction-processing section conducts the calibrating operation by employing a part of the correction image.

According to the invention recited in item 103, the light receiving device can be calibrated in the same manner as when scanning the portion used for the calculation of correction. This allows correction of the variation of the recording elements of the print head, based on the identification of variations of the light receiving device, whereby high-precision correction is ensured. Further, the light receiving device can be calibrated by a shared use of the image reading device, without having to use another light measuring unit. This arrangement provides easy calibration.

(104) The image-forming apparatus, described in item 103, characterized in that,

density of an image for conducting a calibration of each of the receiving elements is set at a point on a non-liner region of characteristic curve of the photosensitive material.

According to the invention recited in item 104, the fluctuation of the density resulting from the variation in the amount of exposure of the recording element can be reduced because calibration of each light receiving device is carried out using the non-linear portion of the characteristic curve of the photosensitive material, i.e. the portion exhibiting a shift to soft gradation. This improves the high-precision calibration of variations of the light receiving devices.

(105) The image-forming apparatus, described in item 103 or 104, characterized in that,

the correction-processing section conducts the calibration of each of the receiving elements by employing a non-exposed part of the correction image.

According to the invention recited in item 105, simple and high-precision correction is ensured because calibration is carried out using the non-exposed part of correction image.

(106) An image-forming apparatus, characterized in that,

in the image-forming apparatus, which is provided with: a print head in which a plurality of recording elements are arranged in an array line and which are capable of recording a correction image constituted by a plurality of line numbers onto a photosensitive material; an image-reading device for acquiring readout information from the correction image; and a correction-processing section for finding correction amounts of recording characteristics of the plurality of recording elements, based on a plurality of readout information sets acquired for every recording element,

the correction-processing section conducts a selection processing with respect to the plurality of readout information sets acquired for every recording element, and finds the correction amounts of the recording characteristics of the plurality of recording elements, based on readout information sets after selection.

According to the invention recited in item 106, the amount of correction for the recording characteristics of each recording element is obtained based on the data selected from a plurality of readout information items obtained from the correction image, whereby faulty data resulting from the dust, soil and contamination of the photosensitive material can be eliminated. This arrangement improves the tolerance to the faulty data that may cause deterioration of correction precision and brings about excellent results of high-precision correction and reduced unevenness of density.

(107) The image-forming apparatus, described in item 106, characterized in that,

the selection processing is conducted, based on a scale of the plurality of readout information sets.

According to the invention recited in item 107, since the reference for selecting the readout information is made clear, excellent results of high-precision correction can be obtained easily, and unevenness of density can be reduced.

(108) The image-forming apparatus, described in item 91, characterized in that,

the selection processing utilizes less than 95% of the plurality of readout information sets.

According to the invention recited in item 108, since 95% or less of a plurality of readout information sets (hereinafter, also referred to as readout information items) are used, there is an increase in the percentage of excluded data. This ensures improved tolerance to the faulty data resulting in deteriorated correction precision. Thus, excellent results of high-precision correction can be obtained, and unevenness of density can be reduced.

(109) The image-forming apparatus, described in item 106, characterized in that,

the selection processing repeats to extract a maximum value and/or a minimum value of the plurality of readout information sets until $3\sigma$ reaches to a value equal to or smaller than $0.1\mu$, where "$\sigma$" and "$\mu$" are defined as a standard deviation and an average value of the selected readout information sets, respectively.

According to the invention recited in item 109, high-precision correction is ensured by correction calculation using the readout information with fewer variations.

(110) The image-forming apparatus, described in anyone of items 99-109, characterized in that,

the photosensitive material is fixed onto the image-reading device by means of a pushing member.

According to the invention recited in item 110, correction precision is improved by accurate evaluation of the image edge. Further, the unevenness of density of low-frequency components can be reduced by preventing the correction image from becoming loose.

(111) The image-forming apparatus, described in anyone of items 99-110, characterized in that

a number of recorded lines to be recorded onto the correction image is in a range of 50-1000.

According to the invention recited in item 111, the number of data items can be ensured and the average of the data items from the readout information can be stabilized by increasing the number of lines to 50 or more, whereby unevenness of density of high-frequency component can be reduced. If the number of data items is increased too much, the average of the readout information data will converge. Thus, the number of lines is kept below 1,000, thereby reducing the unused portion and calculation time.

(112) The image-forming apparatus, described in item 111, characterized in that

more than 10% of the number of lines, recorded in the correction image, are utilized for acquiring the readout information.

According to the invention recited in item 112, ten percent or more of the recorded number of lines are used for getting readout information, whereby the size of the correction image can be reduced and hence miniaturization of the image reading device can be achieved.

(113) The image-forming apparatus, described in anyone of items 99-112, characterized in that

the photosensitive material is a silver-halide photosensitive material.

According to the invention recited in item 113, unevenness of density are effectively reduced by use of a silver halide photosensitive material as a photosensitive material.

(114) The image-forming apparatus, described in anyone of items 99-113, characterized in that

the photosensitive material has a reflective substrate layer.

According to the invention recited in item 114, unevenness of density are effectively reduced because the photosensitive material has a reflection support, serving as a reflection support.

(115) An image-forming apparatus, characterized in that,

in the image-forming apparatus, which is provided with: a print head in which a plurality of recording elements are arranged in an array line, each of the plurality of recording elements individually acting based on each of light-amount correction coefficients; an image-reading device for reading an image recorded on a photosensitive material; and a correction-processing section that records a correction image onto a photosensitive material by means of the print head, and acquires readout information of the recorded correction image through the image-reading device, and acquires correction amounts of recording characteristics of the plurality of recording elements, based on the acquired readout information, and then, compensates for the light-amount correction coefficients by employing the acquired correction amounts, and which records an image by using each of the recording elements, based on the light-amount correction coefficients compensated for by the correction-processing section,

exposure-amount information are acquired, based on the readout information acquired from said correction image.

(116) An image-forming method, characterized in that

in the image-forming method, which includes: a correction image recording step for recording a correction image onto a photosensitive material by means of a print head in which a plurality of recording elements are arranged in an array line, each of the plurality of recording elements individually acting based on each of light-amount correction coefficients; a readout information acquiring step for acquiring readout information of the recorded correction image through an image-reading device; a correction amount acquiring step for acquiring correction amounts corresponding to recording characteristics of the plurality of recording elements, based on the acquired readout information; a compensating step for compensating for the light-amount correction coefficients by employing the acquired correction amounts; and an image recording step for recording an image by using each of the recording elements, based on the compensated light-amount correction coefficients,

there is further provided an exposure-amount information acquiring step for acquiring exposure-amount information, based on the readout information acquired from the correction image.

The aforementioned arrangement allows simultaneous execution of two steps; adjusting the light amount correction coefficient of each of the recording elements placed on the print head in an array form, thereby reducing the variation (i.e. correction of unevenness of density) and controlling the amount of exposure, thereby adjusting the color balance (i.e. setup). This feature permits completion of the preparatory work prior to the full-scale operation of an image forming apparatus such as Minilab equipment in a short period of time, and enables satisfactory correction of unevenness of density.

Two steps of correction of unevenness of density and setup operation can be done by one and the same correction image. This arrangement eliminates image output time and image scanning time by an image reading device such as a flat bed scanner.

Since unevenness of density of the pixel are corrected in the density area of high frequency of use, i.e. the density area where setup is performed, a substantial reduction of the unevenness of density can be achieved, with the result that an extremely high-quality output image is obtained.

The readout information in the present invention refers to the information representing the optical density obtained as a result of measurement. It can be information on density itself, reflection factor, transmittance coefficient or light absorption coefficient. Alternatively, it can be a function value corresponding to these in a one-to-one relation, for example, a logarithmic value or the like. Further, when an image is read and measured by an image reading device such as a flat bed scanner, it can be a signal value measured by the image reading device, a function value corresponding to the aforementioned signal value in a one-to-one relation, for example, a logarithmic value or a relative value thereof. The readout information in the present invention may be called density information or simply density in the present description.

Information on the amount of exposure in of the present invention is the information representing the amount of exposure applied to the photosensitive material for recording an image thereon. It can be the amount of exposure applied to the photosensitive material, a function value corresponding to the aforementioned amount of exposure in a one-to-one relation, for example, a logarithmic value or a relative value thereof. It is preferred that the aforementioned information on the amount of exposure corresponding to each array-shaped print head be present.

It is preferred that image outputting be performed with consideration given to light amount correction coefficient and information on the amount of light. This provides a high-quality output image.

It is preferred in the present invention that setup for adjusting the separate color balance be carried out by adequately controlling the amount of light emitted to the photosensitive material by each print head, but it can be carried out in any manner. An example of preferred embodiment of setup is found in the case where a setup signal value serving as a density area to be used frequently is selected in advance, and when recording is made on the photosensitive material according to the image information based on the aforementioned selected signal value, the information on the amount of light adequately adjusted in such a way that a desired density can be obtained.

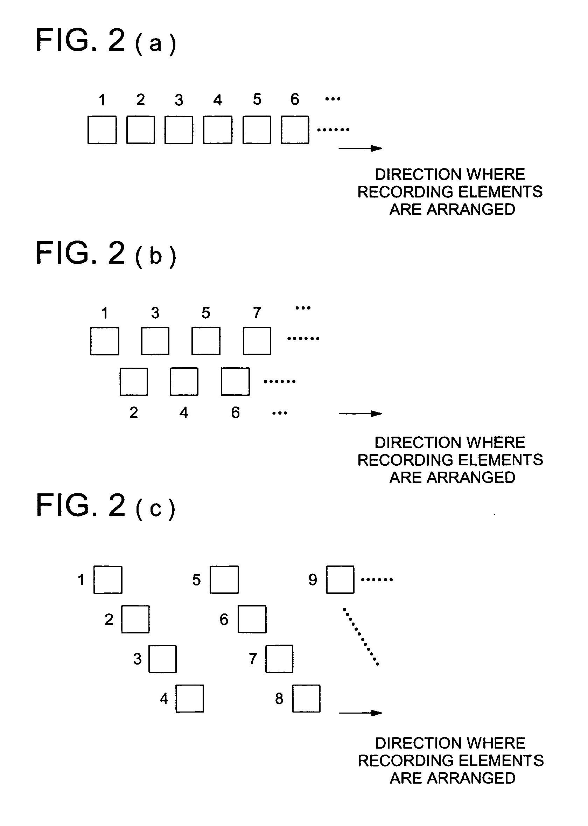

Fig. 2(a), Fig. 2(b) and Fig. 2(c) are block diagrams showing the print heads arrangement in an array form. This array form is not restricted to a linear form. It includes a staggered arrangement as shown in Fig. 2(b) and arrangement as shown in Fig. 2(c). As illustrated, the recording elements are numbered in each of them. Mutually adjacent recording elements in the direction where recording elements are arranged refer to the case where the number corresponds to the adjacent recording element.

The direction where the recording elements are arranged refers to the direction where a greater number of recording elements are arranged, as shown in Fig. 2(a), Fig. 2(b) and Fig. 2(c).

When a rectangular correction image is set on the image reading device, it is preferred that the shorter side of a rectangle overlaps in the direction where the Charge Coupled Devices (CCD) of the image reading device are arranged. This is preferred from the viewpoint of improving the tolerance to the inclination of the correction image.

The print head placed in an array may be of any type as long as a plurality of recording elements are arranged in one row or more at predetermined intervals in order to get predetermined resolution. Preferred examples of the print head placed in an array include a printer head where LED light emitting devices or vacuum fluorescent tubes are arranged, a PLZT print head using an appropriate backlight, an optical shutter array such as a liquid crystal shutter array print head, a semiconductors placed in an array form, a thermal head, and a light emitting device based on electro-luminance phenomenon such as an organic EL material. Especially preferred ones include the apparatus capable of forming images of a plurality of gradations, such as an apparatus for recording on the silver halide photosensitive material using various recording element arrays and an apparatus for recording with a thermal head using sublimation ink.

The image can be the one where one-pixel interval equivalent to at least one recording element is provided in the direction where recording elements are provided, and pixels are discontinuous. However, the image is preferred to be a filled-in one without any pixel interval. Any filled-in image is acceptable, but the density is preferred to be the same in the direct where recording elements are arranged, whenever possible. Further, the preferred image is the one that is used mainly to correct the unevenness of density of the print head.

When recording is made after the photosensitive material has been cut, the size of the photosensitive material with an image recorded thereon is preferred in such a way that the vertical length (LV) vertical to the direction where the recording elements of the print head are arranged is not much greater than the horizontal length (LH). From the viewpoint of transportability of the photosensitive material, reduction of paper loss and impact on development process, the LV/LH is preferably 2.0 times or less, more preferably 1.2 times or less and still more preferably 0.9 times or less.

The amount of correction is intended to adjust the light amount correction coefficient of each recording element so that each recording element can be recorded on the photosensitive material at a uniform luminescent intensity.

Light amount correction coefficient in the present invention refers to the coefficient for controlling the amount of light emitted by each recording element. It is preferred that the amount of light emission be controlled by controlling the light emitting time, for example. Each of the recording elements may contain its own light amount correction coefficient.

One of the preferred objects in using the light amount correction coefficient is to reduce the variation of light emitted by each recording element and to get uniform amount of light emission. A preferred means for getting the uniform amount of light emission is to make comparison between the average value of the amount of light emission of the recording element within a desired range and the amount of light emitted by each recording element, thereby making required adjustment. Another preferred object in using the light amount correction coefficient is to adjust the color balance of each print head. A preferred means for adjusting color balance is to adjust the average value of the amount of light emission within a desired range so as to get a desired density.

The light amount correction coefficient of the present invention can be used to fulfill the aforementioned objects. To carry out accurate correction of unevenness of density, it should preferably be used for the first object.

It is also preferred that the aforementioned light amount correction coefficient be corrected using the aforementioned amount of correction corresponding to each recording element. It is preferred that the light amount correction coefficient of the print head be sufficiently adjusted using the accurate amount of correction, thereby getting the uniform filled-in image.

It is preferred that correction of the unevenness of density according to the aforementioned arrangement be carried out simultaneously using the same image. The correction is preferred to be carried out simultaneously using the same image intended to correct the unevenness of density.

(117) The image-forming apparatus, described in item 115, characterized in that

a statistic amount in regard to the readout information is calculated, and the exposure-amount information is acquired by employing the statistic amount.

(118) The image-forming method, described in item 116, characterized in that

a statistic amount in regard to the readout information is calculated, and the exposure-amount information is acquired by employing the statistic amount.

The aforementioned arrangement allows information on the amount of exposure to be obtained easily from the density information (readout information). Information on the amount of exposure is obtained by using the statistic amount of the density information representing the property of the entire density information. This eliminates the need of getting information on the amount of exposure for each of the recording elements of the print head, thereby bringing about a substantial improvement in getting rid of complicated processing work.

The aforementioned statistical amount is preferred to be given in one numerical value in quantitative terms capable of representing the characteristics of the overall distribution. It is preferred to be represented by an average value, median, quartile deviation, mode, root mean square value.

(119) The image-forming apparatus, described in item 115 or 117, characterized in that

the recording operation is conducted onto the photosensitive material, by independently employing the light-amount correction coefficients or the exposure-amount information.

(120) The image-forming method, described in item 116 or 118, characterized in that

the recording operation is conducted onto the photosensitive material, by independently employing the light-amount correction coefficients or the exposure-amount information.

The aforementioned arrangement allows the light amount correction coefficient of the print head and information on the amount of exposure (hereinafter, also referred to as exposure-amount information) to become independent of each other, and provides high-quality output images for a long period of time on a stable basis.

With respect to the term of "independently" used here, it is preferred that the light amount correction coefficient be used only for the purpose of reducing the unevenness of density of each recording element of the array-shaped print head, and the information on the amount of exposure only for the purpose of reducing.

When correction of unevenness of density has been repeatedly made to the Mini-lab as an image forming apparatus having been operating on a long term basis because of the print head whose amount of light emission is much greater than the average one or the print head whose amount of light emission is reduced due to the approaching end of service life, the average value of the light amount correction coefficient may become excessively great or small, if the light amount correction coefficient and information on the amount of exposure is not independent of each other. In such a case, it may occur that the precision of correcting the unevenness of density is deteriorated because the required light emission time cannot be secured, for the reasons that sufficiently accurate data cannot be transferred or the response at the time of starting the print head drive cannot be met. To avoid such a problem, it is preferred in the present invention that the light amount correction coefficient and information on the amount of exposure be independent of each other.

(121) The image-forming apparatus, described in anyone of items 115, 117 and 119 characterized in that

a value, indicated by the readout information acquired from the correction image, is set at a point on a liner region of characteristic curve of the photosensitive material.

(122) The image-forming method, described in anyone of items 116, 118 and 120, characterized in that

a value, indicated by the readout information acquired from the correction image, is set at a point on a liner region of characteristic curve of the photosensitive material.

The aforementioned arrangement further improves the precision in correction of unevenness of density and setup, based on the density information (readout information). Further, the portion where gradation characteristic is changed into hard gradation (i.e. the linear portion of the characteristic curve) is used; therefore, the fluctuation of the image density caused by the variation in the amount of exposure of the print head can be represented as a comparatively large quantity. This provides accurate density information and brings about a drastic improvement in correction of unevenness of density and setup.

The aforementioned portion where gradation characteristic is changed into hard gradation refers to the linear portion shown by the symbol "c" in Fig. 11.

(123) The image-forming apparatus, described in anyone of items 115, 117, 119 and 121, characterized in that

the correction images are recorded onto plural different recording regions on the photosensitive material, and then, a plurality of readout information sets are acquired from the plurality of correction images, so that the exposure-amount information are acquired, based on each of the plurality of readout information sets.

(124) The image-forming method, described in anyone of items 116, 118, 120 and 122, characterized in that

the correction images are recorded onto plural different recording regions on the photosensitive material, and then, a plurality of readout information sets are acquired from the plurality of correction images, so that the exposure-amount information are acquired, based on each of the plurality of readout information sets.

The aforementioned arrangement allows the more accurate density information (readout information) to be obtained, and brings about drastic improvement in the correction of unevenness of density. Since the variation of the uneven coating on the faulty points of a photosensitive material can be removed, more accurate density information is obtained without involving complicated apparatus structure or increased costs.

The image recorded in at least two areas is preferred to be the one having been recorded by the light emitted by all recording elements. It can be the image having been recorded by the light emitted by all pixels in two separate positions. The images recorded in at least two areas may be the ones located close to each other, or separated from each other.

(125) The image-forming apparatus, described in item 123, characterized in that,

with respect to each of the recording regions, each of the correction images is recorded in each of densities being different relative to each other.

(126) The image-forming method, described in item 124, characterized in that,

with respect to each of the recording regions, each of the correction images is recorded in each of densities being different relative to each other.

Correction of unevenness of density and setup can be achieved because the aforementioned structure allows the more accurate density information (readout information) to be obtained.

Mutually differing densities be obtained by recording carried out on the photosensitive material for each of multiple areas, using the input or output signal value based on different image information.

Using the image recorded at different densities on at least two areas makes it possible to analyze the correlation between this image and obtained density information, thereby getting more accurate density information.

It is preferred that the signal selected for setup be contained in the scope of the output signal value subsequent to conversion according to the LUT (Look Up Table), based on the image information providing a basis for the different densities recorded on the aforementioned two or more areas.

When the image is recorded on three different areas, it is preferred that three types of images be separately recorded for each of the three areas.

When the image is recorded on different N areas, it is preferred that as many images as possible be separately recorded for each of the N areas. It is more preferred that N types of images be separately recorded for each of the N areas.

The greater the number of the recording areas of the image based on the different density information, the more preferable. To put it another way, it is preferred that images be recorded in many areas based on different density information. This arrangement raises the possibility of providing a complement even if the target density value has been much deviated. When the target value is deviated from the range of density of the recorded image, the signal value can be obtained by extrapolating the relationship between "Log (output value) - density information".

The arrangement of the present invention permits easy setup even if a plurality of different types of photosensitive materials resulting from different lots of the photosensitive material have to be employed.

When the near-linear portion of the photosensitive material to be used is included in the characteristic curve, use of this near-linear portion ensures more accurate setup.

(127) The image-forming apparatus, described in anyone of items 115, 117, 119, 121, 123 and 125, characterized in that

there is provided a pushing member for fixing the correction image onto the image-forming apparatus.

(128) The image-forming method, described in anyone of items 116, 118, 120, 122, 124 and 126, characterized in that

the photosensitive material is fixed onto the image-reading device by means of a pushing member.

The aforementioned arrangement allows accurate determination of the edge on the end of the photosensitive material, thereby bringing about a substantial improvement of precision in the correction of unevenness of density.

Further, it is possible to prevent the photosensitive material from becoming loose or bent due to curling, thereby substantially reducing the unevenness of density of low-frequency components in particular.

The pushing member in the sense in which it is used here refers to a member for pressing the correction image into position. It is preferred that this pushing member have an approximately uniform density like black, for example. It is also preferred that the pushing member be made of a soft material that can be bent easily, like rubber or sponge. Further, it is preferred to be of low static build-up, without easily allowing dust to deposit thereon.

(129) The image-forming apparatus, described in anyone of items 115, 117, 119, 121, 123, 125 and 127, characterized in that

the correction image is recorded onto a silver-halide photosensitive material.

(130) The image-forming method, described in anyone of items 116, 118, 120, 122, 124, 126 and 128, characterized in that

the correction image is recorded onto a silver-halide photosensitive material.

The aforementioned arrangement further enhances the effects of the present invention.

(131) The image-forming apparatus, described in anyone of items 115, 117, 119, 121, 123, 125, 127 and 129, characterized in that

the correction image is recorded onto a silver-halide photosensitive material having a reflective substrate layer.

(132) The image-forming method, described in anyone of items 116, 118, 120, 122, 124, 126, 128 and 130, characterized in that

the correction image is recorded onto a silver-halide photosensitive material having a reflective substrate layer.

The aforementioned arrangement further enhances the effects of the present invention.

(133) The image-forming apparatus, described in anyone of items 115, 117, 119, 121, 123, 125, 127, 129 and 131, characterized in that

the correction image is recorded onto the photosensitive material by recording a number of recorded lines in a range of 50-1000 onto the photosensitive material.

(134) The image-forming apparatus, described in anyone of items 116, 118, 120, 122, 124, 126, 128, 130 and 132, characterized in that

the correction image is recorded onto the photosensitive material by recording a number of recorded lines in a range of 50-1000 onto the photosensitive material.

The aforementioned arrangement reduces unevenness of density at high frequency components.

(135) The image-forming apparatus, described in anyone of items 115, 117, 119, 121, 123, 125, 127, 129, 131 and 133, characterized in that

correction-processing section acquires the readout information from more than 10% of total lines constituting the correction image.

(136) The image-forming method, described in anyone of items 116, 118, 120, 122, 124, 126, 128, 130, 132 and 134, characterized in that

the readout information is acquired from more than 10% of total lines constituting the correction image.

(137) The image-forming apparatus, described in anyone of items 115, 117, 119, 121, 123, 125, 127, 129, 131, 133 and 135, characterized in that

the light-amount correction coefficients is adjusted according to the correction amounts, while an output-value conversion LUT is adjusted according to the exposure-amount information.

(138) The image-forming apparatus, described in anyone of items 116, 118, 120, 122, 124, 126, 128, 130, 132, 134 and 136, characterized in that

the light-amount correction coefficients is adjusted according to the correction amounts, while an output-value conversion LUT is adjusted according to the exposure-amount information.

The aforementioned arrangement allows the light amount correction coefficient of the print head and information on the amount of exposure to become independent of each other, and provides high-quality output images for a long period of time on a stable basis.

The image reading device of the present invention has a line-like CCD, and an image is read by the scanning of the line-like CCD. Preferred examples of such a device includes a flat bed scanner, drum scanner and other various scanners.

When the aforementioned image reading device is used to measure the density of the correction image, it is preferred that the correction image be read at a resolution (e.g. 1200 dip) higher than that (e.g. 300 dip) for recording onto the photosensitive material using an array-shaped print head.

## BRIEF DESCRIPTION OF THE DRAWINGS

Other objects and advantages of the present invention will become apparent upon reading the following detailed description and upon reference to the drawings in which:

Fig. 1 is a block diagram representing an image forming apparatus 10 as an embodiment of the present invention;

Fig. 2(a), Fig. 2(b) and Fig. 2(c) are diagrams describing the arrangement of recording elements of an array-shaped print head;

Fig. 3 is a block diagram describing the operation of an image data writing operation of the print head 30 of the image forming apparatus 10;

Fig. 4(a) and Fig. 4(b) are schematic views showing a chart for recording a correction image of gray color;

Fig. 5(a) and Fig. 5(b) are enlarged schematic views of section E in Fig. 4(a) and density data;

Fig. 6 is a flowchart describing the correction of the recording element carried out by the image forming apparatus 10;

Fig. 7 is a schematic view of a chart for recording the correction image of RGB single color for comparison;

Fig. 8 is a diagram representing the result of evaluation in Experiment 1 in a first embodiment of the present invention;

Fig. 9 is a diagram representing the result of evaluation in Experiment 2 in a first embodiment;

Fig. 10 is a diagram representing the result of evaluation in Experiment 5 in a first embodiment;

Fig. 11 is a diagram representing the characteristic curve of a photosensitive material in a first embodiment;

Fig. 12 is a diagram representing the result of evaluation in Experiment 6 in a first embodiment;

Fig. 13 is a diagram representing the result of evaluation in Experiment 7 in a first embodiment;

Fig. 14 shows an example where images recorded on a photosensitive material by a plurality of print heads overlap each other;

Fig. 15(a) and Fig. 15(b) are schematic views showing a chart for recording a correction image;

Fig. 16 is a flowchart describing the correction of the recording element carried out by the image forming apparatus 10;

Fig. 17(a) and Fig. 17(b) are schematic views of image information obtained by the flat bed scanner 70;

Fig. 18 is a diagram representing the result of evaluation in Experiment 1 in a second embodiment;

Fig. 19 is a diagram representing the result of evaluation in Experiment 2 in a second embodiment;

Fig. 20 is a diagram representing the result of evaluation in Experiment 3 in a second embodiment;

Fig. 21 is a diagram representing the result of evaluation in Experiment 4 in a second embodiment;

Fig. 22 is a diagram representing the result of evaluation in Experiment 5 in a second embodiment;

Fig. 23 is a diagram representing the result of evaluation in Experiment 6 in a second embodiment;

Fig. 24 is a flowchart describing processing of image formation by an image forming apparatus in a third embodiment;

Fig. 25 is a flowchart describing processing executed in an example of experiment conducted on an image forming apparatus in a third embodiment;

Fig. 26(a) and Fig. 26(b) are flowcharts describing processing executed in an example of experiment conducted on an image forming apparatus in a third embodiment;

Fig. 27 is a graph describing the correlation between output value and density of image information used in an example of experiment conducted on an image forming apparatus in a third embodiment;

Fig. 28 is a flowchart describing processing executed in an example of experiment conducted on an image forming apparatus in a third embodiment;

Fig. 29 is a flowchart describing processing executed in an example of experiment conducted on an image forming apparatus in a third embodiment;

Fig. 30 is a flowchart describing processing executed in an example of experiment conducted on an image forming apparatus in a third embodiment;

Fig. 31 is a diagram showing an example of correction image used for processing the flowchart given in Fig. 30 in a third embodiment;

Fig. 32 is a diagram showing an example of LUT used in an example of experiment conducted on an image forming apparatus in a third embodiment;

Fig. 33 is a diagram showing a chart showing the correlation between output value and density of image information used in an example of experiment conducted on an image forming apparatus in a third embodiment;

Fig. 34 is a diagram showing a chart showing the correlation between output value and density of image information used in an example of experiment conducted on an image forming apparatus in a third embodiment;

Fig. 35 is a diagram showing the evaluation of unevenness of density conducted n an image forming apparatus in a third embodiment; and

Fig. 36 is a block diagram showing an image forming apparatus 200 in a third embodiment.

## DETAILED DESCRIPTION OF THE PREFERRED EMBODIMENT

Referring to the drawings, the following describes the first, second and third embodiments of the present invention. For the sake of expediency in explanation, duplicated description or explanation based on different definitions of components may be included, with reference to the drawings common to the first, second and third embodiments. It should be noted that present invention is not restricted to the illustrated examples.

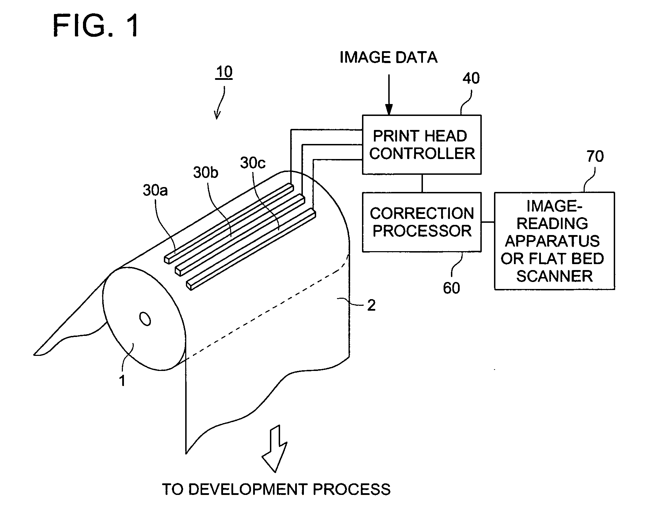

Fig. 1 is a block diagram representing an image forming apparatus 10 in a first embodiment. As shown in Fig. 1, the image forming apparatus 10 contains a support drum 1, a red print head 30a, a green print head 30b, a blue print head 30c, print head controller 40, correction processor 60, flat bed scanner 70, etc.

The support drum 1 is a transfer means rotated by a drive source (not illustrated). It transfers color photographic development paper 2 (hereinafter referred to as "development paper") as silver halide photosensitive material fed out of the roll (not illustrated), in the arrow-marked direction.

The red print head 30a, green print head 30b and blue print head 30c are print heads each formed of a plurality of recording elements placed in an array.

The array arrangement in the sense in which it is used here includes a staggered arrangement as shown in Fig. 2(b) and arrangement as shown in Fig. 2(c), in addition to the linear arrangement as shown in Fig. 2(a). As illustrated, the recording elements are numbered in each of them. Adjacent recording elements in the direction where recording elements are arranged indicate the neighboring device. The direction where recording elements of the print head are arranged refers to the direction where a greater number of recording elements are arranged, as shown in Fig. 2(a), Fig. 2(b) and Fig. 2(c).

An LED (Light-Emitting Diode) light source is used as the red print head 30a. The green print head 30b and blue print head 30c are composed of VFPHs (Vacuum Fluorescent Print Heads) characterized by comparatively high brightness and quick response and capable of easy color decomposition by use of a color filter.

The print head controller 40 provides recording control to the red print head 30a, green print head 30b and blue print head 30c at differently timed intervals for each color so that the image data of each of RGB colors is recorded at a predetermined position of the development paper 2.

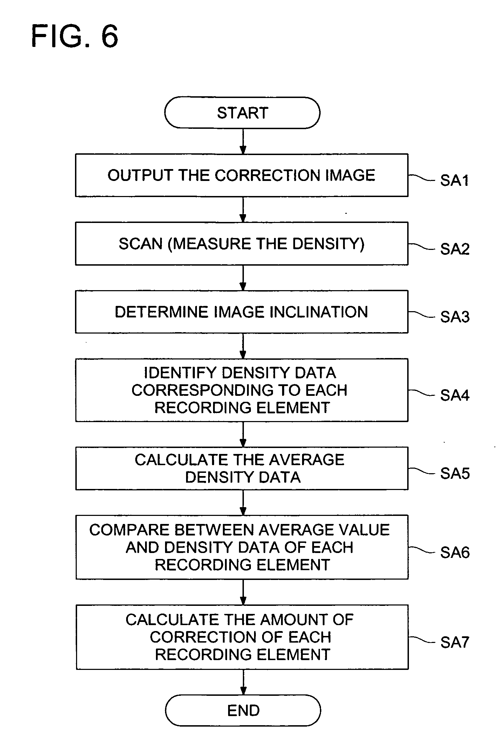

The correction processor 60 calculates from the density data the amount of correction to correct the light emitting characteristics of each recording element of the red print head 30a, green print head 30b and blue print head 30c, and outputs it to the print head controller 40. (See Fig. 6 S3 through S9).

The flat bed scanner 70 is an image reading device consisting of a light source, CCD (Charge Coupled Device) and analog-to-digital converter. The image receiving head of the flat bed scanner 70 is placed in an array form. The direction where the CCDs are arranged is the same as that where the recording elements are arranged. It is the direction where a greater number of CCDs can be arranged, as shown in Fig. 2 (a) and Fig. 2(c).

The flat bed scanner 70 applies light from the light source to the image mounted on the original setting glass, and allows the reflected light to be converted into the electric signal (analog signal) by the CCD, whereby readout information is obtained. The readout information obtained is converted into the digital data by the analog-to-digital converter. The digital data is sent to the correction processor 60 as image information. The image information is defined as the information associated with the measurement data (hereinafter referred to as "density data") representing the density of each component of three RGB colors.

When development paper 2 transferred from the roll from the support drum 1 is transferred in the arrow-marked direction as shown in Fig. 1, the red print head 30a, green print head 30b and blue print head 30c are exposure-controlled in conformity to the image data by the print head controller 40, and exposure is carried out for each color sequentially at a predetermined position of the development paper 2. The latent image of the color image is formed on the development paper 2. Upon completion of the exposure process, the development paper 2 is transferred to the development process of the next processing step by the support drum 1. The development paper 2 need not be roll paper; it can be a cut sheet. The development paper 2 can be transferred by a belt or other means.

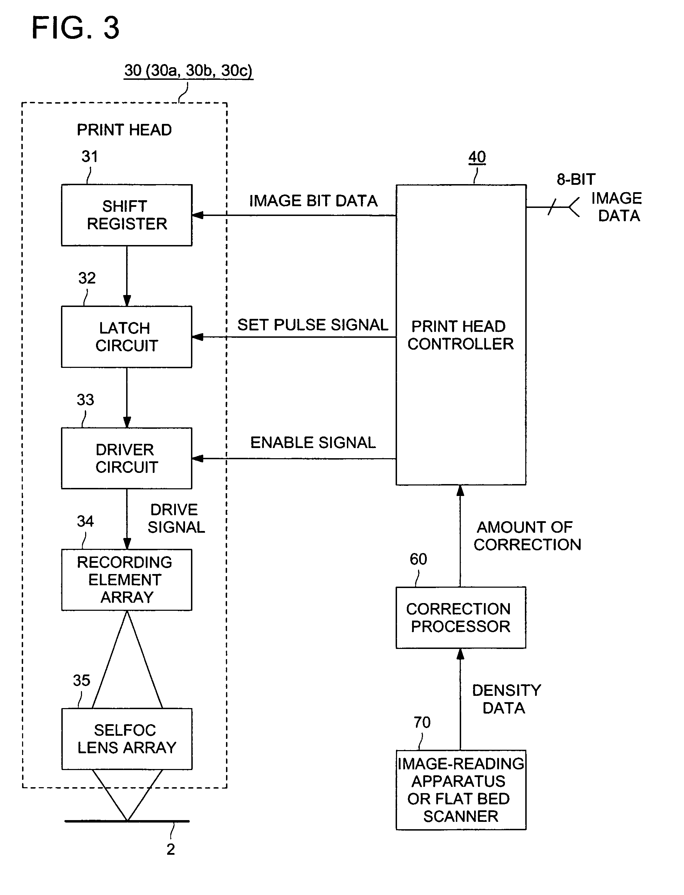

Fig. 3 is a block diagram describing the operation of an image data writing operation of the print head 30 for one color. As shown in Fig. 3, upon inputting of the image data where gradation is represented in 8-bit digital value for each color, the print head controller 40 applies correction processing to the image data, based on the amount of correction generated by the correction processor 60, and converts it into the serial digital image data corresponding to one line for each recording element. At the same time, it generates the set pulse signal to transfer the image bit data to a latch circuit 32 and the enable signal for controlling the light emission time, and outputs them to the print head 30 for one color. The image bit data is defined as specific bit data of image data.

In the print head 30, the MSB (Most Significant Bit) data is sent to the shift register 31 as image bit data for one line from the print head controller 40. When the set pulse signal is inputted into the latch circuit 32, the MSB data synchronized with the set pulse signal is latched to the latch circuit 32, where the data for one line is collectively latched. The enable signal in conformity to gradation is inputted into the print head 30, whereby drive control is provided to the interval corresponding to the time range of the enable signal, for each recording element of the print head 30, and light is emitted in response to the latched image data. To be more specific, the driver circuit 33 sends the drive signal to the device, having the latched data of "1", of the recording element array 34 on a selective basis so that light is emitted for the time range of the enable signal. Light is applied onto the development paper 2 through a SELFOC lens array 35 to form a latent image thereon. This processing is applied to all bits successively from the MSB to the LSB (Least Significant Bit). There is no restriction to the order of the bit; processing may be started from LSB or some other order may be used. The above description is concerned with one color alone. The same control procedure applies to all three colors.

The green print head 30b and blue print head 30c are provided with green/blue color decomposition filters (not illustrated) on the lower portion of the SELFOC lens array 35.

The following describes the correction image. In the following description, the development paper with correction image recorded thereon will be called a chart.

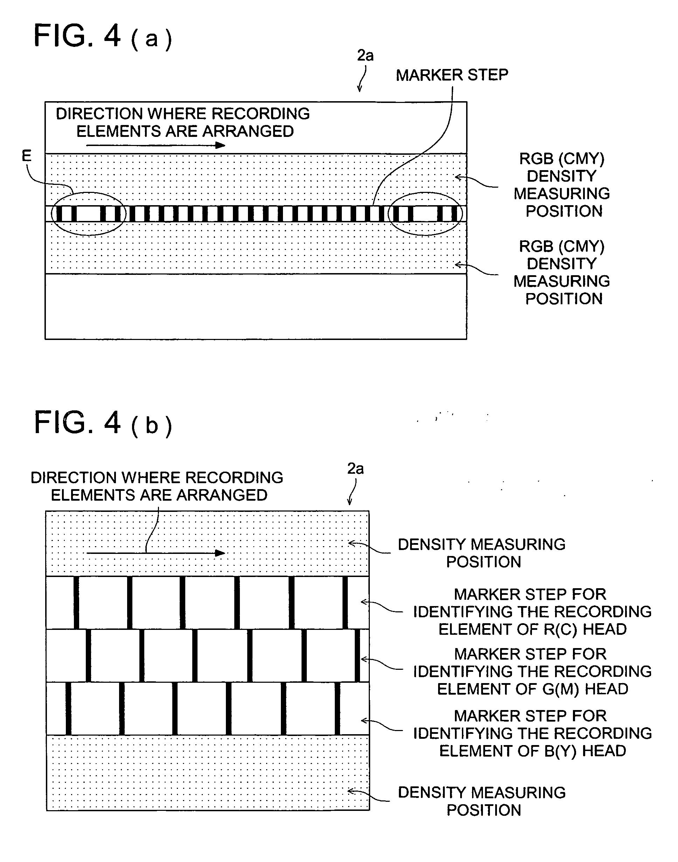

As shown in Fig. 4(a), the correction image used in the present invention is the image with its colors developed by cyan, magenta and yellow dyes as fundamental color dyes, namely the gray image that is recorded by the red print head 30a, green print head 30b and blue print head 30c at one and the same place. In the correction image, color developing areas overlap each other for each dot between different fundamental colors in principle, but all areas may not overlap one another, due to the difference in color developing areas of the recording elements of the print head 30.

The correction image can be the one where an interval of at least one recording element is provided in the direction where recording elements are arranged, or recording is discontinuous in the direction where recording elements are arranged. However, the image is preferred to be a filled-in one without any interval. Further, the density is preferred to be the same in the direction where recording elements are arranged, whenever possible. Accordingly, the correction image is preferred to the filled-in image of approximately uniform gray color. The image is also preferred to the one that is mainly used for the correction of unevenness of density of the print head 30, not the commonly used image.

When the photosensitive material is a cut sheet for cut sheet transfer - not a roll paper, then the correction image is preferred to be recorded at the central position of the chart in the direction of transfer in order to avoid contamination due to a developer. The leading side is preferred to have a portion where an image is not recorded. Further, when an image is read by the flat bed scanner 70, it is preferred that no image be recorded on the leading portion of the chart, since there is a variation on the leading portion.

It is preferred that the correction image be recorded based on a plurality of image data items in a plurality of positions of the chart, i.e. at a plurality of densities on the photosensitive material. From the viewpoint of ensuring satisfactory development, the image is also preferred to be sent to the development apparatus so that the portion recorded at less density is processed earlier.

It is preferred that density be measured in the widest possible range at a great number of places. More time will be required for image formation and scanning with an increase in the size of the correction image. The amount of paper loss will also increase. Thus, the size in excess of the level sufficient for correction requires more development paper and time. Further, when the number of data items have reached a predetermined level, convergence occurs. Capturing an excessive amount of data will be mere waste of time.

It is preferred that the number of lines to be recorded be in the range from 50 or more, but not more than 1000. More preferably, the number should be in the range from 50 or more, but not more than 200, and still more preferably it should be in the range from 60 or more, but not more than 100. The number of line in the sense in which it is used here refers to the number of pixels vertical to the direction where recording elements are arranged. It is preferred that the density measurement be carried out for 10% or more, but not more than 90% of the number of lines to be recorded in order to get the amount of correction. More preferably, the density measurement should be carried out for 20% or more, but not more than 80% of the number of recorded lines in order to get the amount of correction.

For the correction image, the range of density measured by the image reading device or density measurement device in terms of red density should preferably be 0.3 or more, but not more than 1.5, more preferably 0.4 or more, but not more than 1.0, and most preferably 0.5 or more, but not more than 0.7. In terms of green density, it should preferably be 0.2 or more, but not more than 1.5, more preferably 0.3 or more, but not more than 0.8, and most preferably 0.4 or more, but not more than 0.6. In terms of blue density, it should preferably be 0.15 or more, but not more than 1.5, more preferably 0.3 or more, but not more than 1.0, and most preferably 0.4 or more, but not more than 0.6.

For the size of the chart, for example, when recording is made after the development paper has been cut, it is preferred that the vertical length (LV) along the direction vertical to the direction where recording element of the print head 30 are arranged be not much greater than the horizontal length (LH) along the direction here recording element of the print head 30 are arranged. From the viewpoint of transportability of the photosensitive material, reduction of paper loss and impact on development process, the LV/LH is preferably 2.0 times or less, more preferably 1.2 times or less and still more preferably 0.9 times or less.

As shown in Fig. 4(a), in order to identify the position of each recording element 30, the chart is preferred to have marker steps. The markers along the direction where recording elements are arranged should be at smaller intervals. For example, markers should be arranged preferably at intervals of 10 pixels or less, more preferably at intervals of 5 pixels or less, and still more preferably at an interval of 1 pixel. The interval of one pixel signifies repetition of ON/OFF operations in the direction where recording elements are arranged.

Since some error may be contained in the installation position of the print head 30, it is preferred that a single color marker be provided for each print head 30. Fig. 4(b) shows the enlarged view of the marker step. As shown in Fig. 4(b), the marker (cyan) for identifying the position of each recording element of the red print head 30a, the marker (magenta) for identifying the position of each recording element of the green print head 30b, and the marker (yellow) for identifying the position of each recording element of the blue print head 30c are recorded.

When a chart is configured with a plurality of density measuring positions for correction recorded thereon, it is preferred that a marker step be located close to the density measuring position. As shown in Fig. 4(a), the marker step is preferred to be located between filled-in images $. In the chart shown in Fig. 4(a), only one marker step is found, but a plurality of marker steps can be provided. When a plurality of marker steps can be provided, it is preferred that the marker be recorded by the recording element having one and the same recording element number in order to simplify calculation.

It is preferred that the chart has a positioning marker for determining the corresponding recording element. Any form of positioning marker can be used as long as it is clearly different from the normal marker. For example, the positioning marker can be recorded on the photosensitive material having a density markedly different from that of the normal marker.

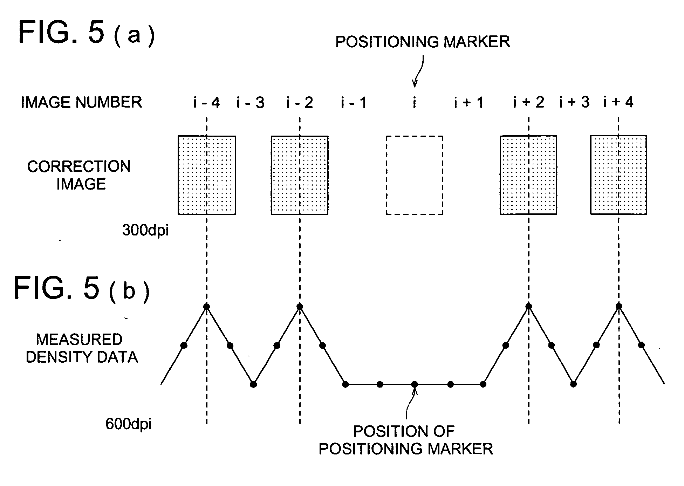

Fig. 5(a) is an enlarged schematic view of section E in Fig. 4(a). It shows the range where four pixels are exhibited centering on the positioning marker in the direction where recording elements are arranged.

The following describes the configuration where the density of the positioning marker is close to 0 (zero), as shown in Fig. 5(a). In the marker step on the correction image, the positioning markers contain vacancies corresponding to an interval of three pixels in contract to the normal markers provided every other pixel (repetition of ON/OFF operation). The absolute position of the pixel, i.e. the recording element number corresponding to the positioning marker is specified.

Fig. 5(b) shows the density data corresponding to the correction image of Fig. 5(a), obtained by the flat bed scanner 70. While the correction image is recorded on development paper at 300 dpi, the density is measured at 600 dpi by the flat bed scanner 70. In the portion of the positioning marker, the portion of low density continues; therefore, the position of the positioning marker can be identified. Since the absolute position of the marker can be determined, the recording element number can be determined with respect to the preceding and following images. This permits accurate feedback to each recording element, according to the amount of correction obtained from the measured density.

The following describes the procedure of recording element correction made by the image forming apparatus 10:

As shown in Fig. 6, the chart with the correction image recorded thereon is outputted (Step SA1). The chart is set on the flat bed scanner 70 and the density measuring position of the correction image is scanned to measure the density (Step SA2). To put it more specifically, the density data corresponding to each of the fundamental colors RGB in each position for density measurement is outputted. To get a high-precision density of the correction image corresponding to each recording element, the flat bed scanner 70 is preferred to read the correction image at a resolution higher that when recording is carried out by the print head 30.

When the chart is rectangular, the longer side of the chart is preferred to be in the same direction as that where the CCDs of the flat bed scanner 70 are arranged, from the viewpoint of the tolerance to inclination at the time of setting on the flat bed scanner 70.

The inclination of the scanned image is then determined (Step SA3). The position of the positioning marker (portion at intervals of thee pixels) is determined based on the continuous low-density portion of the density data in the marker step, and the preceding and succeeding recording element numbers are determined. In this manner, the density data corresponding to the red print head 30a, green print head 30b and blue print head 30c is identified (Step SA4).

The amount of correction is calculated for each of the print heads 30. Assume that the density data corresponding to the recording element i of the print head 30 is $D_i$. When there are a plurality of density data items in the same image data corresponding to the recording element i of the print head 30, it is possible to use an average of them or the representative value such as median.

Then the average value $D_o$ of density data $D_i$ in the direction where recording elements are arranged is calculated (Step SA5). The average value $D_o$ is compared with density data $D_i$ of the recording element (Step SA6), and the amount of correction for recording element i $C_i = D_o/D_i$ is calculated (Step SA7).

When an image is formed by the image forming apparatus 10, the image data and amount of correction $C_i$ calculated by the correction processor 60 are multiplied by the print head controller 40, and the result is outputted to the print head 30.

Before correction of the recording element is processed, the color balance setup is preferred to have been terminated. The color balance setup is to intended to ensure that a desired density can be obtained for the image data of each fundamental color, and is defined as the act of adjusting the average of the amount recorded by the print head 30 or the amount of exposure or taking other similar action, thereby adjusting the color balance between print heads 30. Further, it is preferred that adjustment can be made for each of the RGB.

The following describes the results of various experiments conducted by outputting of images using the image forming apparatus 10:

(Experiment 1)

In Experiment 1, when the state of correction was comparatively satisfactory, correction was made:

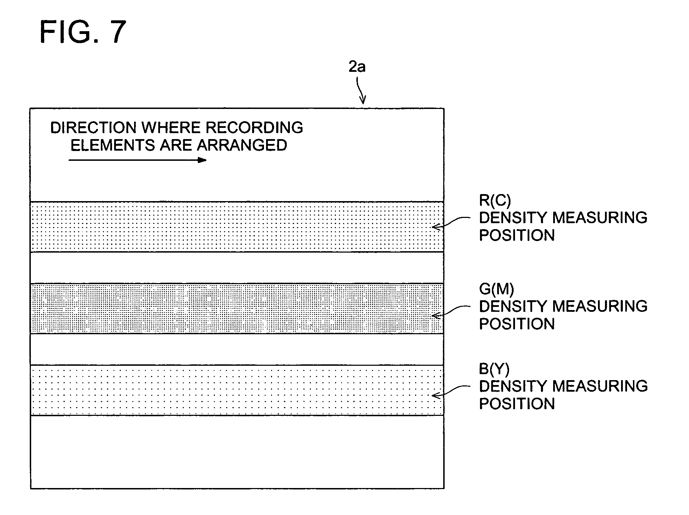

<1> using correction image in a single color of RGB (Fig. 7) and
<2> using the correction image of composite color (gray color) (refer to Fig. 4(a)). After correction, unevenness of density were evaluated by comparison. The correction image in the single color of RGB shown in Fig. 7 contains:

an R density measuring position (cyan) recorded by the red print head 30a;
an G density measuring position (magenta) recorded by the green print head 30b; and
a B density measuring position (yellow) recorded by the blue print head 30c. A portrait image including gray gradation was used as an image for evaluation, and was visually observed. In the following experiments, this evaluation image was used to evaluate the unevenness of density.

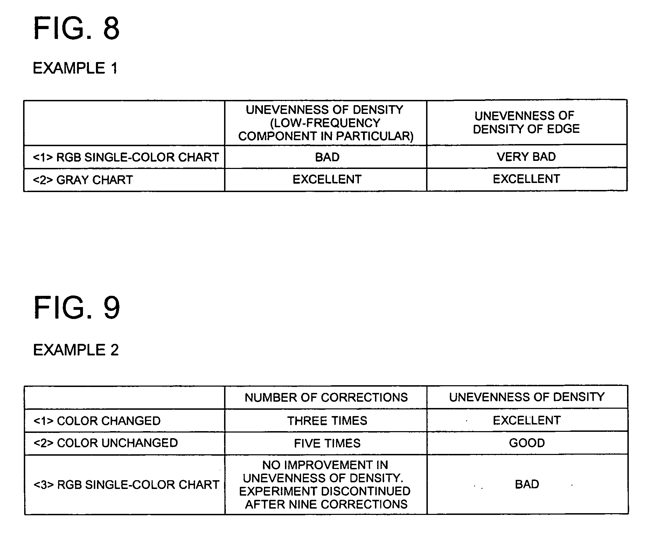

Fig. 8 shows the results of evaluation in Experiment 1. The results are shown in the following five grades. This applies to the evaluation of the subsequent experiments:

Excellent: Extremely good image quality completely free of any unevenness of density
Good: Very good image quality despite unevenness of density of low-frequency component partially observable
Passable: Good image quality despite unevenness of density of low-frequency component slightly observable
Bad: Poor image quality with unevenness of density observable
Very bad: Deteriorated image quality with unevenness of density clearly observable

In the evaluation of the unevenness of density, especially the unevenness of density of low-frequency component as shown in Fig. 8, the image exhibited extremely good quality completely free of any unevenness of density when <2> the correction image of gray color was used (Excellent); and the image exhibited poor quality with unevenness of density when <1> correction image in a single color of RGB was used (Bad). In the valuation of the evaluation of the unevenness of density of the edge, the image exhibited extremely good quality completely free of any unevenness of density when <2> the correction image of gray color was used (Excellent); and the image clearly exhibited deteriorated image quality with unevenness of density when <1> correction image in a single color of RGB was used (Very bad). Further, when <2> the correction image of gray color was used, smaller image size is sufficient, so correction time was reduced to about 70% of the time in the case where <1> correction image in a single color of RGB was used.
As shown in Experiment 1, since the correction image of gray color was used, unevenness of density of other colors were included in the density of each fundamental color read from the correction image; therefore, unevenness of density, especially those of the low-frequency component could be reduced effectively. Further, since three RGB colors formed the edge portion at the same time, stable evaluation of the edge was achieved.
Since the filled-in correction image with RGB images overlapping each other was used, it was possible to reduce the variation in density measurement caused by the difference in the image structures recorded on the photosensitive material by each print head, with the result that correction precision was improved.
The gray correction image allows miniaturization of the correction image to be achieved, as compared to the case where correction image is separately created for each of the RGB colors, and allows the scope of scanning to be reduced at the time of correction, whereby correction calculation time can be reduced.

(Experiment 2)

In Experiment 2, with correction in a very poor state, the present inventors obtained the number of corrections required until there was no unevenness of density in visual inspection, using a correction image of gray color, in the following two cases where <1> color conversion was carried out with respect to measured density and where <2> color conversion was not carried out with respect to measured density. To get an example for comparison, the experiment was carried out using a correction image of a single color of RGB.
The following equation (1) was used for color conversion where Rorg, Gorg and Borg denote density readings (integral density) prior to color conversion, and R', G' and B' denote densities subsequent to color conversion.

$$R' = ar \cdot (Rorg)^{br} + cr \cdot (Gorg)^{dr} + er \cdot (Borg)^{fr} + gr$$

$$G' = ag \cdot (Rorg)^{bg} + cg \cdot (Gorg)^{dg} + eg \cdot (Borg)^{fg} + gg$$

$$B' = ab \cdot (Rorg)^{bb} + cb \cdot (Gorg)^{db} + eb \cdot (Borg)^{fb} + gb \tag{1}$$

Where ab, br, ... gb denote constants. In this Experiment 2, the following values were used.

ar = 1.10, br = 0.98, cr = -0.25, dr = 1.03, er = 0.02, fr = 1.02, gr = 0.02, ag = -0.30, bg = 0.99, cg = 1.02, dg = 1.00, eg = -0.20, fg = 1.01, gg = 0.01, ab = 0.05, bb = 1.00, cb = -0.25, db = 1.02, eb = 1.08, fb = 0.99, gb = -0.02

After performing correction by the required number of times, the same procedure as that in Experiment 1 was taken to evaluate unevenness of density.

Fig. 9 shows the result of evaluation in Experiment 2. The number of corrections required until there was no unevenness of density was three <1> when color conversion was carried out, and five <2> when color conversion was not carried out. <3> When correction image of a single color of RGB was used, there was no further improvement in unevenness of density even after nine corrections were made.

In the evaluation of unevenness of density, the image exhibited extremely good quality completely free of any unevenness of density <1> when color conversion was carried out (Excellent). The image showed very good quality despite unevenness of density of low-frequency component partially observable <2> when color conversion was not carried out (Good). The image exhibited poor quality with unevenness of density observable <3> when correction image of a single color of RGB was used (Bad). Effective correction can be made by calculating the analytical density from the integral density i.e. by performing color conversion.

As shown in Experiment 2, color conversion allows the adverse effect of the unevenness of density of other colors to be eliminated, even if the state of correction is very bad, whereby accurate and high-precision correction can be achieved. Further, even if unevenness of density had taken place, it was possible to get back to the state free of unevenness of density by a small number of corrections.

(Experiment 3)

In Experiment 3, the same experiment as Experiment 2 was conducted using the following conversion formula (2): To be more specific, with correction in a very poor state, the present inventors obtained the number of corrections required until there was no unevenness of density in visual inspection, using a correction image of gray color, in the following two cases where <1> color conversion was carried out with respect to measured density and where <2> color conversion was not carried out with respect to measured density. To get an example for comparison, the experiment was conducted <3> when correction image of a single color of RGB was used.

In the following formula, Rorg, Gorg and Borg denote integral density; R', G' and B' denote analytical densities; and ar, cr, er, ag, cg, eg, ab, cb and eb are constants.

$$R' = ar \cdot Rorg + cr \cdot Gorg + er \cdot Borg$$

$$G' = ag \cdot Rorg + cg \cdot Gorg + eg \cdot Borg$$

$$B' = ab \cdot Rorg + cb \cdot Gorg + eb \cdot Borg \qquad\qquad (2)$$

In Experiment 3, the following values were used:
ar = 1.05, cr = -0.30, er = 0.05, ag = -0.25, cg = 1.00, eg = -0.15, ab = 0.05, cb = -0.30, eb = 1.05

The required number of corrections and the result of evaluating unevenness of density were the same as those in Experiment 2. When color conversion was made using the linear conversion formula of the aforementioned (2), the time of calculation was reduced to about 70%, as compared to the case of performing color conversion using the conversion formula (1) in Experiment 2.

Thus use of the conversion formula (2) allowed the adverse effect of the unevenness of density of other colors to be eliminated by a comparatively simple method. High-precision correction could be achieved in a shorter period of time.

(Experiment 4)

In Experiment 4, the effect of a pushing member was evaluated when the correction image was read by the flat bed scanner 70. A black rubber characterized by low static build-up and approximately uniform density was used as the pushing member. The chart was held and set in position by the black rubber when the correction image was read.

Use of the pushing member allows the image edge to be evaluated with high accuracy, and prevents paper from getting loose and bent, with the result that the unevenness of density of low-frequency components can be reduced and correction precision was improved.

(Experiment 5)

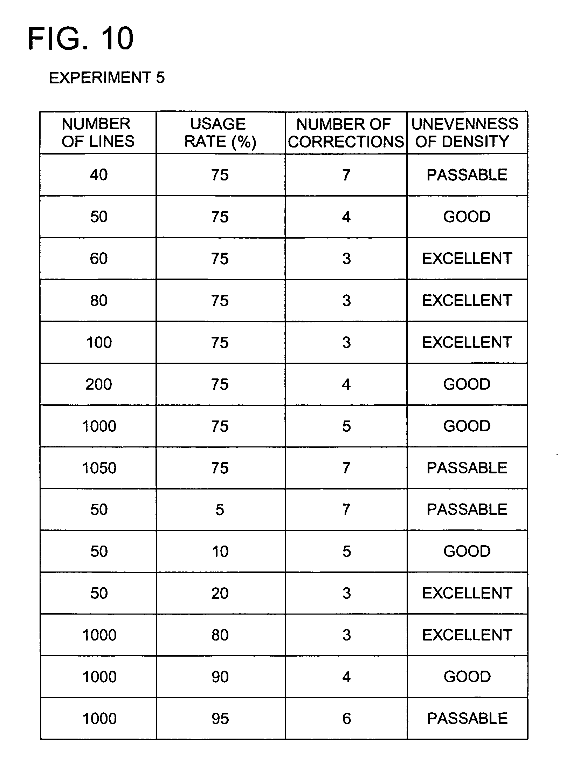

In Experiment 5, the ratio between the number of lines used for correction image and that used in the measurement of density was changed as shown in Fig. 10, thereby finding the number of corrections required until there was no unevenness of density in visual evaluation. Paying attention paid to the unevenness of density of high-frequency component, an evaluation was made of the unevenness of density subsequent to correction.

Fig. 10 shows the result of Experiment 5. If the percentage of the number of lines used to measure density was 75%, the number of corrections required until there was no unevenness of density was smaller and unevenness of density were smaller when the number of lines was 50 than when it was 40. Further, when the number of lines was 60, the number of corrections required until there was no unevenness of density was still smaller, and no unevenness of density was observed at all in the evaluation of unevenness of density. Extremely good image quality was accomplished.

Further, the number of corrections required until there was no unevenness of density was smaller and unevenness of density were smaller when the line of lines was 1000 than when it was 1050. Still further, the number of corrections required was smaller when the line of lines was 200. Moreover, the number of corrections required was still smaller when the line of lines was 100. No unevenness of density was observed at all in the evaluation of unevenness of density. Extremely good image quality was accomplished.

If the number of lines was 50, the number of corrections required was smaller and unevenness of density were smaller when the percentage of the number of lines used to measure the density was 10% than when it was 5%. When the rate of use was 20%, the number of corrections required was still smaller and no unevenness of density was observed at all in the evaluation of unevenness of density. Extremely good image quality was accomplished.

If the number of lines is 1000, the number of corrections required was smaller and unevenness of density were smaller when the percentage of the lines used to measure the density is 90% than when it is 95%. When the rate of use was 80%, the number of corrections required was still smaller and no unevenness of density was observed at all in the evaluation of unevenness of density. Extremely good image quality was accomplished.

As shown in the result of Experiment 5, when the number of lines was 50 or more to increase the width, the number of data items could be ensured, and the average of the density data could be stabilized, thereby reducing the unevenness of density of the high-frequency component. When the number of lines was kept not exceeding 1000, the unused portion and calculation time could be reduced.

When 10% or more of the number of recorded lines were used to measure the density, the correction image could be reduced in size. Thus, calculation time and paper loss could be reduced.

(Experiment 6)

In Experiment 6, an evaluation was made of the unevenness of density caused by differences in correction image density. As shown in the characteristic curve of the photosensitive material given in Fig. 1, even if light is applied, its effect is not realized as an increase in density (portion a), until the amount of exposure exceeds a predetermined value (point A). When the amount of exposure has reached a predetermined value, density starts to increase with the amount of exposure. From point A to point B, the characteristic curve exhibits a curve of downward convex form (portion b). From point B to point C, the characteristic curve is linear and the change of the density with respect to the logarithm of the amount of exposure is constant (portion c). When the amount of exposure has exceeded point C, an increase in the density with respect to the logarithm of the amount of exposure is slowed down, and the characteristic curve exhibits a curve of upward convex form (portion d). To be more specific, at portion c (intermediate density), there is a great change in the image density with respect to the change in the amount of exposure, as compared with portion b (low density) and portion d (high density).

In Experiment 6, comparison has been made of the density of correction image in the following three cases:

<1> when density is low (portion b); <2> when density is intermediate (portion c, a linear portion), and <3> when density is high (portion d).

Fig. 12 shows the result of evaluation in Experiment 6. <1> When density was low (portion b), the image exhibited a very good image quality despite unevenness of density of low-frequency component partially observable (Good). <2> When density was intermediate (portion c, a linear portion), the image exhibited extremely good quality completely free of any unevenness of density (Excellent). <3> When density was high (portion d), unevenness of density of low-frequency component were slightly observable (Passable).

Thus, when the correction image density is set to the linear portion of the characteristic curve of the photosensitive material, correction precision was improved because it was possible to utilize the portion where gradation characteristic is changed into hard gradation, i.e. the portion where there is a big change in the image density with respect to the change in the amount of exposure.

(Experiment 7)

In Experiment 7, the range of densities (densities R, G and B) of each color component of the correction image was changed to get the number of corrections required until there was no unevenness of density in visual inspection, and evaluation was made of the unevenness of density subsequent to correction.

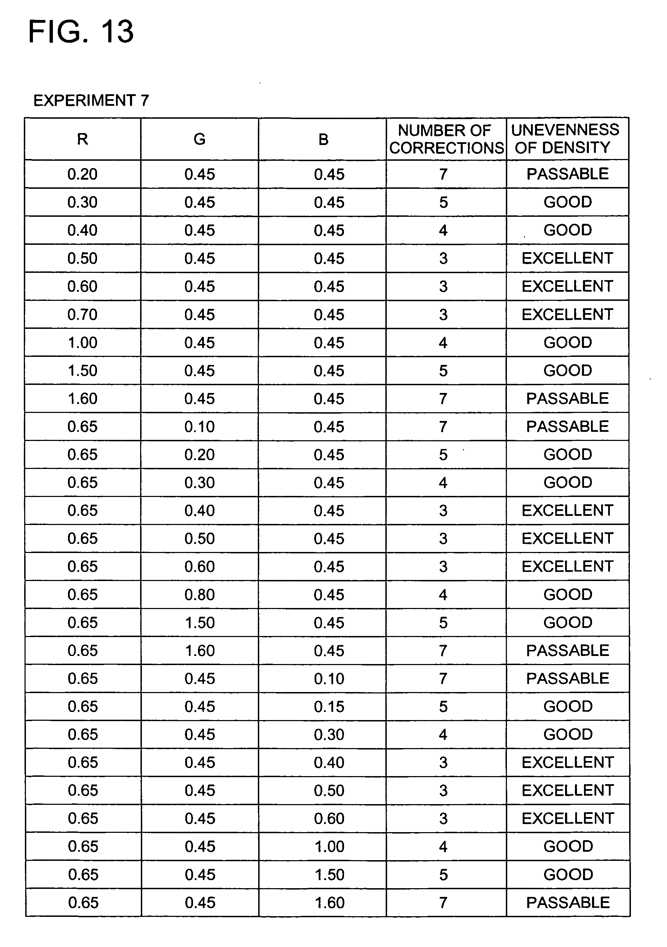

Fig. 13 shows the result of evaluation in Experiment 7. Density R was changed when density G was 0.45 and density B was 0.45. As density R was changed in an increasing order of 0.20, 0.30, 0.40 and 0.50, there was a decrease in the number of corrections required until there was no unevenness of density. Better images were observed in the evaluation of unevenness of density. As density R is changed in a decreasing order of 1.60, 1.50, 1.00 and 0.70, there was a decrease in the number of corrections required, and better images were observed in the evaluation of unevenness of density.

Density G was changed when density R was 0.65 and density B was 0.45. As density G was changed in an increasing order of 0.10, 0,20, 0.30 and 0.40, there was a decrease in the number of corrections required until there was no unevenness of density. Better images were observed in the evaluation of unevenness of density. Further, as density G was changed in a decreasing order of 1.60, 1.50, 0.80 and 0.60, there was a decrease in the number of corrections required, and better images were observed in the evaluation of unevenness of density.

Density B was changed when density R was 0.65 and density G was 0.45. As density B was changed in an increasing order of 0.10, 0,15, 0.30 and 0.40, there was a decrease in the number of corrections required until there was no unevenness of density. Better images were observed in the evaluation of unevenness of density. Further, as density B was changed in a decreasing order of 1.60, 1.50, 1.00 and 0.60, there was a decrease in the number of corrections required, and better images were observed in the evaluation of unevenness of density.

As shown in the result of Experiment 7, it has been revealed that, when the density R of correction image is set to 0.3 or more, but not more than 1.5, the density G of correction image to 0.2 or more, but not more than 1.5, or the density B of correction image to 0.15 or more, but not more than 1.5, density does not become extremely high with respect to other colors, thereby reducing the adverse effect of the secondary absorption formed by the light emitting dye of the photosensitive material. It is also possible to remove the influence of color turbidity, with the result that the measured density is more accurate and high-precision correction can be performed.

(Experiment 8)

In Experiment 8, before correction was made to reduce the variation of each recording element, evaluation was made by comparison between the cases where the color balance setup was performed and where not performed.

The result of Experiment 8 has revealed that, when correction is made after termination of the color balance setup, three RGB colors are kept in balance without being affected by other colors very much, thereby contributing to further improvement of correction precision.

It should be noted that description in the aforementioned embodiment refers to a preferred example of an image forming apparatus according to the present invention, without being restricted thereto. The detailed configurations and operations of each component of the image forming apparatus in the aforementioned embodiment can be modified as needed, without departing from the spirit of the invention.

For example, the print head with recording elements arranged in an array form can be of any type as long as it is configured in such a way that a plurality of recording elements are arranged in a predetermined interval in one row or a plurality of rows in order to get a predetermined resolution. Preferred examples of the print head placed in an array include a printer head where LED light emitting devices or vacuum fluorescent tubes are arranged, a PLZT print head using an appropriate backlight, an optical shutter array such as a liquid crystal shutter array print head, a semiconductors placed in an array form, a thermal head, and a light emitting device based on electro-luminance phenomenon such as an organic EL material.

Preferred image forming apparatuses include the one capable of recording on the silver halide photosensitive material using various recording element arrays, and the one for recording with a thermal head using sublimation ink.

In the aforementioned embodiment, reference was made to an example where a positioning marker was provided in parallel with an ordinary marker. It can be located anywhere on the correction image. Further, the number of the positioning markers can be only one or more than one. The positioning marker is preferred to be provided for each print head.

In the aforementioned embodiment, the density data of each color of RGB was used as the readout information obtained from image. The readout information is not restricted to density alone. It can be information on reflection factor, transmittance coefficient or light absorption coefficient. Alternatively, it can be a function value corresponding to these.

The following describes a second embodiment. The schematic configuration of the image forming apparatus as the second embodiment is the same as that of the first embodiment shown in Fig. 1 through Fig. 3. Accordingly, Fig. 1 through Fig. 3 apply to the second embodiment and the description will be omitted.

The following describes the correction image (chart) used in the second embodiment.

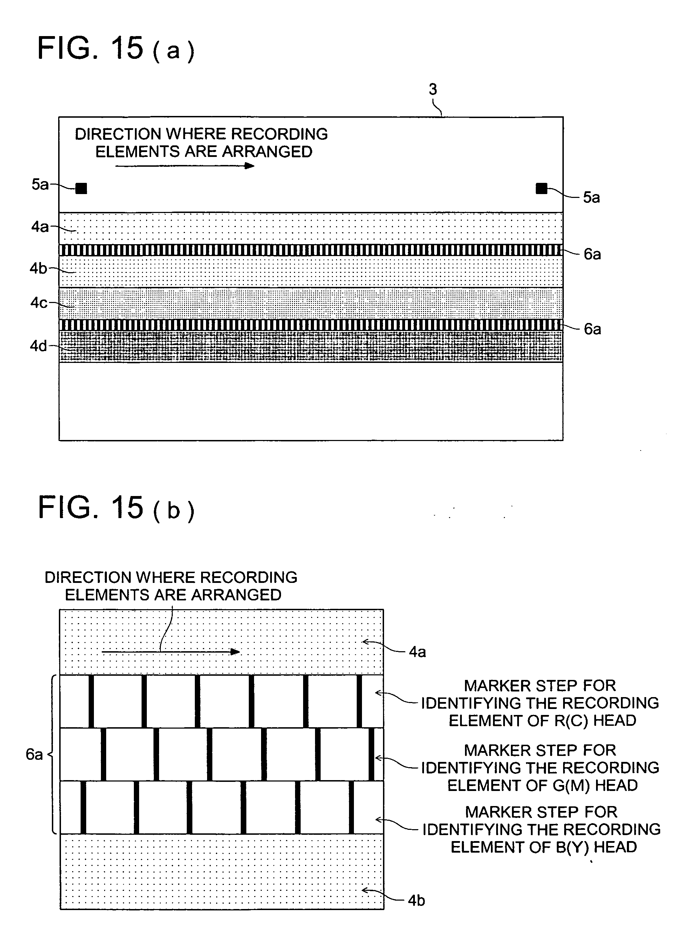

As shown in Fig. 15(a), the chart 3 used in this embodiment contains density measurement areas 4a, 4b, 4c and 4d, inclination determination markers 5a and 5b, and recording element identifying marker steps 6a and 6b. The arrow mark in Fig. 15(a) indicates the direction where recording elements are arranged.

The density measurement areas 4a, 4b, 4c and 4d are the places where density is measured in order to ensure uniform amount of exposure of the recording element. For example, the image used is the one obtained by the red print head 30a, green print head 30b and blue print head 30c recording at one and the same position, where the colors of this image are developed by cyan, magenta and yellow dyes as fundamental colors. As shown in Fig. 4(a), it is preferred that this correction image be recorded based on a plurality of image data items in a plurality of positions of the chart, i.e. at a plurality of densities. Fig. 15(a) shows an example of the areas for measuring four types of densities provided.

In the density measurement areas 4a, 4b, 4c and 4d, it is possible to use the image of discontinuous recording in the direction where recording elements are arranged, including the one where an interval equivalent to at least one recording element is provided in the direction where recording elements are provided. However, the image is preferred to be a filled-in one without any interval. Further, the density is preferred to be the same in the direct where recording elements are arranged, whenever possible.

It is preferred that density measurement areas 4a, 4b, 4c and 4d cover the widest possible range of a great number of places. More time will be required for image formation and scanning with an increase in the size of the correction image. The amount of paper loss will also increase. Thus, the size in excess of the level sufficient for correction requires more development paper and time. Further, when the number of data items have a predetermined level, convergence occurs. Capturing an excessive amount of data will be mere waste of time.

Inclination determination markers 5a and 5b are used to determine the inclination of correction image. As shown in Fig. 15(a), the inclination determination markers 5a and 5b are recorded as a pair close to both ends of the chart 3 in the direction where recording elements are arranged. The inclination determination markers 5a and 5b are used to get the position. Accordingly, it is preferred that recording be carried out in a small number of lines by a small number of recording elements in a smallest possible area.

The recording element identifying marker steps 6a and 6b are used to identify the positions of the recording elements of each print head 30. The interval of the recording element identifying marker steps 6a and 6b in the direction where recording elements are arranged is preferred to be smaller. The recording element identifying marker steps 6a and 6b should be arranged preferably at intervals of 10 pixels or less, more preferably at intervals of 5 pixels or less, and most preferably at an interval of 1 pixel. The interval of one pixel signifies repetition of ON/OFF operations in the direction where recording elements are arranged.

Since some error may be contained in the installation position of the print head 30, it is preferred that a single color marker be provided for each print head 30. Fig. 15(b) shows the enlarged view of the recording element identifying marker step 6a. As shown in Fig. 15(b), the marker step (cyan) for identifying the position of each recording element of the red print head 30a, the marker step (magenta) for identifying the position of each recording element of the green print head 30b, and the marker step (yellow) for identifying the position of each recording element of the blue print head 30c are recorded.

When a plurality of density measuring areas are recorded in the chart, recording element identifying marker steps should preferably recorded close to the density measuring area.

The chart 3 is used to calibrate the CCD of the flat bed scanner 70. Calibration of the CCD is reduction of the variation in CCD light receiving sensitivity. The image used for CCD calculation is preferably the one that has the density of the non-linear portion (portions a, b and d of Fig. 11) of the characteristic curve of the photosensitive material.

As shown by the characteristic curve of photosensitive material in Fig. 11, even if light is applied, its effect is not realized as an increase in density (portion a; unexposed portion), until the amount of exposure exceeds a predetermined value (point A). When the amount of exposure has reached a predetermined value, density starts to increase with the amount of exposure. From point A to point B, the characteristic curve exhibits a curve of downward convex form (portion b). From point B to point C, the characteristic curve is linear and the change of the density with respect to the logarithm of the amount of exposure is constant (portion c). When the amount of exposure has exceeded point C, an increase in the density with respect to the logarithm of the amount of exposure is slowed down, and the characteristic curve exhibits a curve of upward convex form (portion d). To be more specific, at portions a, b (low density) and d (high density) where the characteristic curve is not linear, there is a small change in the image density with respect to the change in the amount of exposure as compared to portion c (intermediate density) where the characteristic curve is linear. This means a greater resistance to impact of the variation in the amount of exposure of the recording element upon change in density.

When color development has occurred due to other than the exposure of the print head, for example, when there is coloring resulting from residual color, stain or fogging of the photosensitive material due to slight light leakage, that portion is regarded as an unexposed portion. If clear coloring has been visually observed, re-printing or some other action should be taken. It is preferred not to be used for calculation for correction.

The image for calibrating the CCD may be located at one position or more than one position. When images are present at more than one position, they may have the same density or different densities.

When the photosensitive material is a cut sheet for cut sheet transfer - not a roll paper, then the correction image is preferred to be recorded at the central position of the chart in the direction of transfer in order to avoid contamination due to a developer. The leading side is preferred to have a portion where an image is not recorded. Further, when an image is read by the flat bed scanner 70, it is preferred that no image be recorded on the leading portion of the chart, since there is a variation on the leading portion.

For the size of the chart, for example, when recording is made after the development paper has been cut, it is preferred that the vertical length (LV) along the direction vertical to the direction where recording element of the print head 30 are arranged be not much greater than the horizontal length (LH) along the direction here recording element of the print head 30 are arranged. From the viewpoint of transportability of the photosensitive material, reduction of paper loss and impact on development process, the LV/LH is preferably 2.0 times or less, more preferably 1.2 times or less and still more preferably 0.9 times or less.

The following describes correction of the unevenness of density of the image forming apparatus 10. Correction of unevenness of density is performed to reduce the variation in the recording characteristics of each reference surface of the print head 30 and to get uniform amount of exposure.

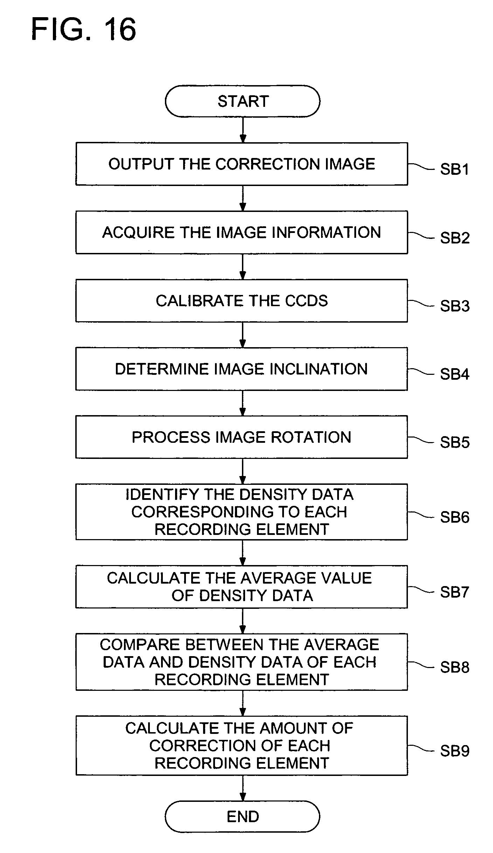

As shown in Fig. 16, the chart 3 (Fig. 15(a)) with correction image recorded thereon is outputted (Step SB1). The chart 3 is set on the flat bed scanner 70 to start scanning of the correction image and to measure the density (Step SB2). In other words, image information is obtained from correction image. To put it more specifically, the density data corresponding to each of the fundamental colors RGB in each position of the correction image is outputted to the correction processor 60.

The chart 3 is set in such a way that the direction where recording elements of the print head 30 are arranged is the same as the direction where CCDs of the flat bed scanner 70 are arranged, namely, the angle formed by the direction where recording elements are arranged and the direction where CCDs are arranged is kept within $\pm$ 10 degrees. To ensure a high-precision density of correction image corresponding to each recording element, it is preferred that the flat bed scanner 70 read the correction image at a resolution higher than that of recording by the print head 30.

Based on the image information gained from correction image, calibration of the CCD is carried out (Step SB3). The image information having the density of the non-exposure section of correction image or the non-linear portion of the characteristic curve of the photosensitive material is used for calibration of the CCD. In the subsequent processing, the result of the CCD calibration is reflected in the density data corresponding to each of the fundamental colors RGB.

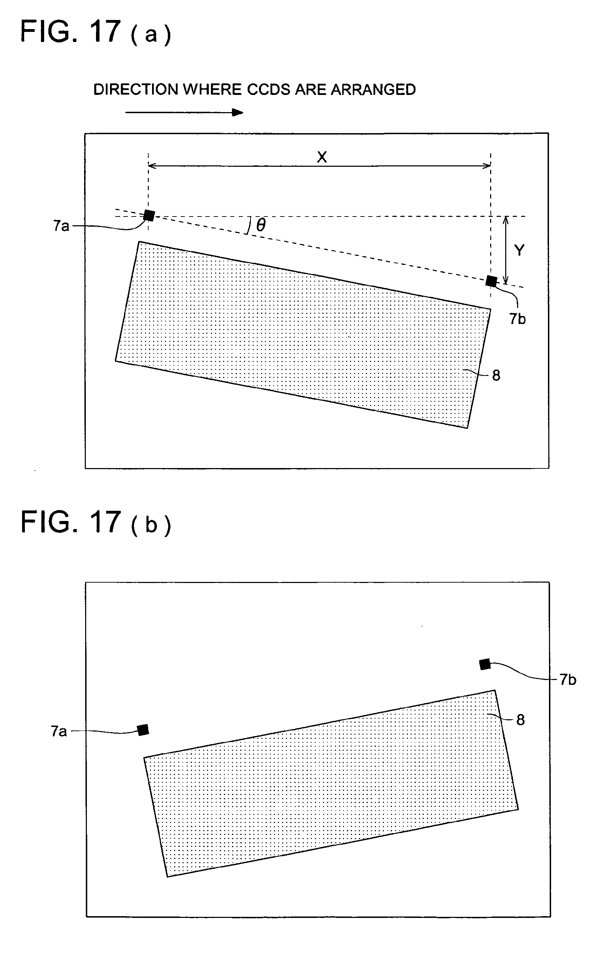

In the next step, the inclination of the scanned image is evaluated (Step SB4). Referring to the schematic diagram of the image information obtained by the flat bed scanner 70 shown in Fig. 17(a) and Fig. 17(b), the following describes the procedures of evaluating the inclination of the image. As shown in Fig. 17(a) and Fig. 17(b), image information contains inclination determination markers 7a and 7b, and the portion 8 used for calculation of correction.

In the obtained image information, image processing such as binarization using a given threshold value, and position determining processing using the center of gravity or Feret's diameter in order to determine the position of inclination determination markers 7a and 7b. To remove the adverse effect of dust and soil, it is also possible to make such arrangements that the area of the inclination determination markers 7a and 7b, moment and anticipated position range are preset, and the positions of the inclination determination markers 7a and 7b are determined by comparison with the obtained image information.

As shown in Fig. 17(a), the distance X in the direction where the CCDs are arranged, between the inclination determination markers 7a and 7b, and the distance Y vertical to the direction where the CCDs are arranged are obtained from the positions of the inclination determination markers 7a and 7b. Then the inclination $\theta$ of image is determined ($\tan \theta = Y/X$).

Based on the inclination $\theta$ of image determined, processing of rotation is applied to image information (Step SB5). Use of affine transformation is preferred in the processing of rotation. The image information is converted into the image information free of inclination by processing of the rotation of angle $\theta$.

Density data corresponding to each of the recording elements of the red print head 30a, green print head 30b and blue print head 30c is identified based on the result of measuring the density of the recording element identifying marker steps 6a and 6b (Step SB6).

The amount of correction is calculated for each of the print heads 30. Assume that the density data corresponding to the recording element i of the print head 30 is $D_i$. When there are a plurality of density data items in the same image data corresponding to the recording element i of the print head 30, it is possible to use an average of them or the representative value such as median.

Then the average value $D_o$ of density data $D_i$ in the direction where recording elements are arranged is calculated (Step SB7). The average value $D_o$ is compared with density data $D_i$ of the recording element (Step SB8), and the amount of correction for recording element i $C_i = D_o/D_i$ is calculated (Step SB9).

When an image is formed by the image forming apparatus 10, the image data and amount of correction $C_i$ calculated by the correction processor 60 are multiplied by the print head controller 40, and the result is outputted to the print head 30.

Before correction of the recording element is processed, the color balance setup is preferred to have been terminated. The color balance setup is to intended to ensure that a desired density can be obtained for the image data of each fundamental color, and is defined as the act of adjusting the average of the amount recorded by the print head 30 or the amount of exposure or taking other similar action, thereby adjusting the color balance between print heads 30. Further, it is preferred that adjustment can be made for each of the RGB.

The following describes the results of various experiments conducted by outputting of images using the image forming apparatus 10:

(Experiment 1)

In Experiment 1, when the outputted correction image was set on the flat bed scanner 70, correction time was evaluated by changing the angle of the array-shaped print head with respect to the direction where CCDs was arranged.

Evaluation was made:

<1> when the direction where recording elements were arranged with respect to the correction image shown in Fig. 15(a) was set vertical to the direction where CCDs were arranged (vertical direction);
<2> when the angle formed by the direction where recording elements were arranged with respect to the correction image and the direction where CCDs were arranged was set to 0 degree (horizontal direction);
<3> when the angle formed by the direction where recording elements were arranged with respect to the correction image and the direction where CCDs were arranged was set to 1 degree (horizontal direction);
<4> when the angle formed by the direction where recording elements were arranged with respect to the correction image and the direction where CCDs were arranged was set to 5 degrees (horizontal direction);
<5> when the angle formed by the direction where recording elements were arranged with respect to the correction image and the direction where CCDs were arranged was set to 10 degrees (horizontal direction); and
<6> when the angle formed by the direction where recording elements were arranged with respect to the correction image and the direction where CCDs are arranged was set to 11 degrees (horizontal direction).

After the recording elements of the print head 30 in each of the fundamental colors RGB were corrected, unevenness of density were evaluated by visual inspection. A portrait image containing the gray gradation was used for evaluation, and was compared according to the following criteria. In the following experiments, this evaluation image will be used to evaluate the unevenness of density. The results are shown in the following five grades. This applies to the evaluation of the subsequent experiments:

Excellent: Extremely good image quality completely free of any unevenness of density
Good: Very good image quality despite slight unevenness of density of high-frequency component partially observable
Passable: Good image quality despite unevenness of density of high-frequency component slightly observable
Bad: Poor image quality with unevenness of density observable
Very bad: Deteriorated image quality with unevenness of density clearly observable

In the portion of approximately uniform density in the evaluation image, density data of about 500 pixels were measured for density R to get the value $3\sigma_R/\mu_R$ (%) obtained by dividing the value equivalent to three times the standard deviation $\sigma_R$ of the density R data, by the average value $\mu_R$ of the density R data. This value is used as an indicator for unevenness of density to show the variation of the density data.

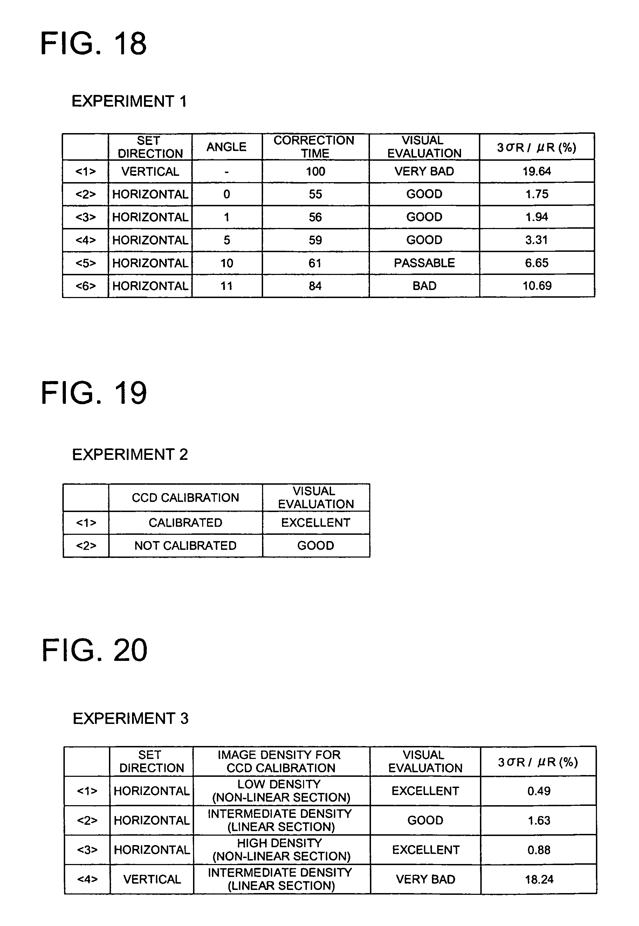

Fig. 18 shows the result of evaluation in Experiment 1. The correction time was shown in terms of the percentage based on the case <1> when set in the vertical direction. <2> When the angle formed by the direction where recording elements were arranged with respect to the correction image and the direction where CCDs were arranged was set to 0 degree (horizontal direction), the scan area was smaller than <1> when set in the vertical direction, with the result that correction time was reduced to about 55%. The correction time exhibited an increase with the angle formed by the direction where recording elements were arranged with respect to the correction image and the direction where CCDs were arranged (<3> through <6>). Comparison was made between the cases <5> when the angle formed by the direction where recording elements were arranged with respect to the correction image and the direction where CCDs were arranged was 10, and <6> when the angle formed by the direction where recording elements were arranged with respect to the correction image and the direction where CCDs are arranged was set to 11 degrees. This comparison shows that the difference in correction time is 23% with reference to the value when set in the vertical direction. This indicates that it is preferred that the angle formed by the direction where recording elements are arranged with respect to the correction image and the direction where CCDs are arranged should not exceed 10 degrees.

In the visual evaluation of the unevenness of density, <1> when set in the vertical direction, the image showed a deteriorated quality with unevenness of density clearly observable (Very bad). When set in the horizontal direction in <2> through <4> (at angles of 0, 1 and 5 deg.), the image showed very good quality despite slight unevenness of density of high-frequency component partially observable (Good). <5> When the angle formed by the direction where recording elements were arranged with respect to the correction image and the direction where CCDs were arranged was set to 10 degrees, the image showed good quality despite unevenness of density of high-frequency component slightly observable (Passable). <6> When the angle formed by the direction where recording elements were arranged with respect to the correction image and the direction where CCDs were arranged was set to 11 degrees, the image showed poor quality with unevenness of density observable (Bad).

Fig. 18 shows the numerical evaluation $3\sigma_R/\mu_R$ (%) of unevenness of density. This value is represented in percentage based on the $\mu_R$ of $3\sigma_R$. The variation of data was the greatest when set in the vertical direction. When set in the horizontal direction, the correction time exhibited an increase with the angle formed by the direction where recording elements were arranged with respect to the correction image and the direction where CCDs were arranged.

As shown in Experiment 1, when the direction where recording elements were arranged with respect to the correction image was made the same as the direction where CCDs were arranged, the scan range of the flat bed scanner 70 was reduced, and the variation in the CCD transfer could be kept at a comparatively low level. Further, the tolerance to the inclination of the correction image was improved and correction time was reduced. This had led to quick and high-precision correction of the variations of recording elements, and efficient reduction of unevenness of density.

(Experiment 2)

In Experiment 2, with attention paid to the unevenness of density, especially unevenness of density of high-frequency components, visual evaluation (portrait image including gray gradation) was conducted based on the same evaluation criteria as those in Experiment 1, in two cases; <1> when the CCD of the flat bed scanner 70 is calibrated and <2) when not calibrated. Setting was made in such a way that the angle formed by the direction where recording elements were arranged with respect to the correction image and the direction where CCDs were arranged was 0 degree.

Fig. 19 shows the results of evaluation in Experiment 2. In the visual evaluation of unevenness of density, the image showed extremely good quality completely free of any unevenness of density (Excellent) <1> when the CCD of the flat bed scanner 70 is calibrated. The image exhibited very good quality despite slight unevenness of density of high-frequency component partially observable (Good) <2> when not calibrated.

Further, unevenness of density were effectively improved by calibration of the CCD in the non-exposure section of correction image.

As shown in the result of Experiment 2, accuracy of feedback to the recording element of the print head was improved and unevenness of density of high-frequency components were reduced by calibration of the CCD and reduction of the variation in individual light receiving sensitivities.

Calibration of the CCD in the non-exposure section of correction image permits the CCD to be calibrated in the same state as that in scanning the portion to be used for calculation of calibration. This allows the variations of the recording elements of the print head to be corrected based on the correct understanding of the CCD variations, with the result that correction precision is improved.

(Experiment 3)

In Experiment 3, comparison was made among the following four densities of the image used for calibrated of the CCD of the flat bed scanner 70:

<1> low density (non-linear portion: portion b of Fig. 11);
<2> intermediate density (linear portion: portion c of Fig. 11);
<3> high density (non-linear portion: portion d of Fig. 11); and
<4> intermediate density in vertical setting.

Visual evaluation (portrait image including gray gradation) was conducted on the unevenness of density after correction. Setting was made in such a way that the angle formed by the direction where recording elements were arranged with respect to the correction image and the direction where CCDs were arranged was 0 degree.

In the portion of approximately uniform density in the evaluation image, density data of about 1000 pixels was measured for density R to get the value $3\sigma_R/\mu_R$ (%) obtained by dividing the value equivalent to three times the standard deviation $\sigma_R$ of the density R data, by the average value $\mu_R$ of the density R data.

Fig. 20 shows the evaluation image in Experiment 3. In the visual evaluation of the unevenness of density, the image exhibited extremely good quality completely free of any unevenness of density (Excellent) when the image of <1> low density (non-linear section) was set in the horizontal direction, and the image of <3> high density (non-linear section) was set in the horizontal direction. When the image of <2> intermediate density (linear section) was set in the horizontal direction, the image exhibited very good quality despite slight unevenness of density of high-frequency component partially observable (Good). When the image of <4> intermediate density in vertical setting was set in the vertical direction, the image showed deteriorated quality with unevenness of density clearly observable (Very bad) .

In the numerical evaluation $3\sigma_R/\mu_R$ (%) of unevenness of density, the variation of data was smaller when the image of <3> high density (non-linear section) or <1> low density (non-linear section) was used than when the image of intermediate density was used. The greatest variation of density data was observed when in the case of <4> vertical setting.

As shown in the result of Experiment 3, the variation of density caused by the variation in the amount of exposure of the recording element could be reduced by performing calibration using the non-linear section of the characteristic curve in the photosensitive material i.e. the portion exhibiting a shift to soft gradation,

This led to improved precision in the calibration of CCD variations and high-precision reduction of unevenness of density.

(Experiment 4)

In Experiment 4, using the image forming apparatus 10 that had not been processing for one week, dust and contamination were made to be attached to the outputted correction image and the recording elements were corrected. The density data used for correction was selected and the percentage of use for correction of density data was changed as follows:<1> 100% (no selection), <2> 96%, <3> 95%, <4> 90%, <5> 80%, <6> 30%, <7> 20%, <8> 10% and <9> 9%. Correction was made for each of them. Visual evaluation (portrait image including gray gradation) was conducted on the unevenness of density after correction.

The density data to be used was selected as follows: The maximum value and/or minimum density data items were excluded from a plurality of density data items with respect to each recording element until the percentage of each condition was reached. Setting was made in such a way that the angle formed by the direction where recording elements were arranged with respect to the correction image and the direction where CCDs were arranged was 0 degree.

In the portion of approximately uniform density in the evaluation image, density data of about 1000 pixels were measured for density G to get the value $3\sigma_G/\mu_G$ (%) obtained by dividing the value equivalent to three times the standard deviation $\sigma_G$ of the density G data, by the average value $\mu_G$ of the density G data.

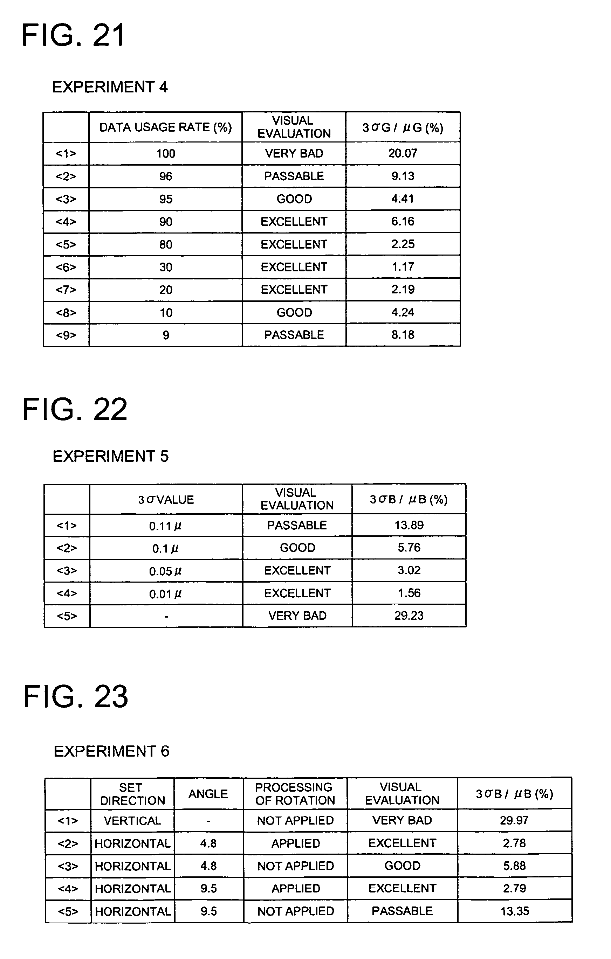

Fig. 21 shows the result of evaluation in Experiment 4. In the visual evaluation of unevenness of density, <1> when density data usage rate was 100%, the image exhibited deteriorated quality with unevenness of density clearly observable (Very bad). <2> When density data usage rate was 96%, the image exhibited good quality despite unevenness of density of high-frequency component slightly observable (Passable). <3> When density data usage rate was 95%, the image exhibited very good quality despite slight unevenness of density of high-frequency component partially observable (Good). When density data usage rates were <4> 90%, <5> 80%, <6> 30% and <7> 20%, the image exhibited extremely good quality completely free of any unevenness of density (Excellent). <8> When density data usage rate was 10%, the image exhibited very good quality despite slight unevenness of density of high-frequency component partially observable (Good). <9> when density data usage rate was 9%, the image exhibited good quality despite unevenness of density of high-frequency component slightly observable (Passable).

In the numerical evaluation ($3\sigma_G/\mu_G$ (%)) of unevenness of density, when the density data usage rate was 100%, the variation of G density data of the evaluation image was the greatest. When the density data usage rate was reduced in the order of <2> 96%, <3> 95%, <4> 90% and <5> 80%, the variation of the G density data was reduced. In the Experiment 5, the variation was the smallest <6> when the density data usage rate was 30%. If the amount of the data to be used was reduced too much, correction precision was deteriorated. Thus, the variation of the G density data was increased as the density data usage rate was reduced in the order of <7> 20%, <8> 10% and <9> 9%.

As shown in the results of Experiment 4, the amount of correction is obtained based on the data selected from a plurality of density data obtained from the correction image, whereby faulty data resulting from the dust, soil and contamination of the photosensitive material can be eliminated. This arrangement improves the tolerance to the faulty data that may cause deterioration of correction precision and brings about excellent results of high-precision correction, and hence, reduced unevenness of density.

The maximum value and/or minimum density data items were excluded from a plurality of density data items with respect to each recording element, 95% or less of the density data was used. Thus, high-precision correction results and reduced unevenness of density could be ensured due to an increased number of data items to be excluded.

(Experiment 5)

In Experiment 5, using the image forming apparatus 10 that had not been processing for one week, dust and contamination were made to be attached to the outputted correction image and the recording elements were corrected, similarly to Experiment 4. The density data used for correction was selected in such a way that 3 σ would be <1> 0.11 μ, <2> 0.1 μ, <3> 0.05 μ, and <4> 0.01 μ, where the standard deviation of the recording element subsequent to selection was σ and the average value was μ. Correction was carried out based on the selected data, and the unevenness of density subsequent to correction were visually evaluated (portrait image including the gray gradation). For the sake of comparison, evaluation was also made of <5> the case where density data was not selected.

The density data to be used was selected as follows: The maximum value and/or minimum density data items were excluded from a plurality of density data items with respect to each recording element until the percentage of each condition was reached. Setting was made in such a way that the angle formed by the direction where recording elements were arranged with respect to the correction image and the direction where CCDs were arranged was 0 degree.

In the portion having an approximately uniform density in the evaluation image, the density data equivalent to 500 pixels was measured for density B to get the value $3\sigma_B/\mu_B$ (%) obtained by dividing the value equivalent to three times the standard deviation $\sigma_B$ of the density B data, by the average value $\mu_B$ of the density B data.

Fig. 22 shows the result of evaluation in Experiment 5. In the visual evaluation of the unevenness of density, the image exhibited deteriorated quality with unevenness of density clearly observable (Very bad), <5> when density data was not selected. When value 3σ was <1> 0.11 μ, unevenness of density of high-frequency component was slightly observable (Passable). When value 3σ was <2> 0.1 μ, slight unevenness of density of high-frequency component were partially observable (Good). When value 3σ was <3> 0.05 μ, the image exhibited extremely good quality completely free of any unevenness of density (Excellent).

In the numerical evaluation ($3\sigma_B/\mu_B$ (%) ) of unevenness of density, <5> when density data was not selected, there was a big variation in the density B data of the evaluation image. The variation of the density B data of the evaluation image was reduced with 3σ/μ of the density data subsequent to selection. Especially when 3σ value was <1> 0.11 μ, $3\sigma_B/\mu_B$ (%) was 13.89. By contrast, when 3σ value was <2> 0.1 μ, $3\sigma_B/\mu_B$ (%) was 5.76, showing a substantial reduction in the variation of density B data.

As shown by the result of Experiment 5, correction was calculated using the density data of smaller variation having 3σ value of 0.1 μ or less, thereby getting high-precision correction results.

(Experiment 6)

In Experiment 6, unevenness of density subsequent to correction (portrait image including the gray gradation) were visually evaluated by changing conditions according to the angle of the array-shaped print head in the direction where the CCDs were arranged when the outputted correction image was mounted on the flat bed scanner 70, and according to whether processing of rotation using the affine transformation is applied or not at the time of correction. In this case, the angle of rotation in the processing of rotation was obtained by working out the inclination angle using the inclination determination markers 5a and 5b.

Evaluation was made:

<1> when the direction where recording elements were arranged with respect to the correction image was set vertical to the direction where CCDs were arranged (vertical direction) and processing of rotation was not applied;

<2> when the angle formed by the direction where recording elements were arranged with respect to the correction image and the direction where CCDs were arranged was set to 4.8 degree (horizontal direction) and processing of rotation was applied;

<3> when the angle formed by the direction where recording elements were arranged with respect to the correction image and the direction where CCDs were arranged was set to 4.8 degree (horizontal direction) and processing of rotation was not applied;

<4> when the angle formed by the direction where recording elements were arranged with respect to the correction image and the direction where CCDs were arranged was set to 9.5 degrees (horizontal direction) and processing of rotation was applied; and

<5> when the angle formed by the direction where recording elements were arranged with respect to the correction image and the direction where CCDs were arranged was set to 9.5 degrees (horizontal direction) and processing of rotation was not applied.

In the portion having an approximately uniform density in the evaluation image, the density data equivalent to approximately 1000 pixels was measured for density B to get the value $3\sigma_B/\mu_B$ (%) obtained by dividing the value equivalent to three times the standard deviation $\sigma_B$ of the density B data, by the average value $\mu_B$ of the density B data.

Fig. 23 shows the result of evaluation in Experiment 6. In the visual evaluation of the unevenness of density, the image exhibited deteriorated quality with unevenness of density clearly observable (Very bad) <1> when the correction image was set in the vertical direction and processing of rotation was not applied. When the correction image is set in the horizontal direction and processing of rotation was not applied, slight unevenness of density of high-frequency component were partially observable (Good) if the set angle was <3> 4.8, and unevenness of density of high-frequency component were slightly observable (Passable) if the set angle was <5> 9.5. When the correction image is set in the horizontal direction and processing of rotation was applied, the image exhibited extremely good quality completely free of any unevenness of density (Excellent) if the set angle was <2> 4.8 and <4> 9.5.

In the numerical evaluation ($3\sigma_B/\mu_B$ (%)) of unevenness of density, when the correction image was set in the horizontal direction and processing of rotation was applied, the variation in the density B data of the evaluation image was small if the set angle was <2> 4.8 and <4> 9.5.

As shown by the result of Experiment 6, when application of rotation was applied to the image information obtained from the correction image, it was possible to accurately identify the image density corresponding to each recording element and to improve precision in the correction of unevenness of density. Further, the inclination angle is identified by using the inclination determination markers 5a and 5b. This arrangement ensures easy determination of the angle where processing of rotation is applied, and permits easy calculation of correction using a simple apparatus.

(Experiment 7)

In Experiment 7, the effect of a pushing member was evaluated when the correction image was read by the flat bed scanner 70. A black rubber characterized by low static build-up and approximately uniform density was used as the pushing member. The chart was held and set in position by the black rubber when the correction image was read.

Use of the pushing member allows the image edge to be evaluated with high accuracy, and prevents paper from getting loose and bent, with the result that the unevenness of density of low-frequency components can be reduced and correction precision was improved.

(Experiment 8)

In Experiment 8, the ratio between the number of lines used for correction image and that used in the measurement of density was changed under the conditions shown in Fig. 10, thereby finding the number of corrections required until there was no unevenness of density in visual evaluation. Then an evaluation was made of the unevenness of density subsequent to correction. Setting was made in such a way that the angle formed by the direction where recording elements were arranged with respect to the correction image and the direction where CCDs were arranged was 0 degree.

Fig. 10 shows the result of Experiment 8. As shown in Fig. 10, the same effect as that in Experiment 5 on the first embodiment was obtained in Experiment 8.

It should be noted that description in the aforementioned embodiment refers to a preferred example of an image forming apparatus according to the present invention, without being restricted thereto. The detailed configurations and operations of each component of the image forming apparatus in the aforementioned embodiment can be modified as needed, without departing from the spirit of the invention.

For example, the print head with recording element placed in an array form can be of any type as long as it is configured in such a way that a plurality of recording elements are arranged in a predetermined interval in one row or a plurality of rows in order to get a predetermined resolution. Preferred examples of the print head placed in an array include a printer head where LED light emitting devices or vacuum fluorescent tubes are arranged, a PLZT print head using an appropriate backlight, an optical shutter array such as a liquid crystal shutter array print head, a semiconductors placed in an array form, a thermal head, and a light emitting device based on electroluminance phenomenon such as an organic EL material.

Preferred image forming apparatuses include the one capable of recording on the silver halide photosensitive material using various recording element arrays, and the one for recording with a thermal head using sublimation ink.

In the aforementioned embodiment, the CCD was calibrated using the chart 3 recording the correction image for correcting the recording element. It is also possible to make such arrangements that a special-purpose image for calibrating the CCD is outputted to calibrate the CCD. In this case, however, there is slight variation in the light receiving sensitivity of the array-shaped print head CCD, depending on various conditions such as the time elapsed after the flat bed scanner 70 has been energized, or the frequency of use. So it is preferred that correction image be read shortly after calibration of the CCD.

In the aforementioned embodiment, the description was based on inclination determination markers 5a and 5b provided at two positions. A greater number of inclination determination markers can be provided.

In the aforementioned embodiment, the density data of each color of RGB was used as the readout information obtained from the image, but the readout information is not restricted thereto. It can be information on reflection factor, transmittance coefficient or light absorption coefficient. Alternatively, it can be a function value corresponding to these.

The following describes a third embodiment. The schematic configuration of the image forming apparatus as the third embodiment is the same as that of the first and second embodiments shown in Figs. 1 through 3. To conform to the third embodiment, the schematic configuration will be described below:

As shown in Fig. 1, the image forming apparatus 10 in the third embodiment contains a support drum 1, a red print head 30a, a green print head 30b, a blue print head 30c, print head controller 40, correction processor 60, flat bed scanner 70, etc.

The development paper for color photograph as silver halide photosensitive material is transferred out of the roll of the support drum 1 by the drive source (not illustrated), in the arrow-marked direction. Then the red print head 30a, green print head 30b and blue print head 30c sequentially expose light to a predetermined position of the development paper 2, based on the exposure control in response to the image information to be outputted by the print head controller 40. A latent color image is formed on the development paper 2. Upon termination of this exposure process, the development paper 2 is transferred to the development process by means of the support drum 1.

The red print head 30a, green print head 30b and blue print head 30c have a light source as recording elements arranged in one or more than one array. An LED (Light-Emitting Diode) light source is used as the red print head 30a. The green print head 30b and blue print head 30c are composed of vacuum fluorescent print heads characterized by comparatively high brightness and quick response and capable of easy color decomposition by use of a color filter. The development paper 2 need not be roll paper; it can be a cut sheet. The development paper 2 can be transferred by any method.

As shown in Fig. 3, the red print head 30a comprises a shift register 31, latch circuit 32, driver circuit 33, recording element array 34, SELFOC lens array 35, etc. This composition also applies to the green print head 30b and blue print head 30c.

In the red print head 30a (as well as green print head 30b and blue print head 30c), the MSB (Most Significant Bit) data is sent to the shift register 31 as image bit data for one line from the print head controller 40. When the set pulse signal is inputted into the latch circuit 32 from the print head controller 40, the MSB data synchronized with the set pulse signal is latched to the latch circuit 32, where the data for one line is collectively latched. The image bit data refers to the specific bit data of the output image information.

The enable signal in conformity to gradation is inputted into the driver circuit 33 from the print head controller 40, the red print head 30a provides drive control in response to the enable signal, and light is emitted in response to the MSB data latched to the latch circuit 32. To be more specific, the driver circuit 33 sends the drive signal to the device, having the latched data of "1", of the recording element array 34 on a selective basis so that light is emitted for the time range of the enable signal. Light is applied onto the development paper 2 through a SELFOC lens array 35 to form a latent image thereon. This processing is applied to all bits successively from the MSB to the LSB (Least Significant Bit), thereby completing recording of one line. There is no restriction to the order of the bit; processing may be started from LSB or some other order may be used.

When 8-bit image information is inputted for each of the red, green and blue colors, the print head controller 40 converts the input image information into the 12-bit output image information according to the output value conversion table LUT including the information on the amount of exposure. In this case, the output image information corresponds to one-line serial digital data for each recording element. The set pulse signal for sending the image bit data to the latch circuit 32 and the enable data for controlling the light emitting time are generated, and these image bit data, set pulse signal and enable signal are outputted to each of the red print head 30a, green print head 30b and blue print head 30c.

The print head controller 40 controls the enable signal, based on the light amount correction coefficient for correcting the light emission characteristics of the red print head 30a, green print head 30b and blue print head 30c, inputted from the correction processor 60, and adjusts the light emission characteristics of the red print head 30a, green print head 30b and blue print head 30c.

The VFPH having the light emission characteristics for the green and blue components is provided with green/blue color decomposition filters (not illustrated) on the lower portion of the SELFOC lens array 35. The print head controller 40 provides recording control by sequentially shifting the exposure timing of the red print head 30a, green print head 30b and blue print head 30c so that the image information sent for each color is recorded at a predetermined position of the development paper 2. This arrangement allows color images to be recorded properly on the development paper 2.

The correction processor 60 calculates the light amount correction coefficient for correcting the light emission characteristics of the red print head 30a, green print head 30b and blue print head 30c, from the density information, and outputs the result to the print head controller 40.

The following describes the correction image 2a used in the present embodiment. The correction image 2a is recorded on the development paper 2 by the image forming apparatus 10, and is used to calculate the light amount correction coefficient and the amount of correction for amount of exposure.

It is possible to make such arrangements that correction images 2a are separately recorded by each of the red print head 30a, green print head 30b and blue print head 30c, as shown in Fig. 7, and the dye for each of the fundamental colors YMC develops its color. It is also possible to make such arrangements that, as shown in Fig. 4(a), the images are simultaneously recorded by the red print head 30a, green print head 30b and blue print head 30c, and the dye for each fundamental color develops its color at one and the same place.

As shown in Fig. 4(a), in order to identify the density corresponding to each recording element of the red print head 30a, green print head 30b and blue print head 30c, it is preferred that there be a clear definition of the order of arrangement of the recording elements of each of the red print head 30a, green print head 30b and blue print head 30c, and that correction image 2a have marker steps be provided to allow individual identification of each recording element.

To meet the aforementioned purpose of use, the interval of the markers of the aforementioned maker steps is preferred to be smaller. For example, the interval of five pixels or less is preferable, and the one-pixel interval is the most preferable. The interval of one pixel signifies repetition of ON/OFF operations.

Since there may be concern about some error in the precision of installing the red print head 30a, green print head 30b and blue print head 30c, it is preferred that the correction image 2a have a marker step for each of the red print head 30a, green print head 30b and blue print head 30c. When each of the fundamental colors has developed its color at one and the same place, as shown specifically in Fig. 4(b), it is preferred that the correction image 2a be provided with a marker step for each fundamental color, i.e. for each of the red print head 30a, green print head 30b and blue print head 30c.

In Fig. 4(a), the marker steps are located at one position alone, but can be located at multiple positions. Especially when recording is provided at multiple positions, the marker step is preferred to be provided close to the recorded position, and markers are preferred to be provided at multiple positions. They are preferred to be located between recorded positions.

When the correction image 2a has multiple marker steps, it is preferred that the multiple marker steps be recorded (i.e. printed) by the same recording element.

When the correction image 2a is recorded on the development paper 2 of a cut sheet - not a roll paper, correction image 2a is preferred to be recorded at the central position of the development paper 2. The leading side is preferred to have a portion where an image is not recorded.

For the correction image 2a, when each of the fundamental colors YMC is separately recorded on the development paper 2 by each of the red print head 30a, green print head 30b and blue print head 30c, it is preferred, from the viewpoint of effective development, that the development paper 2 be sent to the development processor so that the portion made up of the yellow dye is processed in the final step.

For correction image 2a, it is preferred that a plurality of image data items be recorded in a plurality of different areas with respect to development paper 2. It is preferred from the viewpoint of simplification of calculation procedure that recording be provided in the order running from the image data recorded at a lower density to the image data recorded at a higher density. From the viewpoint of development, the development paper 2 is preferred to be transferred to the development processor to ensure that the portion recorded at a lower density is processed earlier.

The following describes the operation:

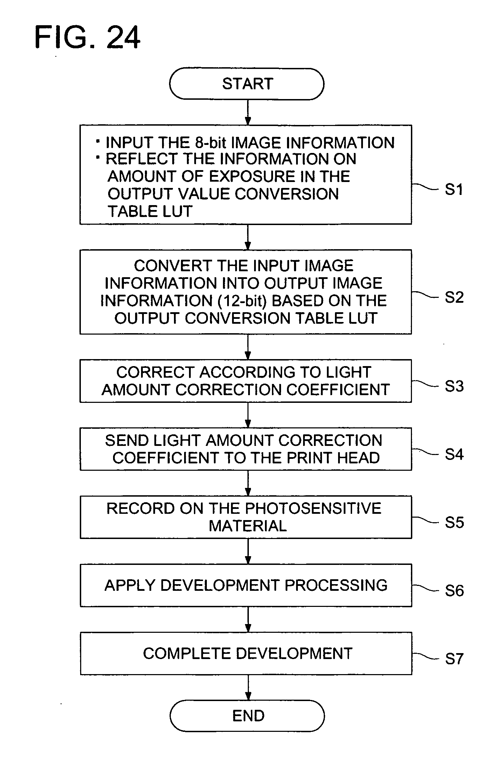

Referring to the flowchart given in Fig. 24, processing of image formation by the image forming apparatus 100 will be described.

When 8-bit image information is inputted for each of the red, green and blue colors, the print head controller 40 converts the input image information into the 12-bit output image information according to the output value conversion table LUT including the information on the amount of exposure (Step S2).

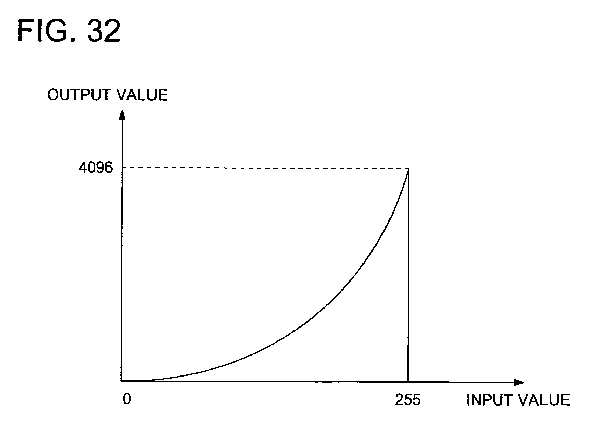

Fig. 32 shows an example of the output value conversion table LUT table used in the present embodiment. This output value conversion table LUT shows that correlation between the input and output values is non-linear.

The print head controller 40 controls the enable signal, based on the light amount correction coefficient for correcting the light emission characteristics of the red print head 30a, green print head 30b and blue print head 30c, inputted from the correction processor 60, and adjusts the light emission characteristics of the red print head 30a, green print head 30b and blue print head 30c (Step S3).

Then the print head controller 40 sends the aforementioned output image information for each color to each of the red print head 30a, green print head 30b and blue print head 30c (Step S4), and records it on the development paper 2 (Step S5).

Then development processing is applied to the development paper 2 with the output image recorded thereon (Step S6). Upon completion of the development (Step S7), the processing of image formation terminates (Step S7).

The following describes the Experiment 1 through Experiment 9 conducted using the image forming apparatus 10 for constituting the above: In Experiment 1 through Experiment 4, the correction image 2a shown in Fig. 7 is used. The correction image 2a shown in Fig. 4(a) and Fig. 4(b) is used in Experiments 5 through Experiment 9.

(Experiment 1)

Experiment 1 will be described first. In Experiment 1, comparison was made between the following two cases regarding the visual evaluation of the portrait image containing <1> required time and <2> gray gradation:

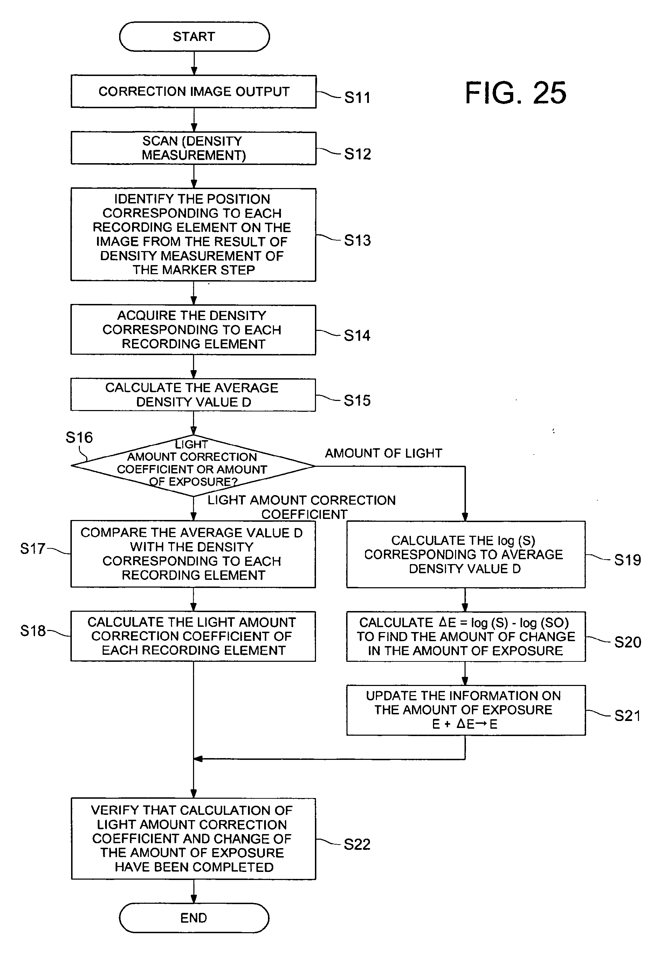

Case 1: One correction image 2a is outputted, and correction of unevenness of density (i. e. calculation of light amount correction coefficient) and setup (i. e. change of information on the amount of exposure) were both carried out based on the correction image 2a. In this case, either the one shown in Fig. 7 or Experiment 4 may be used as the correction image 2a. In the present embodiment, the one shown in Fig. 7 was used. In this case, the correction of the unevenness of density and setup were carried out by the correction processor 60 according to the flowchart given in Fig. 25.

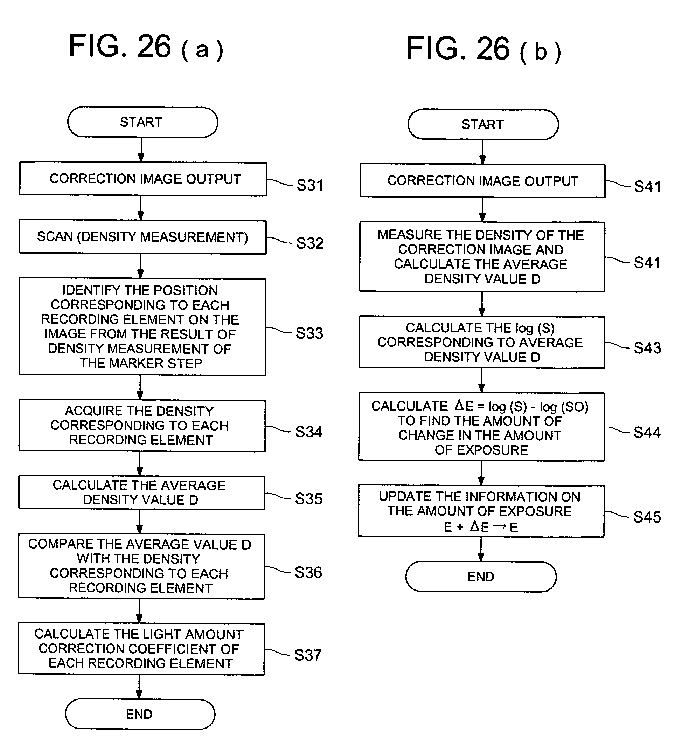

Case 2: Different correction images 2a between the correction of the unevenness of density and setup were outputted. I this case, the correction of the unevenness of density and setup were carried out by the correction processor 60 according to the flowchart given in Fig. 26(a). Setup was carried out by the correction processor 60 according to the flowchart given in Fig. 26(b).

The following describes the flowcharts of Fig. 25, and Fig. 26(a) and Fig. 26(b): This processing is processed by the correction processor 60 for each of the red print head 30a, green print head 30b and blue print head 30c.

Processing of the flowchart given in Fig. 25 will be described first.

The correction processor 60 outputs the correction image 2a as shown in Fig. 7 or Fig. 4(a), for example.

Then when the correction image 2a outputted in the processing of Step S11 has been scanned by the flat bed scanner 70, and the image information gained by this scanning operation has been inputted (Step S12), the correction processor 60 identifies the position of each recording element on the correction image 2a, from this inputted image information, based on the image information related to the marker step of the correction image 2a (Step S13).

After that, the correction processor 60 acquires the density corresponding to each recording element (Step S14), and works out the average value D of each density (Step S15).

Then the correction processor 60 performs calculation of the light amount correction coefficient and change of amount of exposure, in parallel (Step S16).

The calculation of light amount correction coefficient will be described first.

The correction processor 60 makes comparison between the aforementioned average density value D and the density corresponding to each recording element (Step S17), and calculates the light amount correction coefficient for each recording element (Step S18).

The change of the amount of exposure will be described below:

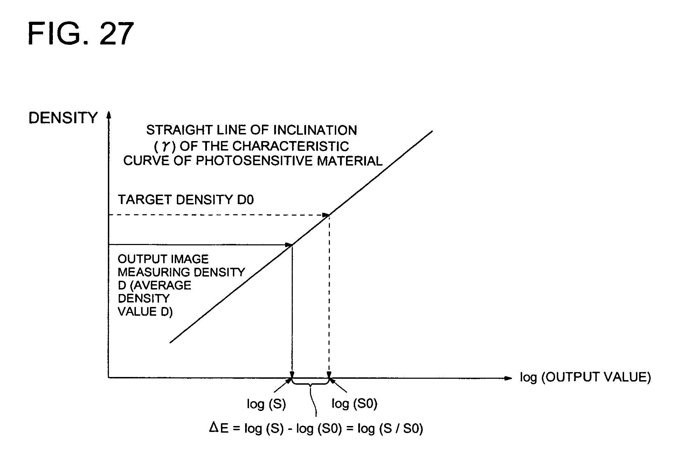

The correction processor 60 calculates the log (S) corresponding to the average density value D, based on the straight line of the inclination ($\gamma$) of the characteristic curve of the photosensitive material as shown in Fig. 27 (Step S19). Further, the correction processor 60 calculates the amount of change $\Delta E$ in the amount of exposure, from the log (SO) corresponding to the target density $D_o$ prepared in advance, according to the mathematical expression, $\Delta E$ = log (S) - log (SO) (Step S20).

In this case, "log (output value)" on the horizontal axis of the graph given in Fig. 27 is a logarithmic expression of the output value of the output image information converted by the output conversion table LUT. The "density" on the vertical scale is the density information of the output image. The output conversion table LUT used in this case is the one where correlation between the input value and output value is non-linear.

The inclination ($\gamma$) of the characteristic curve of the photosensitive material shown in Fig. 27 is known in advance according to the type of the photosensitive material.

Then the correction processor 60 adds the aforementioned correction $\Delta E$ to the currently set amount of exposure E to update the information on the amount of exposure (i. e. E + $\Delta E \rightarrow E_o$) (Step S21).

The correction processor 60 verifies that calculation of light amount correction coefficient and change of the amount of exposure have been completed (Step S22), and terminates this processing.

The following describes the processing shown in the flowchart of Fig. 26(a): This processing is in charge of merely calculating the light amount correction coefficient.

The correction processor 60 outputs, for example, correction image 2a, as shown in Fig. 7 and Fig. 4(a) (Step S31).

Then when the correction image 2a outputted in the processing of Step S31 has been scanned by the flat bed scanner 70 and the image information gained by this scanning has been inputted (Step S32), the correction processor 60 identifies the position of each recording element on the correction image 2a, from this inputted image information, based on the image information related to the marker step of the correction image 2a (Step S33).

After that, the correction processor 60 acquires the density corresponding to each recording element (Step S34), and works out the average value D of each density (Step S35).

The correction processor 60 makes comparison between the aforementioned average density value D and the density corresponding to each recording element (Step S36), and calculates the light amount correction coefficient for each recording element (Step S37). The processing by this flowchart is now complete.

The following describes the flowchart shown in Fig. 26(b). This processing is in charge of only updating of the amount of exposure.

The correction processor 60 outputs the filled-in images of gray color for bit map recorded in terms of output value SO of the output image information corresponding to each print head (Step S41).

Then when the filled-in images of gray color for bit map outputted in the processing of Step S31 has been scanned by the flat bed scanner 70, and the image information gained by this scanning operation has been inputted, the correction processor 60 identifies the position of each recording element on the correction image 2a, from this inputted image information, based on the image information related to the marker step of the correction image 2a.

After that, the correction processor 60 acquires the density corresponding to each recording element, and works out the average value D of each density (Step S42).

The correction processor 60 calculates the log (S) corresponding to the average density value D, based on the straight line of the inclination ($\gamma$) of the characteristic curve of the photosensitive material as shown in Fig. 32 (Step S43). Further, the correction processor 60 calculates the amount of change $\Delta E$ in the amount of exposure E, from the log (SO) corresponding to the target density $D_o$ prepared in advance, according to the mathematical expression, $\Delta E$ = log (S) - log (SO) (Step S44).

Then the correction processor 60 adds the aforementioned correction $\Delta E$ to the currently set amount of exposure E to update the information on the amount of exposure (i. e. $E + \Delta E \rightarrow E_o$) (Step S45), thereby terminating this processing shown in this flowchart.

According to the result of Experiment 1, the required time was reduced approximately 75% in Case 1 as compared to that in Case 2. Further, the output image in Case 1 was excellent.

When information on amount of exposure is obtained according to the statistic amount, it has been shown that the required time is further reduced approximately 70% in Case 1.

(Experiment 2)

The following describes the Experiment 2: Experiment 2 was conducted in the following two cases:

Case 1: The processing in Case 1 of Experiment 1 is repeated in sequence and the light amount correction coefficient obtained in the finally stage is evaluated. In this case, the light amount correction coefficient and amount of exposure are worked out as mutually independently correction amounts.

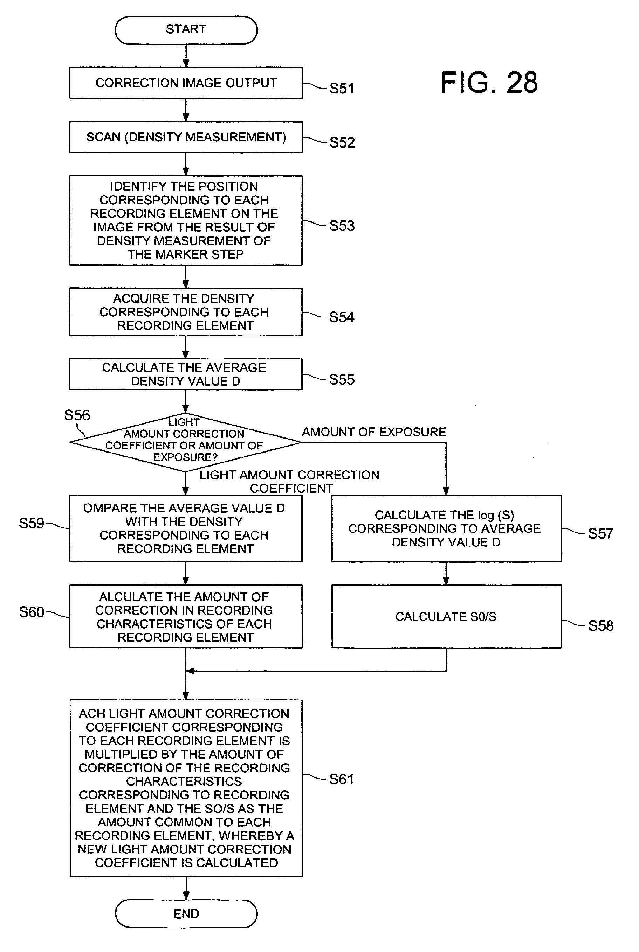

Case 2: Processing in conformity to the flowchart of Fig. 28 is repeated, and correction coefficient obtained in the finally stage is evaluated. In this case, the light amount correction coefficient alone is worked out, without the amount of exposure being changed. In this case, the light amount correction coefficient depends on the amount of exposure.

The light amount correction coefficient used in this Experiment is the numerical figure ranging from 0 through 4095. The image used in Experiment 2 is corrected using the correction image 2a shown in Fig. 7, where information on amount of exposure is adequately adjusted to get lower density.

The following describes the processing shown in the flowchart of Fig. 28: This processing is performed by the correction processor 60 for each of the red print head 30a, green print head 30b and blue print head 30c.

The correction processor 60 outputs the correction image 2a as shown in Fig. 7 or Fig. 4(a), for example (Step S51).

When the correction image 2a outputted in the processing of Step S51 has been scanned by the flat bed scanner 70, and the image information gained by this scanning operation has been inputted (Step S52), the correction processor 60 identifies the position of each recording element (e.g. i-th recording element is called recording element (i)) on the correction image 2a, from this inputted image information, based on the image information related to the marker step of the correction image 2a (Step S53).

After that, the correction processor 60 acquires the density corresponding to each recording element (i) (Step S54), and works out the average value D of each density (Step S55) .

Then the correction processor 60 performs calculation of the light amount correction coefficient C (i) corresponding to each recording element (i) and processing related to the amount of exposure, in parallel (Step S56).

The following describes the processing related to the amount of exposure:

The correction processor 60 calculates the log (S) corresponding to the average density value D, based on the straight line of the inclination (γ) of the characteristic curve of the photosensitive material as shown in Fig. 32 (Step S57). Further, the correction processor 60 calculates SO/S related to the amount of exposure, from the log (SO) corresponding to the target density Do prepared in advance (Step S58).

The following describes the calculation of the light amount correction coefficient C (i).

The correction processor 60 makes comparison between the aforementioned average density value D and the density corresponding to each recording element (Step S59), and calculates amount of correction of the recording characteristics corresponding to recording element (i) (Step S60).

Then the correction processor 60 multiplies the light amount correction coefficient C (i) corresponding to each currently set recording element (i), by the amount of correction of the recording characteristics corresponding to recording element (i) and the aforementioned SO/S as the amount common to each recording element (i), whereby a new light amount correction coefficient C (i) is calculated (Step S61). The processing by this flowchart is now complete.

According to the result of Experiment 2, the average of the light amount correction coefficient finally obtained in Case 1 is 2050, and the average of the light amount correction coefficient finally obtained in Case 2 is 4000. Thus, when the light amount correction coefficient is too large or too small, correction of the unevenness of density is insufficient in Case 2. It is preferred that light amount correction coefficient and information on amount of exposure have the functions independently of each other.

(Experiment 3)

Experiment 3 will be described: In Experiment 3, the same procedures as those in the Case 1 in Experiment 1 were taken when the density of the correction image 2a outputted in the processing of Step S11 of the flowchart in Fig. 25 was:

<1> low (non-linear section shown by symbols a and b in Fig. 17(a) and Fig. 17(b));
<2> intermediate (linear section shown by symbol c in Fig. 17(a) and Fig. 17(b)); and
<3> high (non-linear section shown by symbol d).

According to the result of Experiment 3, precision in correction of unevenness of density and setup were slightly reduced except in the case of <2>.

(Experiment 4)

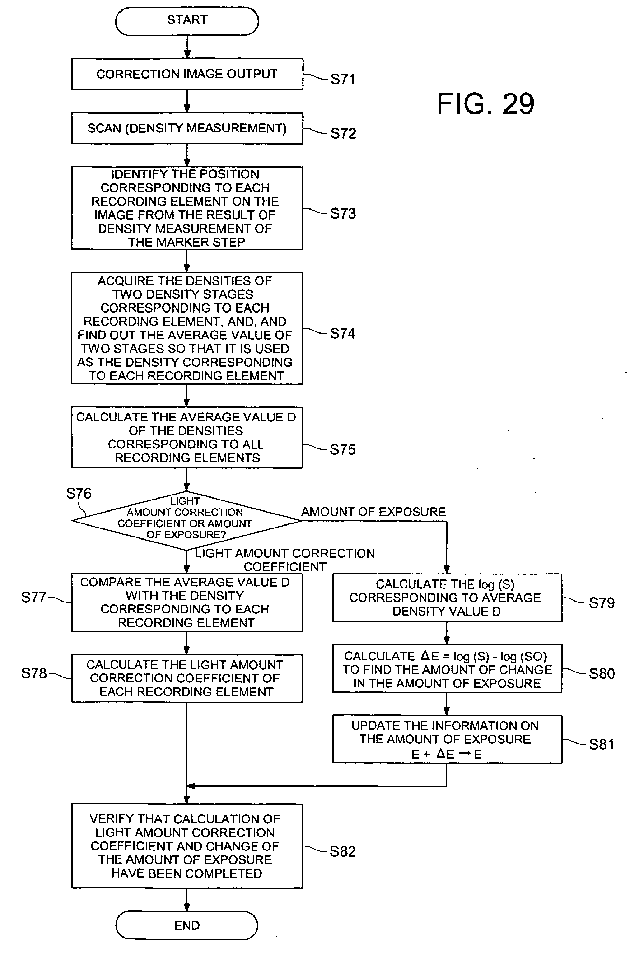

The following describes Experiment 4: In Experiment 4, correction of unevenness of density and setup are both carried out based in the image recorded in two areas with respect to the correction image 2a. In this case, correction of unevenness of density and setup are performed by the correction processor 60 according to the flowchart of Fig. 29.

The following describes the processing shown in the flowchart of Fig. 29: This processing is carried out by the correction processor 60 for each of the red print head 30a, green print head 30b and blue print head 30c.

The correction processor 60 outputs the correction image 2a shown in Fig. 4(a), for example (Step S71).

Then when the correction image 2a outputted in the processing of Step S71 has been scanned by the flat bed scanner 70, and the image information gained by this scanning operation has been inputted (Step S72), the correction processor 60 identifies the position of each recording element on the correction image 2a, from this inputted image information, based on the image information related to the marker step of the correction image 2a. In this case, the correction image 2a has two densities as shown in Fig. 4(a).

After that, the correction processor 60 acquires the density corresponding to each density state and each recording element, and works out the average density value of each density step for each recording element, wherein this average density value is used as the density of each recording element (Step S74). Then the average density value D is obtained by further averaging the average density values for density steps calculated above (Step S75).

Then the correction processor 60 performs calculation of the light amount correction coefficient and change of amount of exposure, in parallel (Step S76).

The following describes the calculation of light amount correction coefficient:

The correction processor 60 makes comparison between the aforementioned average density value D and the density corresponding to each recording element (Step S77), and calculates the light amount correction coefficient for each recording element (Step S78).

The following describes the updating of the amount of exposure:

The correction processor 60 calculates the log (S) corresponding to the average density value D, based on the straight line of the inclination ($\gamma$) of the characteristic curve of the photosensitive material as shown in Fig. 32 (Step S79). Further, the correction processor 60 calculates the amount of change $\Delta E$ in the amount of exposure E, from the log (SO) corresponding to the target density $D_o$ prepared in advance, according to the mathematical expression, $\Delta E$ = log (S) - log (SO) (Step S80).

Then the correction processor 60 adds the aforementioned correction $\Delta E$ to the currently set amount of exposure E to update the information on the amount of exposure (i. e. E + $\Delta E \rightarrow E_o$) (Step S81).

The correction processor 60 verifies that calculation of light amount correction coefficient and updating of the amount of exposure have been completed (Step S82), and terminates this processing.

According to the result of Experiment 4, precision in correction of unevenness of density and setup has been improved.

(Experiment 5)

Experiment 5 will be described: In Experiment 5, based on the image recorded in a plurality of areas of the correction image 2a, correction of unevenness of density and setup were started from the same level of deteriorated state with respect to unevenness of density and color balance, in the following three cases:

<1> densities were approximately the same;
<2> densities were different; and
<3> densities were based on a method other than that of the present invention.

The number of corrections, required before correction of unevenness of density and setup were completed, was compared in terms of the number of outputted images.

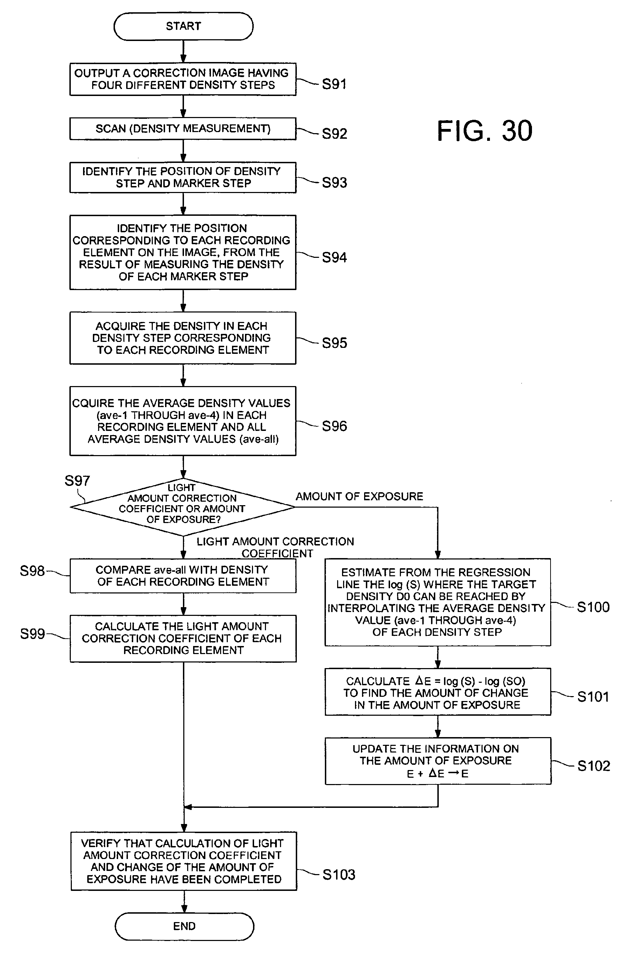

In this case, correction of unevenness of density and setup were carried out by the correction processor 60 according to the flowchart of Fig. 30.

The following describes the processing to be applied according to the flowchart of Fig. 30. This processing is performed by the correction processor 60 for each of the red print head 30a, green print head 30b and blue print head 30c.

When 8-bit image information is inputted for each of the red, green and blue colors, the print head controller 40 converts the input image information into the 12-bit output image information according to the output value conversion table LUT including the information on the amount of exposure (Steps S1 and S2 in Fig. 24). As shown in Fig. 32, the output value conversion table LUT table shows that correlation between the input and output values is non-linear.

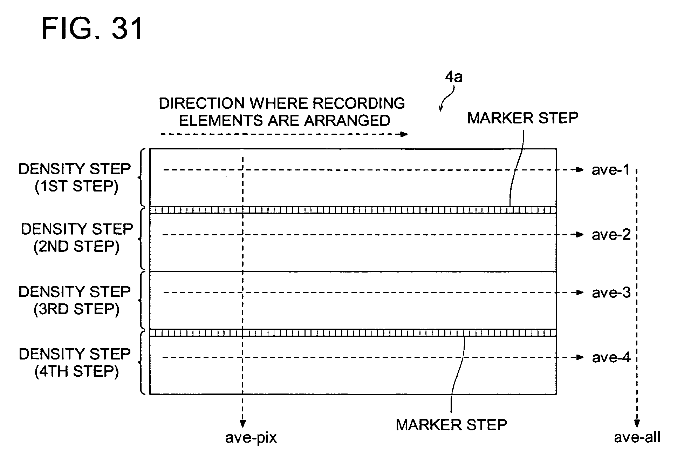

Based on the aforementioned 12-bit output image information, the correction processor 60 outputs the correction image 2a with four density steps of Fig. 31 recorded thereon. (Step S91). Densities in these four density steps are assumed to be mutually different.

Then when the correction image 2a outputted in the processing of Step S91 has been scanned by the flat bed scanner 70, and the image information gained by this scanning operation has been inputted (Step S92), the correction processor 60 identifies the position of each recording element (i) on the correction image 2a, from this inputted image information, based on the image information related to the marker step of the correction image 2a (Steps S93 and S94).

After that, the correction processor 60 acquires the density corresponding to each recording element (i) (Step S95), and works out the average density value D in each density step (Fig. 31) of the correction image 2a (ave-1 through ave-4) and average value of all densities (ave-all) (Step S96).

In this case, ave-1 is the value obtained by averaging the density corresponding to each recording element (i) in the first stage (Fig. 31) of the density step of the correction image 2a. This also applies to ave-1 through ave-4.

Then the correction processor 60 performs calculation of the light amount correction coefficient and change of amount of exposure, in parallel (Step S97).

The following describes the calculation of light amount correction coefficient:

The correction processor 60 calculates the average value ave-pix (i) in four density step for each recording element (i). It then calculates light amount correction coefficient of each recording element (i), based on the ave-all and ave-pix (i) (Steps S98 and S99).

The following describes the updating of the amount of exposure:

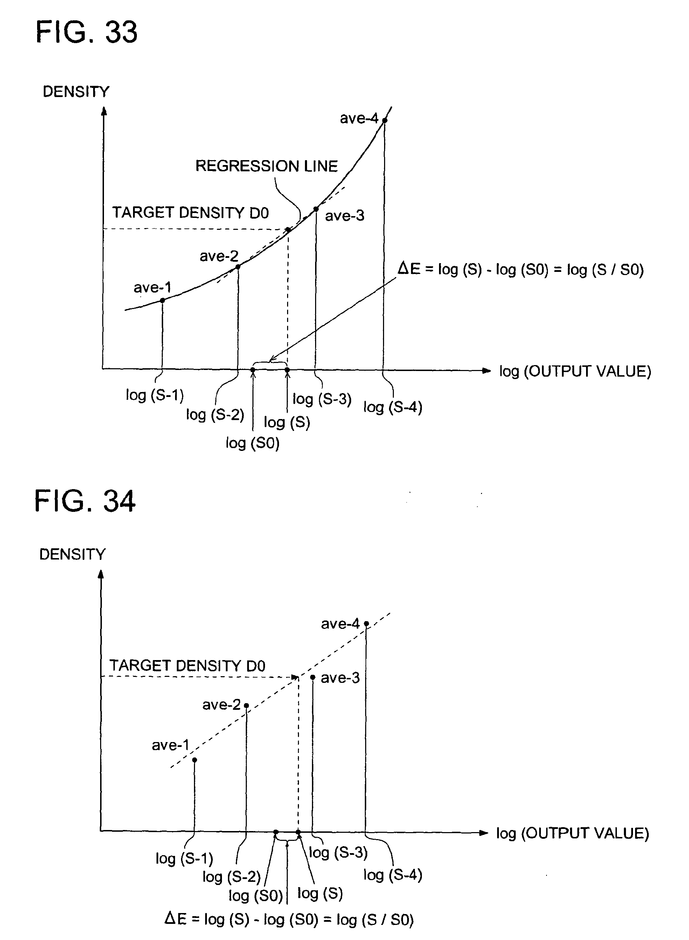

As shown in Fig. 33, the correction processor 60 holds the target density $D_0$ in-between out of ave-1 through ave-4, and identifies two average density values closest to the $D_0$. For example, in the example shown in Fig. 33, the correction processor 60 holds the $D_0$ in-between and identifies ave-2 and ave-3 as two average density values closest

to the $D_0$.

In this case, "log (output value)" on the horizontal axis of the graph given in Fig. 33 is a logarithmic expression of the output value of the output image information converted by the output conversion table LUT. The "density" on the vertical scale is the density information of the output image.

The correction processor 60 estimate from the regression line the log (S) where the target density $D_0$ can be realized by interpolating the aforementioned ave-2 and ave-3 (Step S100). In this case, S-1 through S-4 and S shown in Fig. 33 are the output value of the image information such that each density of ave-1 through ave-4 and $D_0$ is realized, with respect to this regression line.

After Step S100, the correction processor 60 calculates the amount of change ΔE in the amount of exposure, based on the log (SO) as a logarithm of the output value S0 of the currently set image information and the aforementioned log (S), according to the mathematical expression, ΔE = log (S) - log (SO) (Step S101).

Then the correction processor 60 adds the aforementioned correction ΔE to the currently set amount of exposure E to update the information on the amount of exposure (i. e. E + ΔE → $E_o$) (Step S102).

The correction processor 60 verifies that calculation of light amount correction coefficient and change of the amount of exposure have been completed (Step S103), and terminates this processing.

In the aforementioned description of the flowchart of Fig. 30, the LUT was non-linear as shown in Fig. 32. In this case, as shown in Fig. 33, the characteristics of "log (S) density information" were also assumed to be non-linear. It should be noted, however, that the present invention is not restricted thereto. It is possible to make such arrangements as a special case that the LUT is linear and the characteristics of "log (S) density information" is linear, as shown in Fig. 34.

In such a case, the correction processor 60 estimates from the regression line the log (S) where the target density Do can be realized by interpolating the aforementioned ave-1 and ave-4 (Step S100), as shown in Fig. 34. The processing after Step S101 is the same as the above description.

Four density steps are mentioned in the above description, but any number of density steps may be used.

According to the result of Experiment 5, four sheets were used in the case of <1>, two in the case of <2> and twelve in the case of <3>. To put it another way, use of two images of different densities cuts down the time required for correction of unevenness of density and setup.

(Experiment 6)

Experiment 6 will be described: Experiment 6 was conducted when the development paper 2 with correction image 2a recorded thereon was set as it was pressed against the read portion (not illustrated) of the flat bed scanner 70 by a pushing member such as rubber. This arrangement improves correction of the edge, and prevents paper from getting loose and bent, with the result that the unevenness of density of low-frequency components can be reduced.

(Experiment 7)

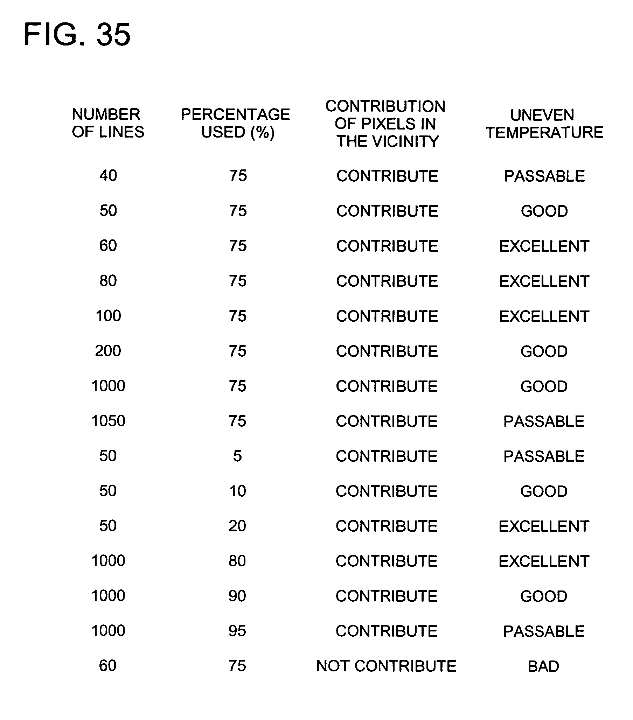

Experiment 7 will be described: In Experiment 7, unevenness of density were evaluated based on the following evaluation standard. The result is given in Fig. 35. As shown in Fig. 35, the unevenness of density could be reduced when the width of the development paper 2 for recording the correction image 2a was 10 through 1000. Especially when the width of the development paper 2 was increased 10% or more, the correction image 2a could be reduced in size. This is preferred from the viewpoint of reducing calculation time and paper loss.

The following describes the evaluation standard for evaluating the unevenness of density shown in Fig. 35. "Excellent" indicates that the image exhibits extremely good quality completely free of any unevenness of density. "Good" shows that the image exhibited very good quality despite slight unevenness of density of high-frequency component partially observable. "Passable" denotes that the image exhibits good quality despite unevenness of density of high-frequency component slightly observable. "Bad" indicates that the image exhibits poor quality with unevenness of density observable. "Very bad" means that the image exhibits deteriorated quality with unevenness of density clearly observable.

(Experiment 8)

Experiment 8 will be described: In Experiment 8, the photosensitive material of the development paper 2 with correction image 2a recorded thereon was used as a silver halide photosensitive material. This arrangement has enhanced the effects of the present invention.

(Experiment 9)

Experiment 9 will be described: The photosensitive material of the development paper 2 with correction image 2a recorded thereon used in Experiment 9 was provided with a reflection support. This arrangement has upgraded the effects of the present invention.

As described above, the image forming apparatus 10 as a third embodiment allows correction of unevenness of density and setup to be carried out in parallel.

Thus, the aforementioned embodiment provides an image forming apparatus and image forming method capable of quick and accurate implementation of the preparatory work of correction of the unevenness of density and setup, prior to the start of full-scale operations.

The description of the aforementioned third embodiment shows a specific example of the image forming apparatus and image recording method according to the present invention, without being restricted thereto. The detailed configuration and operation of the image forming apparatus 10 of the present embodiment can be changed as appropriate, without departing from the spirit of the present invention.

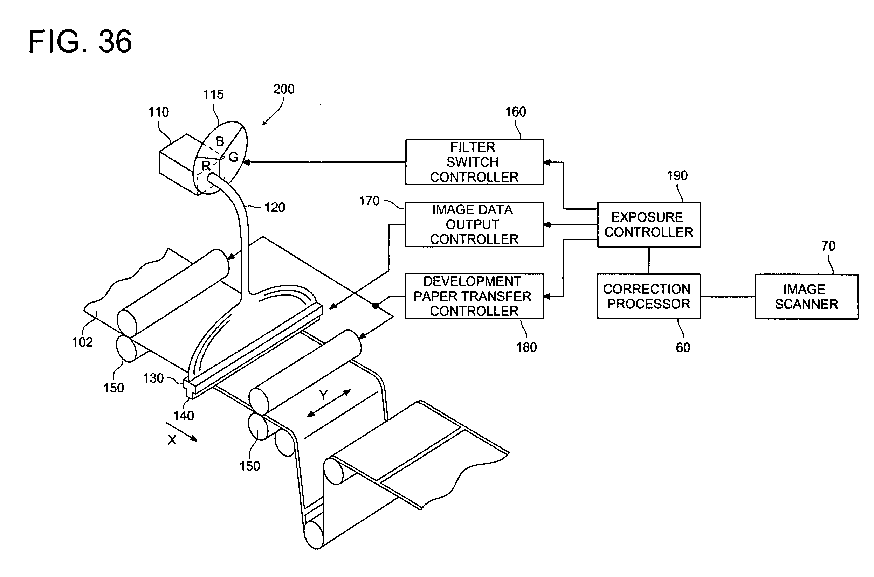

Referring to Fig. 36, the following describes the schematic configuration of an image forming apparatus 200 adopting a PLZT shutter array printer head, as an example of a print head for recording on a recording material using a common print head by switching between the beams of light of multiple wavelengths such as multiple fundamental colors.

The image forming apparatus 200 consists of a white color light source 110, color filter 115, optical fiber array 120, PLZT shutter array 130, SELFOC lens 140, transfer means 150, filter switch controller 160, image data output controller 170, development paper transfer controller 180, exposure controller 190, correction processor 60, image reading device 70, etc.

As shown in Fig. 36, the light having passed through the rotary type color filter 115 from the white color light source 110 is led to the PLZT shutter array 130 after passing through the optical fiber array 120, and is exposed at a predetermined position of the development paper 102. Exposure is carried out on the development paper 102 transferred in the arrow-marked X direction by the transfer means 150 connected to and driven by a drive source (not illustrated).

The color filter 115 is designed in a disk-like form, and red (Red), green (G) and blue (B) colors are arranged at the positions divided into three equal parts each at an angle of 120 degrees. The central shaft of this disk is linked with the drive source (not illustrated). The RGB filters are arranged along the light path on a selective basis by the rotation of the color filter 115.

The light of each of the RGB colors having passed through the color filter 115 is led to the PLZT shutter array 130 by the optical fiber array 120.

The PLZT shutter array 130 comprises multiple PLZT devices arranged in a one-row array in the direction (arrow-marked Y direction in Fig. 36) orthogonal to the direction (arrow-marked X direction in Fig. 36) where the development paper 102 is fed. The PLZT devices are arranged at intervals corresponding to the pixels. Exposure is performed while light is passing through the PLZT devices. The exposure time is controlled in response to the image data, and gradation is represented. For example, when lower density is to be represented, exposure time is reduced.

The light having passed through the PLZT shutter array 130 forms an image on the development paper 102 by the SELFOC lens 140.

The filter switch controller 160 rotates the color filter 115 in response to the image data of the in each of the exposure colors RGB, so that the color of light to be exposed is switched sequentially.

The image data output controller 170 changes the voltage applied to the PLZT shutter array 130, in response to the image data in each of the exposure colors RGB, thereby controlling exposure time. The development paper transfer controller 180 controls the transfer means 150.

Based on the amount of correction calculated by the correction processor 60, the exposure controller 190 updates the light amount correction coefficient. Based on the aforementioned updated light amount correction coefficient, it provides synchronous control of the filter switch controller 160, image data output controller 170 and development paper transfer controller 180 in response to the image data. In the manner described above, exposure is performed at a predetermined position of the development paper 102 sequentially for each color, and latent color image is formed on the development paper 102. Upon completion of the exposure process, the development paper 102 is transferred to the development process that follows.

The image forming apparatus 200 is different from the image forming apparatus 10 in the configuration of the portion where exposure is performed, but is the same in the method of calculating the amount of correction by the correction processor 60 and the method of acquiring the readout information by the image reading device 70. So the description of the image forming apparatus 200 will be omitted.

The image forming apparatus 200 was used to conduct the same experiments as those in the aforementioned first, second and third embodiments. It has been confirmed that the results are the same as those obtained from the aforementioned experiments.

According to the present invention, the following effects can be attained.

(1) Since the influence of unevenness of density of other color are contained in the readout information of each fundamental color read out of the correction image, unevenness of density, especially unevenness of density of low-frequency component, can be reduced with high efficiency.

(2) Edges are formed by fundamental colors at the same time, the possibility of evaluation error is reduced, and evaluation of stable edges is ensured.

(3) A correction image can be reduced in size as compared to the case of creating a correction image for each fundamental color. At the time of correction, the scanning range can be reduced, with the result that the time of calculation for correction is shortened. Moreover, a reduced paper loss and improved productivity are ensured.

(4) It is possible to reduce the influence of the sub-absorption formed by the color developing dye of the photosensitive material so as to avoid extremely high density with respect to other colors. It is also possible to remove the influence of color turbidity, with the result that the readout information acquired becomes more accurate and high-precision correction can be performed.

(5) The influence of unevenness of density of other colors can be removed by conducting the color conversion, even if unevenness of density of other colors are very poor. This allows accurate high-precision correction to be realized. Further, unevenness of density can be avoided by fewer corrections, even if unevenness of density have occurred.

(6) The influence of unevenness of density of other colors can be removed by a relatively simple method, and quick and high-precision correction can be achieved.

(7) Correction accuracy is further improved because the color balances of fundamental colors are matched, without influence of other colors.

(8) Correction precision is improved because it is possible to reduce the variation of the readout information caused by the difference in the structure of images recorded on the photosensitive material by each print head.

(9) Correction precision is improved by accurate evaluation of the image edge. Further, the unevenness of density of low-frequency components can be reduced by preventing the correction image from becoming loose.

(10) The number of data items can be ensured and the average of the readout information data items can be stabilized by increasing the number of lines to 50 or more, whereby unevenness of density at high-frequency component can be reduced. If the number of data items is increased too much, the average of the readout information data will converge. Thus, the number of lines is kept below 1,000, thereby reducing the unused portion and calculation time.

(11) Ten percent or more of the recorded number of lines are used for getting readout information, whereby the size of the correction image can be reduced and hence miniaturization of the image reading device can be achieved.

(12) Unevenness of density are effectively reduced by use of a silver halide photosensitive material as a photosensitive material.

(13) Unevenness of density is effectively reduced because the photosensitive material has a reflective substrate layer, serving as a reflection support.

(14) As compared with the case of correction made using the high-density or low-density portion, correction precision can be improved because of the use of the portion with the gradation characteristics exhibiting a shift to hard gradation, i.e. the portion characterized by greater changes in image density than that in the amount of light.

(15) The position-determining markers are used to determine the corresponding recording element. This enables an accurate feedback to each recording element by the amount of correction obtained from the readout information obtained.

(16) The recording elements of the print head with respect to the correction image and the light receiving devices of the image receiving head are arranged in the same direction. Thus, the scanning range of the image reading device can be reduced by using a longer correction image in the direction where recording elements are arranged. Further, this improves the tolerance for the inclination of the correction image, and reduces the correction time, thereby ensuring high-precision correction of the variation of the recording element in a short time and effective reduction of unevenness of density.

(17) Rotation processing applied to the readout information, permits accurate identification of the readout information corresponding to each recording element and ensures improved high-precision correction of unevenness of density.

(18) The inclination of the correction image is evaluated using the inclination determining marker recorded on the correction image, thereby ensuring easy determination of the angle for rotation processing and improved high-precision correction of unevenness of density.

(19) Accuracy of feedback to the recording elements of the print head is improved by reducing the variation of the light receiving sensitivity of each light receiving device; hence unevenness of density of high-frequency components are reduced.

(20) The light receiving device can be calibrated in the same manner as when scanning the portion used for the calculation of correction. This allows correction of the variation of the recording elements of the print head, based on the identification of variations of the light receiving device, whereby high-precision correction is ensured. Further, the light receiving device can be calibrated by a shared use of the image reading device, without having to use another light measuring unit. This arrangement provides easy calibration.

(21) The fluctuation of the density resulting from the variation in the amount of exposure of the recording element can be reduced because calibration of each light receiving device is carried out using the non-linear portion of the characteristic curve of the photosensitive material, i.e. the portion exhibiting a shift to soft gradation. This improves the high-precision calibration of variations of the light receiving devices.

(22) Simple and high-precision correction is ensured because calibration is carried out using the non-exposed part of correction image.

(23) The amount of correction for the recording characteristics of each recording element is obtained based on the data selected from a plurality of readout information items obtained from the correction image, whereby faulty data resulting from the dust, soil and contamination of the photosensitive material can be eliminated. This arrangement improves the tolerance to the faulty data that may cause deterioration of correction precision and brings about excellent results of high-precision correction and reduced unevenness of density.

(24) Since the reference for selecting the readout information is made clear, excellent results of high-precision correction can be obtained easily, and unevenness of density can be reduced.

(25) Since 95% or less of a plurality of readout information sets (hereinafter, also referred to as readout information items) are used, there is an increase in the percentage of excluded data. This ensures improved tolerance to the faulty data resulting in deteriorated correction precision. Thus, excellent results of high-precision correction can be obtained, and unevenness of density can be reduced.

(26) High-precision correction is ensured by correction calculation using the readout information with fewer variations.

(27) Since the correcting operation based on the exposure-amount information and the other correcting operation based on the light amount correction coefficient can be conducted in parallel with each other, it becomes possible to provide image-forming apparatus and methods, which make it possible to accurately conduct preparatory operations in a short time before full operations such as those correcting operations.

Disclosed embodiment can be varied by a skilled person without departing from the spirit and scope of the invention.

**Claims**

1. A method for forming an image by employing a print head in which a plurality of recording elements are arranged in an array line, comprising the steps of:

   recording a correction image onto a photosensitive material by means of said print head;
   acquiring readout information read from said correction image by means of an image-reading device;
   finding correction amounts of recording characteristics, each of which corresponds to each of said plurality of recording elements, from said readout information acquired in said acquiring step; and
   forming said image by employing said print head in which said recording characteristics of said plurality of recording elements are compensated for, according to said correction amounts found in said finding step;

   wherein said correction image includes such an image area in which at least two different color dyes are mixed with each other.

2. The method of claim 1,
   wherein said print head is capable of emitting plural lights or includes plural element heads for emitting plural lights; and
   wherein said correction image includes such an image that is recorded on said photosensitive material by irradiating said plural lights onto a same place of said photosensitive material in an overlapped state.

3. The method of claim 1 or 2,
   wherein said correction image includes said image area in which at least two of a yellow color dye, a magenta color dye and a cyan color dye are mixed with each other.

**4.** The method of claim 1 or 2,
   wherein said correction image includes said image area in which Red-density Rd, Green-density Gd and Blue-density Bd fulfill the following relationship.

$$0.3 \leq Rd \leq 1.5, \ 0.2 \leq Gd \leq 1.5 \text{ and } 0.15 \leq Bd \leq 1.5$$

**5.** The method of claim 1, 2, 3 or 4,
   wherein said correction amounts are found by applying a color conversion processing to said readout information acquired by reading said correction image in said acquiring step.

**6.** The method of claim 5,
   wherein, when said readout information, acquired in said acquiring step, represent integrated densities, analyzed densities are derived from said integrated densities in said color conversion processing.

**7.** The method of claim 5,
   wherein a linear-converting equation is employed for said color conversion processing.

**8.** The method of any of claims 1 to 7,
   wherein said correction image is recorded onto said photosensitive material after a setup operation for color balance is completed.

**9.** The method of any of claims 1 to 8,
   wherein said print head is capable of emitting plural lights or includes plural element heads for emitting plural lights; and
   wherein an image area, which is included in said correction image and from which said readout information are acquired, is constituted by plural images recorded by irradiating said plural lights onto said photosensitive material in a state that said plural images overlap with each other.

**10.** The method of any of claims 1 to 9,
   wherein said photosensitive material, on which said correction image is recorded, is fixed onto said image-reading device by means of a pushing member.

**11.** The method of any of claims 1 to 10,
   wherein a nominal number of recorded lines to be recorded onto said correction image is in a range of 50-1000.

**12.** The method of claim 11,
   wherein an actual number of recorded lines utilized for acquiring said readout information is more than 10% of said nominal number of recorded lines.

**13.** The method of any of claims 1 to 1 2,
   wherein said photosensitive material is a silver-halide photosensitive material.

**14.** The method of any of claims 1 to 13,
   wherein said photosensitive material has a reflective substrate layer.

**15.** The method of any of claims 1 to 14,
   wherein density of said correction image is set at a point on a liner region of characteristic curve of said photosensitive material.

**16.** The method of any of claims 1 to 15,
   wherein said correction image includes position-determining markers, each corresponding to each position of said plurality of recording elements, so as to recognize each of said plurality of recording elements.

**17.** An apparatus for forming an image, comprising:

   a print head in which a plurality of recording elements are arranged in an array line, said print head being utilized for recording a correction image onto a photosensitive material;

an image-reading device to acquire readout information by reading said correction image;

a correction amount finding section to find correction amounts of recording characteristics, each of which corresponds to each of said plurality of recording elements, from said readout information acquired by said image-reading device;

an image forming section to form said image by employing said print head in which said recording characteristics of said plurality of recording elements are compensated for, according to said correction amounts found by said correction amount finding section; and

a controlling section to control said print head so as to records said correction image onto said photosensitive material;

wherein said correction image includes such an image area in which at least two different color dyes are mixed with each other.

18. The apparatus of claim 17,
wherein said print head is capable of emitting plural lights or includes plural element heads for emitting plural lights; and

wherein said correction image includes such an image that is recorded on said photosensitive material by irradiating said plural lights onto a same place of said photosensitive material in an overlapped state.

19. The apparatus of claim 17 or 18,
wherein said correction image includes said image area in which at least two of a yellow color dye, a magenta color dye and a cyan color dye are mixed with each other.

20. The apparatus of claim 17, 18 or 19,
wherein said correction image includes said image area in which Red-density Rd, Green-density Gd and Blue-density Bd fulfill the following relationship.

$$0.3 \leq Rd \leq 1.5, \ 0.2 \leq Gd \leq 1.5 \text{ and } 0.15 \leq Bd \leq 1.5$$

21. A method for forming an image by employing a print head in which a plurality of recording elements are arranged in a first array line, comprising the steps of:

recording a correction image onto a photosensitive material by means of said print head;

acquiring readout information read from said correction image by an image-receiving head in which a plurality of photo-receiving elements are arranged in a second array line and which is equipped in an image-reading device;

finding correction amounts of recording characteristics, each of which corresponds to each of said plurality of recording elements, from said readout information acquired in said acquiring step; and

forming said image by employing said print head in which said recording characteristics of said plurality of recording elements are compensated for, according to said correction amounts found in said finding step;

wherein a direction of said first array line coincides with that of said second array line.

22. The method of claim 21,
wherein a calibrating operation is applied to each of said plurality of photo-receiving elements.

23. The method of claim 22,
wherein a part of said correction image is employed for said calibrating operation.

24. The method of claim 23,
wherein density of a calibration image employed for said calibrating operation is set at a point on a non-liner region of characteristic curve of said photosensitive material.

25. The method of claim 23,
wherein a non-exposed part of said correction image is employed for said calibrating operation.

**26.** A method for forming an image by employing a print head in which a plurality of recording elements are arranged in an array line, comprising the steps of:

recording a correction image onto a photosensitive material by means of said print head;

acquiring readout information read from said correction image by an image-receiving head in which a plurality of photo-receiving elements are arranged in an array line and which is equipped in an image-reading device;

finding correction amounts of recording characteristics, each of which corresponds to each of said plurality of recording elements, from said readout information acquired in said acquiring step; and

forming said image by employing said print head in which said recording characteristics of said plurality of recording elements are compensated for, according to said correction amounts found in said finding step;

wherein said readout information are specified corresponding to each of said plurality of recording elements by applying a rotation processing to said readout information.

**27.** The method of claim 26,

wherein said correction image includes an inclination-determining marker; and

wherein said inclination-determining marker is employed for determining an inclination of said correction image so as to apply said rotation processing to said readout information.

**28.** A method for forming an image by employing a print head in which a plurality of recording elements are arranged in an array line, comprising the steps of:

recording a correction image with a plurality of recoded lines recoded by said print head onto a photosensitive material moving relative to said plurality of recording elements;

acquiring a plurality of readout information sets, each corresponding to each of said plurality of recording elements, read from said correction image by means of an image-reading device;

finding correction amounts of recording characteristics, each of which corresponds to each of said plurality of recording elements, from said plurality of readout information sets; and

forming said image by employing said print head in which said recording characteristics of said plurality of recording elements are compensated for, according to said correction amounts found in said finding step;

wherein a selection processing is applied to said plurality of readout information sets, so that said correction amounts of said recording characteristics are found, based on selected readout information sets.

**29.** The method of claim 28,

wherein said selection processing is conducted, based on a scale of said plurality of readout information sets.

**30.** The method of claim 29,

wherein said selection processing employs less than 95% of said plurality of readout information sets.

**31.** The method of claim 28, 29 or 30,

wherein said selection processing repeats to extract a maximum value and/or a minimum value of said plurality of readout information sets until $3\sigma$ reaches to a value equal to or smaller than $0.1\mu$, where "$\sigma$" and "$\mu$" are defined as a standard deviation and an average value of said selected readout information sets, respectively.

**32.** The method of claim 28, 29,30 or 31,

wherein said photosensitive material, on which said correction image is recorded, is fixed onto said image-reading device by means of a pushing member.

**33.** The method of any of claims 28 to 32,

wherein a nominal number of said recorded lines to be recorded onto said correction image is in a range of 50-1000.

**34.** The method of claim 33,

wherein an actual number of said recorded lines utilized for acquiring said readout information is more than 10% of said nominal number of said recorded lines.

**35.** The method of any of claims 28 to 34,

wherein said photosensitive material is a silver-halide photosensitive material.

36. The method of any of claims 28 to 35,
    wherein said photosensitive material has a reflective substrate layer.

37. An apparatus for forming an image, comprising:

    a print head in which a plurality of recording elements are arranged in a first array line, said print head being utilized for recording a correction image onto a photosensitive material;
    an image-reading device provided with an image-receiving head in which a plurality of photo-receiving elements are arranged in a second array line, said image-receiving head being utilized for reading said correction image printed by said print head, so as to acquire readout information;
    a correction amount finding section to find correction amounts of recording characteristics, each of which corresponds to each of said plurality of recording elements, from said readout information acquired by said image-reading device; and

    wherein a direction of said first array line coincides with that of said second array line.

38. An apparatus for forming an image, comprising:

    a print head in which a plurality of recording elements are arranged in an array line, said print head being utilized for recording a correction image onto a photosensitive material;
    an image-reading device provided with an image-receiving head in which a plurality of photo-receiving elements are arranged in an array line, said image-receiving head being utilized for reading said correction image printed by said print head, so as to acquire readout information;
    a correction amount finding section to find correction amounts of recording characteristics, each of which corresponds to each of said plurality of recording elements, from said readout information acquired by said image-reading device; and

    wherein said correction amount finding section applies a rotation processing to said readout information so as to specify said readout information corresponding to each of said plurality of recording elements.

39. An apparatus for forming an image, comprising:

    a print head in which a plurality of recording elements are arranged in an array line, said print head being utilized for recording a correction image constituted with a plurality of recoded lines onto a photosensitive material;
    an image-reading device to acquire a plurality of readout information sets, each corresponding to each of said plurality of recording elements, by reading said correction image; and
    a correction amount finding section to find correction amounts of recording characteristics, each corresponding to each of said plurality of recording elements, from said plurality of readout information sets;

    wherein said correction amount finding section applies a selection processing to said plurality of readout information sets, so that said correction amounts of said recording characteristics are found, based on selected readout information sets.

40. An apparatus for forming an image, comprising:

    a print head in which a plurality of recording elements are arranged in an array line, each of said plurality of recording elements being individually operated in response to each of a plurality of light-amount correction coefficients, and said print head being utilized for recording a correction image onto a photosensitive material;
    an image-reading device to acquire readout information by reading said correction image recorded on said photosensitive material by said print head; and
    a correction-processing section to find correction amounts of recording characteristics, each corresponding to each of said plurality of recording elements, from said readout information by controlling said print head and said image-reading device, in order to revise each of said plurality of light-amount correction coefficients according to each of said correction amounts of said recording characteristics;

wherein said image is formed by operating said plurality of recording elements included in said print head, based on said plurality of light-amount correction coefficients revised by said correction-processing section; and

wherein exposure-amount information are acquired, based on said readout information acquired from said correction image.

41. The apparatus of claim 40,

wherein a statistic in regard to said readout information is calculated, so as to acquire said exposure-amount information by employing said statistic.

42. The apparatus of claim 40 or 41 ,

wherein said light-amount correction coefficients or said exposure-amount information is employed for recording said image onto said photosensitive material, independently relative to each other.

43. The apparatus of claim 40, 41 or 42,

wherein a value, indicated by said readout information acquired from said correction image, is set at a point on a liner region of characteristic curve of said photosensitive material.

44. The apparatus of claim 40, 41, 42 or 43,

wherein a plurality of correction images are recorded onto a plurality of recording regions whose locations are different relative to each other, and then, a plurality of readout information sets are acquired from said plurality of correction images, so that said exposure-amount information are acquired, based on each of said plurality of readout information sets.

45. The apparatus of claim 44,

wherein densities of said plurality of correction images are different relative to each other.

46. The apparatus of any of claims 40 to 45,

wherein said image-reading device is provided with a pushing member for fixing said photosensitive material, on which said correction image is recorded, onto said image-reading device.

47. The apparatus of any of claims 40 to 46,

wherein said photosensitive material is a silver-halide photosensitive material.

48. The apparatus of any of claims 40 to 47,

wherein said photosensitive material has a reflective substrate layer.

49. The apparatus of any of claims 40 to 48,

wherein a nominal number of recorded lines to be recorded onto said correction image is in a range of 50-1000.

50. The apparatus of claim 49,

wherein an actual number of recorded lines utilized for acquiring said readout information is more than 10% of said nominal number of recorded lines.

51. The apparatus of claim 49 or 50,

wherein said light-amount correction coefficients is adjusted according to said correction amounts of said recording characteristics, while an output-value conversion LUT is adjusted according to said exposure-amount information, where "LUT" stands for "Look Up Table".

52. A method for forming an image by employing a print head in which a plurality of recording elements are arranged in an array line, each of said plurality of recording elements being individually operated in response to each of a plurality of light-amount correction coefficients, said method comprising the steps of:

recording a correction image onto a photosensitive material by means of said print head;

acquiring readout information read from said correction image by means of an image-reading device;

finding correction amounts of recording characteristics, each of which corresponds to each of said plurality of recording elements, from said readout information acquired in said acquiring step;

revising each of said plurality of light-amount correction coefficients according to each of said correction amounts found in said finding step; and

forming said image by operating said plurality of recording elements included in said print head, based on said plurality of light-amount correction coefficients revised in said revising step;

wherein exposure-amount information are acquired, based on said readout information acquired from said correction image.

# FIG. 1

IMAGE DATA

10

40

PRINT HEAD
CONTROLLER

70

30a 30b 30c

CORRECTION
PROCESSOR

IMAGE-
READING
APPARATUS
OR FLAT BED
SCANNER

2

60

1

TO DEVELOPMENT PROCESS

# FIG. 2 (a)

1    2    3    4    5    6   ...

DIRECTION WHERE
RECORDING ELEMENTS
ARE ARRANGED

# FIG. 2 (b)

1    3    5    7   ...

2    4    6   ...

DIRECTION WHERE
RECORDING ELEMENTS
ARE ARRANGED

# FIG. 2 (c)

1     5     9 ...

2     6

3     7

4     8

DIRECTION WHERE
RECORDING ELEMENTS
ARE ARRANGED

# FIG. 3

30 (30a, 30b, 30c)

PRINT HEAD

31

| SHIFT REGISTER |

IMAGE BIT DATA

32

| LATCH CIRCUIT |

SET PULSE SIGNAL

33

| DRIVER CIRCUIT |

ENABLE SIGNAL

DRIVE SIGNAL

34

| RECORDING ELEMENT ARRAY |

35

| SELFOC LENS ARRAY |

2

40

| PRINT HEAD CONTROLLER |

8-BIT IMAGE DATA

AMOUNT OF CORRECTION

60

| CORRECTION PROCESSOR |

DENSITY DATA

70

| IMAGE-READING APPARATUS OR FLAT BED SCANNER |

# FIG. 4 (a)

2a

MARKER STEP

DIRECTION WHERE RECORDING
ELEMENTS ARE ARRANGED

E

RGB (CMY)
DENSITY
MEASURING
POSITION

RGB (CMY)
DENSITY
MEASURING
POSITION

# FIG. 4 (b)

2a

DIRECTION WHERE RECORDING
ELEMENTS ARE ARRANGED

DENSITY MEASURING
POSITION

MARKER STEP FOR
IDENTIFYING THE RECORDING
ELEMENT OF R(C) HEAD

MARKER STEP FOR
IDENTIFYING THE RECORDING
ELEMENT OF G(M) HEAD

MARKER STEP FOR
IDENTIFYING THE RECORDING
ELEMENT OF B(Y) HEAD

DENSITY MEASURING
POSITION

FIG. 5 ( a )

POSITIONING MARKER

IMAGE NUMBER    i - 4  i - 3  i - 2  i - 1    i    i + 1   i + 2  i + 3  i + 4

CORRECTION
IMAGE

300dpi

FIG. 5 ( b )

MEASURED
DENSITY DATA

600dpi

POSITION OF
POSITIONING MARKER

# FIG. 6

```
        ┌─────────────┐
        │    START    │
        └─────────────┘
               │
               ▼
┌──────────────────────────────┐
│  OUTPUT THE CORRECTION IMAGE  │ ──── SA1
└──────────────────────────────┘
               │
               ▼
┌──────────────────────────────┐
│   SCAN (MEASURE THE DENSITY)  │ ──── SA2
└──────────────────────────────┘
               │
               ▼
┌──────────────────────────────┐
│  DETERMINE IMAGE INCLINATION  │ ──── SA3
└──────────────────────────────┘
               │
               ▼
┌──────────────────────────────┐
│      IDENTIFY DENSITY DATA    │
│      CORRESPONDING TO EACH    │ ──── SA4
│       RECORDING ELEMENT       │
└──────────────────────────────┘
               │
               ▼
┌──────────────────────────────┐
│      CALCULATE THE AVERAGE    │ ──── SA5
│         DENSITY DATA          │
└──────────────────────────────┘
               │
               ▼
┌──────────────────────────────┐
│  COMPARE BETWEEN AVERAGE VALUE│
│   AND DENSITY DATA OF EACH    │ ──── SA6
│       RECORDING ELEMENT       │
└──────────────────────────────┘
               │
               ▼
┌──────────────────────────────┐
│     CALCULATE THE AMOUNT OF   │
│       CORRECTION OF EACH      │ ──── SA7
│       RECORDING ELEMENT       │
└──────────────────────────────┘
               │
               ▼
        ┌─────────────┐
        │     END     │
        └─────────────┘
```

# FIG. 7

2a

DIRECTION WHERE RECORDING
ELEMENTS ARE ARRANGED

R(C)
DENSITY MEASURING
POSITION

G(M)
DENSITY MEASURING
POSITION

B(Y)
DENSITY MEASURING
POSITION

# FIG. 8

EXAMPLE 1

|  | UNEVENNESS OF DENSITY (LOW-FREQUENCY COMPONENT IN PARTICULAR) | UNEVENNESS OF DENSITY OF EDGE |
|---|---|---|
| <1> RGB SINGLE-COLOR CHART | BAD | VERY BAD |
| <2> GRAY CHART | EXCELLENT | EXCELLENT |

# FIG. 9

EXAMPLE 2

|  | NUMBER OF CORRECTIONS | UNEVENNESS OF DENSITY |
|---|---|---|
| <1> COLOR CHANGED | THREE TIMES | EXCELLENT |
| <2> COLOR UNCHANGED | FIVE TIMES | GOOD |
| <3> RGB SINGLE-COLOR CHART | NO IMPROVEMENT IN UNEVENNESS OF DENSITY. EXPERIMENT DISCONTINUED AFTER NINE CORRECTIONS | BAD |

# FIG. 10

EXPERIMENT 5

| NUMBER OF LINES | USAGE RATE (%) | NUMBER OF CORRECTIONS | UNEVENNESS OF DENSITY |
|---|---|---|---|
| 40 | 75 | 7 | PASSABLE |
| 50 | 75 | 4 | GOOD |
| 60 | 75 | 3 | EXCELLENT |
| 80 | 75 | 3 | EXCELLENT |
| 100 | 75 | 3 | EXCELLENT |
| 200 | 75 | 4 | GOOD |
| 1000 | 75 | 5 | GOOD |
| 1050 | 75 | 7 | PASSABLE |
| 50 | 5 | 7 | PASSABLE |
| 50 | 10 | 5 | GOOD |
| 50 | 20 | 3 | EXCELLENT |
| 1000 | 80 | 3 | EXCELLENT |
| 1000 | 90 | 4 | GOOD |
| 1000 | 95 | 6 | PASSABLE |

# FIG. 11

# FIG. 12

EXPERIMENT 6

|  | UNEVENNESS OF DENSITY |
|---|---|
| <1> LOW DENSITY CHART | GOOD |
| <2> INTERMEDIATE DENSITY CHART | EXCELLENT |
| <3> HIGH DENSITY CHART | PASSABLE |

# FIG. 13

EXPERIMENT 7

| R | G | B | NUMBER OF CORRECTIONS | UNEVENNESS OF DENSITY |
|---|---|---|---|---|
| 0.20 | 0.45 | 0.45 | 7 | PASSABLE |
| 0.30 | 0.45 | 0.45 | 5 | GOOD |
| 0.40 | 0.45 | 0.45 | 4 | GOOD |
| 0.50 | 0.45 | 0.45 | 3 | EXCELLENT |
| 0.60 | 0.45 | 0.45 | 3 | EXCELLENT |
| 0.70 | 0.45 | 0.45 | 3 | EXCELLENT |
| 1.00 | 0.45 | 0.45 | 4 | GOOD |
| 1.50 | 0.45 | 0.45 | 5 | GOOD |
| 1.60 | 0.45 | 0.45 | 7 | PASSABLE |
| 0.65 | 0.10 | 0.45 | 7 | PASSABLE |
| 0.65 | 0.20 | 0.45 | 5 | GOOD |
| 0.65 | 0.30 | 0.45 | 4 | GOOD |
| 0.65 | 0.40 | 0.45 | 3 | EXCELLENT |
| 0.65 | 0.50 | 0.45 | 3 | EXCELLENT |
| 0.65 | 0.60 | 0.45 | 3 | EXCELLENT |
| 0.65 | 0.80 | 0.45 | 4 | GOOD |
| 0.65 | 1.50 | 0.45 | 5 | GOOD |
| 0.65 | 1.60 | 0.45 | 7 | PASSABLE |
| 0.65 | 0.45 | 0.10 | 7 | PASSABLE |
| 0.65 | 0.45 | 0.15 | 5 | GOOD |
| 0.65 | 0.45 | 0.30 | 4 | GOOD |
| 0.65 | 0.45 | 0.40 | 3 | EXCELLENT |
| 0.65 | 0.45 | 0.50 | 3 | EXCELLENT |
| 0.65 | 0.45 | 0.60 | 3 | EXCELLENT |
| 0.65 | 0.45 | 1.00 | 4 | GOOD |
| 0.65 | 0.45 | 1.50 | 5 | GOOD |
| 0.65 | 0.45 | 1.60 | 7 | PASSABLE |

**EP 1 463 296 A2**

## FIG. 14

**65**

# FIG. 15 (a)

3

DIRECTION WHERE RECORDING
ELEMENTS ARE ARRANGED

5a

4a

4b

4c

4d

5a

6a

6a

# FIG. 15 (b)

DIRECTION WHERE RECORDING
ELEMENTS ARE ARRANGED

4a

MARKER STEP FOR
IDENTIFYING THE RECORDING
ELEMENT OF R(C) HEAD

MARKER STEP FOR
IDENTIFYING THE RECORDING
ELEMENT OF G(M) HEAD

6a

MARKER STEP FOR
IDENTIFYING THE RECORDING
ELEMENT OF B(Y) HEAD

4b

# FIG. 16

```
                  ┌─────────────┐
                  │    START    │
                  └─────────────┘
                         │
                         ▼
        ┌────────────────────────────────┐
        │  OUTPUT THE CORRECTION IMAGE    │ ─── SB1
        └────────────────────────────────┘
                         │
                         ▼
        ┌────────────────────────────────┐
        │  ACQUIRE THE IMAGE INFORMATION  │ ─── SB2
        └────────────────────────────────┘
                         │
                         ▼
        ┌────────────────────────────────┐
        │       CALIBRATE THE CCDS        │ ─── SB3
        └────────────────────────────────┘
                         │
                         ▼
        ┌────────────────────────────────┐
        │   DETERMINE IMAGE INCLINATION   │ ─── SB4
        └────────────────────────────────┘
                         │
                         ▼
        ┌────────────────────────────────┐
        │     PROCESS IMAGE ROTATION      │ ─── SB5
        └────────────────────────────────┘
                         │
                         ▼
        ┌────────────────────────────────┐
        │    IDENTIFY THE DENSITY DATA    │
        │     CORRESPONDING TO EACH       │ ─── SB6
        │       RECORDING ELEMENT         │
        └────────────────────────────────┘
                         │
                         ▼
        ┌────────────────────────────────┐
        │   CALCULATE THE AVERAGE VALUE   │
        │        OF DENSITY DATA          │ ─── SB7
        └────────────────────────────────┘
                         │
                         ▼
        ┌────────────────────────────────┐
        │  COMPARE BETWEEN THE AVERAGE    │
        │  DATA AND DENSITY DATA OF EACH  │ ─── SB8
        │       RECORDING ELEMENT         │
        └────────────────────────────────┘
                         │
                         ▼
        ┌────────────────────────────────┐
        │    CALCULATE THE AMOUNT OF      │
        │      CORRECTION OF EACH         │ ─── SB9
        │       RECORDING ELEMENT         │
        └────────────────────────────────┘
                         │
                         ▼
                  ┌─────────────┐
                  │     END     │
                  └─────────────┘
```

## FIG. 17 ( a )

## FIG. 17 ( b )

# FIG. 18

EXPERIMENT 1

|  | SET DIRECTION | ANGLE | CORRECTION TIME | VISUAL EVALUATION | $3\sigma R / \mu R$ (%) |
|---|---|---|---|---|---|
| <1> | VERTICAL | - | 100 | VERY BAD | 19.64 |
| <2> | HORIZONTAL | 0 | 55 | GOOD | 1.75 |
| <3> | HORIZONTAL | 1 | 56 | GOOD | 1.94 |
| <4> | HORIZONTAL | 5 | 59 | GOOD | 3.31 |
| <5> | HORIZONTAL | 10 | 61 | PASSABLE | 6.65 |
| <6> | HORIZONTAL | 11 | 84 | BAD | 10.69 |

# FIG. 19

EXPERIMENT 2

|  | CCD CALIBRATION | VISUAL EVALUATION |
|---|---|---|
| <1> | CALIBRATED | EXCELLENT |
| <2> | NOT CALIBRATED | GOOD |

# FIG. 20

EXPERIMENT 3

|  | SET DIRECTION | IMAGE DENSITY FOR CCD CALIBRATION | VISUAL EVALUATION | $3\sigma R / \mu R$ (%) |
|---|---|---|---|---|
| <1> | HORIZONTAL | LOW DENSITY (NON-LINEAR SECTION) | EXCELLENT | 0.49 |
| <2> | HORIZONTAL | INTERMEDIATE DENSITY (LINEAR SECTION) | GOOD | 1.63 |
| <3> | HORIZONTAL | HIGH DENSITY (NON-LINEAR SECTION) | EXCELLENT | 0.88 |
| <4> | VERTICAL | INTERMEDIATE DENSITY (LINEAR SECTION) | VERY BAD | 18.24 |

# FIG. 21

EXPERIMENT 4

| | DATA USAGE RATE (%) | VISUAL EVALUATION | $3\sigma G / \mu G$ (%) |
|---|---|---|---|
| <1> | 100 | VERY BAD | 20.07 |
| <2> | 96 | PASSABLE | 9.13 |
| <3> | 95 | GOOD | 4:41 |
| <4> | 90 | EXCELLENT | 6.16 |
| <5> | 80 | EXCELLENT | 2.25 |
| <6> | 30 | EXCELLENT | 1.17 |
| <7> | 20 | EXCELLENT | 2.19 |
| <8> | 10 | GOOD | 4.24 |
| <9> | 9 | PASSABLE | 8.18 |

# FIG. 22

EXPERIMENT 5

| | $3\sigma$ VALUE | VISUAL EVALUATION | $3\sigma B / \mu B$ (%) |
|---|---|---|---|
| <1> | $0.11\mu$ | PASSABLE | 13.89 |
| <2> | $0.1\mu$ | GOOD | 5.76 |
| <3> | $0.05\mu$ | EXCELLENT | 3.02 |
| <4> | $0.01\mu$ | EXCELLENT | 1.56 |
| <5> | - | VERY BAD | 29.23 |

# FIG. 23

EXPERIMENT 6

| | SET DIRECTION | ANGLE | PROCESSING OF ROTATION | VISUAL EVALUATION | $3\sigma B / \mu B$ (%) |
|---|---|---|---|---|---|
| <1> | VERTICAL | - | NOT APPLIED | VERY BAD | 29.97 |
| <2> | HORIZONTAL | 4.8 | APPLIED | EXCELLENT | 2.78 |
| <3> | HORIZONTAL | 4.8 | NOT APPLIED | GOOD | 5.88 |
| <4> | HORIZONTAL | 9.5 | APPLIED | EXCELLENT | 2.79 |
| <5> | HORIZONTAL | 9.5 | NOT APPLIED | PASSABLE | 13.35 |

# FIG. 24

START

- INPUT THE 8-bit IMAGE INFORMATION
- REFLECT THE INFORMATION ON AMOUNT OF EXPOSURE IN THE OUTPUT VALUE CONVERSION TABLE LUT — S1

CONVERT THE INPUT IMAGE INFORMATION INTO OUTPUT IMAGE INFORMATION (12-bit) BASED ON THE OUTPUT CONVERSION TABLE LUT — S2

CORRECT ACCORDING TO LIGHT AMOUNT CORRECTION COEFFICIENT — S3

SEND LIGHT AMOUNT CORRECTION COEFFICIENT TO THE PRINT HEAD — S4

RECORD ON THE PHOTOSENSITIVE MATERIAL — S5

APPLY DEVELOPMENT PROCESSING — S6

COMPLETE DEVELOPMENT — S7

END

**FIG. 25**

START

CORRECTION IMAGE OUTPUT — S11

SCAN (DENSITY MEASUREMENT) — S12

IDENTIFY THE POSITION CORRESPONDING TO EACH RECORDING ELEMENT ON THE IMAGE FROM THE RESULT OF DENSITY MEASUREMENT OF THE MARKER STEP — S13

ACQUIRE THE DENSITY CORRESPONDING TO EACH RECORDING ELEMENT — S14

CALCULATE THE AVERAGE DENSITY VALUE D — S15

S16 — LIGHT AMOUNT CORRECTION COEFFICIENT OR AMOUNT OF EXPOSURE?

AMOUNT OF LIGHT

LIGHT AMOUNT CORRECTION COEFFICIENT

S17 — COMPARE THE AVERAGE VALUE D WITH THE DENSITY CORRESPONDING TO EACH RECORDING ELEMENT

CALCULATE THE log (S) CORRESPONDING TO AVERAGE DENSITY VALUE D — S19

S18 — CALCULATE THE LIGHT AMOUNT CORRECTION COEFFICIENT OF EACH RECORDING ELEMENT

CALCULATE $\Delta E = \log (S) - \log (SO)$ TO FIND THE AMOUNT OF CHANGE IN THE AMOUNT OF EXPOSURE — S20

UPDATE THE INFORMATION ON THE AMOUNT OF EXPOSURE $E + \Delta E \rightarrow E$ — S21

VERIFY THAT CALCULATION OF LIGHT AMOUNT CORRECTION COEFFICIENT AND CHANGE OF THE AMOUNT OF EXPOSURE HAVE BEEN COMPLETED — S22

END

# FIG. 26 (a)

START

CORRECTION IMAGE OUTPUT — S31

SCAN (DENSITY MEASUREMENT) — S32

IDENTIFY THE POSITION CORRESPONDING TO EACH RECORDING ELEMENT ON THE IMAGE FROM THE RESULT OF DENSITY MEASUREMENT OF THE MARKER STEP — S33

ACQUIRE THE DENSITY CORRESPONDING TO EACH RECORDING ELEMENT — S34

CALCULATE THE AVERAGE DENSITY VALUE D — S35

COMPARE THE AVERAGE VALUE D WITH THE DENSITY CORRESPONDING TO EACH RECORDING ELEMENT — S36

CALCULATE THE LIGHT AMOUNT CORRECTION COEFFICIENT OF EACH RECORDING ELEMENT — S37

END

# FIG. 26 (b)

START

CORRECTION IMAGE OUTPUT — S41

MEASURE THE DENSITY OF THE CORRECTION IMAGE AND CALCULATE THE AVERAGE DENSITY VALUE D — S41

CALCULATE THE log (S) CORRESPONDING TO AVERAGE DENSITY VALUE D — S43

CALCULATE $\Delta E = \log (S) - \log (SO)$ TO FIND THE AMOUNT OF CHANGE IN THE AMOUNT OF EXPOSURE — S44

UPDATE THE INFORMATION ON THE AMOUNT OF EXPOSURE $E + \Delta E \rightarrow E$ — S45

END

# FIG. 27

DENSITY

STRAIGHT LINE OF INCLINATION
($\gamma$) OF THE CHARACTERISTIC
CURVE OF PHOTOSENSITIVE MATERIAL

TARGET DENSITY D0

OUTPUT IMAGE
MEASURING DENSITY
D (AVERAGE
DENSITY
VALUE D)

log (OUTPUT VALUE)

log (S)    log (S0)

$\Delta E = \log (S) - \log (S0) = \log (S / S0)$

FIG. 28

START

CORRECTION IMAGE OUTPUT — S51

SCAN (DENSITY MEASUREMENT) — S52

IDENTIFY THE POSITION CORRESPONDING TO EACH RECORDING ELEMENT ON THE IMAGE FROM THE RESULT OF DENSITY MEASUREMENT OF THE MARKER STEP — S53

ACQUIRE THE DENSITY CORRESPONDING TO EACH RECORDING ELEMENT — S54

CALCULATE THE AVERAGE DENSITY VALUE D — S55

S56 — LIGHT AMOUNT CORRECTION COEFFICIENT OR AMOUNT OF EXPOSURE?

AMOUNT OF EXPOSURE

LIGHT AMOUNT CORRECTION COEFFICIENT

S59 — OMPARE THE AVERAGE VALUE D WITH THE DENSITY CORRESPONDING TO EACH RECORDING ELEMENT

CALCULATE THE log (S) CORRESPONDING TO AVERAGE DENSITY VALUE D — S57

S60 — ALCULATE THE AMOUNT OF CORRECTION IN RECORDING CHARACTERISTICS OF EACH RECORDING ELEMENT

CALCULATE S0/S — S58

ACH LIGHT AMOUNT CORRECTION COEFFICIENT CORRESPONDING TO EACH RECORDING ELEMENT IS MULTIPLIED BY THE AMOUNT OF CORRECTION OF THE RECORDING CHARACTERISTICS CORRESPONDING TO RECORDING ELEMENT AND THE SO/S AS THE AMOUNT COMMON TO EACH RECORDING ELEMENT, WHEREBY A NEW LIGHT AMOUNT CORRECTION COEFFICIENT IS CALCULATED — S61

END

# FIG. 29

START

CORRECTION IMAGE OUTPUT — S71

SCAN (DENSITY MEASUREMENT) — S72

IDENTIFY THE POSITION CORRESPONDING TO EACH RECORDING ELEMENT ON THE IMAGE FROM THE RESULT OF DENSITY MEASUREMENT OF THE MARKER STEP — S73

ACQUIRE THE DENSITIES OF TWO DENSITY STAGES CORRESPONDING TO EACH RECORDING ELEMENT, AND, AND FIND OUT THE AVERAGE VALUE OF TWO STAGES SO THAT IT IS USED AS THE DENSITY CORRESPONDING TO EACH RECORDING ELEMENT — S74

CALCULATE THE AVERAGE VALUE D OF THE DENSITIES CORRESPONDING TO ALL RECORDING ELEMENTS — S75

S76 LIGHT AMOUNT CORRECTION COEFFICIENT OR AMOUNT OF EXPOSURE?

AMOUNT OF EXPOSURE

LIGHT AMOUNT CORRECTION COEFFICIENT

S77 — COMPARE THE AVERAGE VALUE D WITH THE DENSITY CORRESPONDING TO EACH RECORDING ELEMENT

CALCULATE THE log (S) CORRESPONDING TO AVERAGE DENSITY VALUE D — S79

S78 — CALCULATE THE LIGHT AMOUNT CORRECTION COEFFICIENT OF EACH RECORDING ELEMENT

CALCULATE $\Delta E$ = log (S) - log (SO) TO FIND THE AMOUNT OF CHANGE IN THE AMOUNT OF EXPOSURE — S80

UPDATE THE INFORMATION ON THE AMOUNT OF EXPOSURE $E + \Delta E \rightarrow E$ — S81

VERIFY THAT CALCULATION OF LIGHT AMOUNT CORRECTION COEFFICIENT AND CHANGE OF THE AMOUNT OF EXPOSURE HAVE BEEN COMPLETED — S82

END

FIG. 30

START

OUTPUT A CORRECTION IMAGE HAVING FOUR DIFFERENT DENSITY STEPS — S91

SCAN (DENSITY MEASUREMENT) — S92

IDENTIFY THE POSITION OF DENSITY STEP AND MARKER STEP — S93

IDENTIFY THE POSITION CORRESPONDING TO EACH RECORDING ELEMENT ON THE IMAGE, FROM THE RESULT OF MEASURING THE DENSITY OF EACH MARKER STEP — S94

ACQUIRE THE DENSITY IN EACH DENSITY STEP CORRESPONDING TO EACH RECORDING ELEMENT — S95

CQUIRE THE AVERAGE DENSITY VALUES (ave-1 THROUGH ave-4) IN EACH RECORDING ELEMENT AND ALL AVERAGE DENSITY VALUES (ave-all) — S96

S97 LIGHT AMOUNT CORRECTION COEFFICIENT OR AMOUNT OF EXPOSURE?

AMOUNT OF EXPOSURE

LIGHT AMOUNT CORRECTION COEFFICIENT

S98 — COMPARE ave-all WITH DENSITY OF EACH RECORDING ELEMENT

S99 — CALCULATE THE LIGHT AMOUNT CORRECTION COEFFICIENT OF EACH RECORDING ELEMENT

ESTIMATE FROM THE REGRESSION LINE THE log (S) WHERE THE TARGET DENSITY D0 CAN BE REACHED BY INTERPOLATING THE AVERAGE DENSITY VALUE (ave-1 THROUGH ave-4) OF EACH DENSITY STEP — S100

CALCULATE $\Delta E = \log(S) - \log(SO)$ TO FIND THE AMOUNT OF CHANGE IN THE AMOUNT OF EXPOSURE — S101

UPDATE THE INFORMATION ON THE AMOUNT OF EXPOSURE $E + \Delta E \rightarrow E$ — S102

VERIFY THAT CALCULATION OF LIGHT AMOUNT CORRECTION COEFFICIENT AND CHANGE OF THE AMOUNT OF EXPOSURE HAVE BEEN COMPLETED — S103

END

77

# FIG. 31

# FIG. 32

OUTPUT VALUE

4096

0        255  INPUT VALUE

FIG. 33

DENSITY

REGRESSION LINE

TARGET DENSITY D0

ave-4

ave-3

ave-2

ave-1

$\Delta E = \log (S) - \log (S0) = \log (S / S0)$

log (OUTPUT VALUE)

log (S-1)

log (S-2)

log (S-3)

log (S)

log (S-4)

log (S0)

FIG. 34

DENSITY

TARGET DENSITY D0

ave-4

ave-3

ave-2

ave-1

log (OUTPUT VALUE)

log (S-1)

log (S-2)

log (S-3)

log (S0)

log (S)

log (S-4)

$\Delta E = \log (S) - \log (S0) = \log (S / S0)$

# FIG. 35

| NUMBER OF LINES | PERCENTAGE USED (%) | CONTRIBUTION OF PIXELS IN THE VICINITY | UNEVEN TEMPERATURE |
|---|---|---|---|
| 40 | 75 | CONTRIBUTE | PASSABLE |
| 50 | 75 | CONTRIBUTE | GOOD |
| 60 | 75 | CONTRIBUTE | EXCELLENT |
| 80 | 75 | CONTRIBUTE | EXCELLENT |
| 100 | 75 | CONTRIBUTE | EXCELLENT |
| 200 | 75 | CONTRIBUTE | GOOD |
| 1000 | 75 | CONTRIBUTE | GOOD |
| 1050 | 75 | CONTRIBUTE | PASSABLE |
| 50 | 5 | CONTRIBUTE | PASSABLE |
| 50 | 10 | CONTRIBUTE | GOOD |
| 50 | 20 | CONTRIBUTE | EXCELLENT |
| 1000 | 80 | CONTRIBUTE | EXCELLENT |
| 1000 | 90 | CONTRIBUTE | GOOD |
| 1000 | 95 | CONTRIBUTE | PASSABLE |
| 60 | 75 | NOT CONTRIBUTE | BAD |

# FIG. 36

EP 1 463 296 A2